# EUROPÄISCHE PATENTSCHRIFT

(11) **EP 2 291 278 B1**
(45) Veröffentlichungstag und Bekanntmachung des Hinweises auf die Patenterteilung: **05.09.2012**
(21) Anmeldenummer: 09765527.8
(22) Anmeldetag: 30.05.2009
(51) Int. Cl.: B29C 47/40, B29C 47/64, B29B 7/48

(54) **VERFAHREN ZUR EXTRUSION PLASTISCHER MASSEN**
METHOD FOR EXTRUDING PLASTIC MASSES
PROCÉDÉ D'EXTRUSION DE MASSES PLASTIQUES

(30) Priorität: 20.06.2008 DE 102008029306
(43) Veröffentlichungstag der Anmeldung: 09.03.2011
(73) Patentinhaber: Bayer MaterialScience AG, 51368 Leverkusen (DE)
(72) Erfinder: KÖNIG, Thomas, 51375 Leverkusen (DE); BIERDEL, Michael, 51373 Leverkusen (DE); CONZEN, Carsten, 51373 Leverkusen (DE); LIESENFELDER, Ulrich, 51469 Bergisch Gladbach (DE); KOHLGRÜBER, Klemens, 51515 Kürten (DE); RUDOLF, Reiner, 51373 Leverkusen (DE); RECHNER, Johann, 47906 Kerpen (DE)
(86) Internationale Anmeldenummer: PCT/EP2009/003889
(87) Internationale Veröffentlichungsnummer: WO 2009/152947

(56) Entgegenhaltungen:
- WO-A1-02/076707
- WO-A2-02/09919

## Beschreibung

Die Erfindung betrifft ein Verfahren zur Extrusion plastischer Massen Das Verfahren betrifft insbesondere das Fördern, Kneten und / oder Mischen von plastischen Massen, insbesondere von Polymerschmelzen und Mischungen von Polymerschmelzen, vor allem Thermoplasten und Elastomeren, besonders bevorzugt Polycarbonat und Polycarbonat-Blends, auch unter Einmischung anderer Stoffe wie z.B. Feststoffe, Flüssigkeiten, Gase oder andere Polymere oder andere Polymermischungen. Das Dokument WO0209919A2 offenbart schneckenelemente zur Verarbeitung von thermoplastischen materialien gemäβ dem Oberbegriff des Anspruches 1.

Die Extrusion von plastischen Massen spielt insbesondere bei der Herstellung, Aufbereitung und Verarbeitung von Polymeren eine große Rolle. Unter Extrusion wird hier und im Folgenden die Behandlung eines Stoffes oder Stoffgemisches in einem gleichsinnig drehenden Doppelschnecken- oder Mehrwellenextruder, wie er umfassend in [1] beschrieben ist, verstanden ([1] *=* Kohlgrüber. Der gleichläufige Doppelschneckenextruder, Hanser Verlag München 2007).

In dieser Anmeldung umfasst die Terminologie Mehrwellenextrudern auch beispielsweise einen Ringextruder oder einen Doppelschneckenextruder.

Gleichsinnig drehende Zwei- oder ggf. Mehrwellenmaschinen, deren Rotoren sich gegenseitig exakt abschaben, sind bereits seit langem bekannt (siehe z.B. DE 862 668). In der Polymerherstellung und Polymerverarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in der Veröffentlichung [1] auf den Seiten 96 - 109 dargestellt. Hier ist auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt.

Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen.

Wie der Fachmann weiß und wie es zum Beispiel in [11] auf den Seiten 96-109 nachzulesen ist, ist das bekannte dicht kämmende, selbstreinigende, gleichsinnig drehende Schneckenprofil nach dem Stand der Technik, im Weiteren nach dem Haupterfinder als Erdmenger-Schneckenprofil bezeichnet, durch die Angabe der drei Größen Gangzahl z, Schneckenaußenradius ra und Achsabstand a eindeutig definiert. Die Gangzahl z ist eine ganze Zahl, die größer oder gleich 1 ist. Eine weitere wichtige Kenngröße eines Schneckenprofils ist der Kemradius ri. Eine weitere wichtige Kenngröße eines Schneckenprofils ist die Gangtiefe h.

Die Bereiche eines Schneckenprofils, die gleich dem Schneckenaußenradius sind, werden als Kammbereiche bezeichnet. Die Bereiche eines Schneckenprofils, die gleich dem Kernradius sind, werden als Nutbereiche bezeichnet. Die Bereiche eines Schneckenprofils, die kleiner als der Schneckenaußenradius und größer als der Kernradius sind, werden als Flankenbereiche bezeichnet. Der Bereich eines Mehrwellenextruders, in dem sich zwei Gehäusebohrungen durchdringen, wird als Zwickelbereich bezeichnet. Die beiden Schnittpunkte von zwei Gehäusebohrungen werden als Gehäusezwickel bezeichnet.

Der Kammwinkel δ_kw eines z-gängigen Erdmenger-Schneckenprofils berechnet sich zu δ_kw=π/z-2*arccos(0,5*a/ra), wobei unter π die Kreiszahl (π≈3,14159) zu verstehen ist [1]. Aus der Formel zur Berechnung des Kammwinkels folgt, dass sich die Kammwinkel eines 1-gängigen und eines 2-gängigen Erdmenger-Schneckenprofils bei gleichem Achsabstand und bei gleichem Schneckenaußenradius um π/2 unterscheiden. Ist der Gehäuseradius rg gleich dem Außenradius ra, so berechnet sich der Öffnungswinkel δ_gz zwischen den beiden Gehäusezwickeln zu δ_gz=2*arccos(0,5*a/ra). Für eingängige Erdmenger-Schneckenprofile folgt daraus, dass der Zwickelbereich für ein Verhältnis von Schneckenaußenradius zu Achsabstand kleiner als etwa 0,707 durch den Kammbereich des Schneckenprofils abgedichtet ist.

Die Gehäusebereiche in der Umgebung der beiden Gehäusezwickel werden als Gehäusezwickelbereich bezeichnet. Im Rahmen der folgenden Ausführungen umfasst dieser Bereich in jeder Gehäusebohrung ausgehend von jedem der beiden Gehäusezwickel einen Winkel δ_gb bezogen auf den Mittelpunkt der Gehäusebohrungen, der sich aus der Differenz des Kammwinkels eines eingängigen Erdmenger-Schneckenprofils minus des Öffnungswinkels zwischen den beiden Gehäusezwickeln berechnet: δ_gb=π-4*arccos(0,5*a/ra).

Ferner werden in [1] der Aufbau, die Funktion und der Betrieb von Zwei- und Mehrwellenextrudem ausführlich erläutert. Ein eigenes Kapitel (Seiten 227 - 248) ist den Schneckenelementen und ihrer Wirkungsweise gewidmet. Hier werden der Aufbau und die Funktion von Förder-, Knet- und Mischelementen detailliert erläutert. Um den Übergang zwischen Schneckenelementen unterschiedlicher Gangzahl zu ermöglichen, werden häufig Unterlegscheiben als Distanzhülse eingesetzt. In Sonderfällen werden sogenannte Übergangselemente eingesetzt, die einen kontinuierlichen Übergang zwischen zwei Schneckenprofilen unterschiedlicher Gangzahl ermöglichen, wobei an jedem Punkt des Übergangs ein sich selbst reinigendes Paar von Schneckenprofilen vorliegt.

Unter einer plastischen Masse wird hier und im Folgenden eine verformbare Masse verstanden. Beispiele für plastische Massen sind Polymerschmelzen, vor allem Thermoplasten und Elastomeren, besonders bevorzugt Polycarbonat und Polycarbonat-Blends" Mischungen von Polymerschmelzen oder Dispersionen von Polymerschmelzen mit Feststoffen, Flüssigkeiten oder Gasen.

Bei der Herstellung von Polymeren erfolgt eine Extrusion z.B. zur Entgasung der Polymere (siehe z.B. [1] Seiten 191 bis 212).

Bei der Aufbereitung von Polymeren erfolgt eine Extrusion z.B. zur Einmischung von Zusatzstoffen (siehe z.B. [1] Seiten 59 bis 93). Dieses auch als Compoundierung bezeichnete Verfahren dient der Polymeraufbereitung zur Herstellung der fertigen Kunststoff-Formmasse (das Compound) unter Einsatz der Kunststoffrohstoffe unter Zugabe von Füll- und/oder Verstärkungsstoffen, Weichmachern, Haftvermittlern, Gleitmitteln, Stabilisatoren etc.

Die Behandlung plastischer Massen während einer Extrusion umfasst eine oder mehrere der Verfahrensoperationen Fördern, Aufschmelzen, Dispergieren, Mischen, Entgasen und Druckaufbau.

Bei der Aufbereitung von Polymeren werden durch Extrusion vor allem Mischungen von Polymeren mit Additiven und Zuschlag- und Verstärkungsstoffen sowie Farben sowie Mischungen von verschiedenen Polymeren, die sich z.B. in chemischer Zusammensetzung, Molekulargewicht oder Molekülstruktur unterscheiden, hergestellt (siehe z.B. [1], S. 59 bis 93). Dieses auch als Compoundierung bezeichnete Verfahren dient der Polymeraufbereitung zur Herstellung der fertigen Kunststoff-Formmasse (das Compound) unter Einsatz der Kunststoffrohstoffe, die üblicherweise aufgeschmolzen werden, unter Zugabe und Mischen von Füll- und/oder Verstärkungsstoffen, Weichmachern, Haftvermittlern, Gleitmitteln, Stabilisatoren etc mit dem Polymer. Die Aufbereitung umfasst häufig auch die Entfernung von flüchtigen Bestandteilen wie z.B. Luft und Wasser. Die Aufbereitung kann auch eine chemische Reaktion wie z.B. Pfropfung, Modifikation von funktionellen Gruppen oder Modifikationen des Molekulargewichtes durch gezielten Auf- oder Abbau des Molekulargewichts.

Wie allgemein bekannt und z.B. in [1] auf den Seiten 169 bis 190 beschrieben lässt sich Mischen in distributives und dispersives Mischen einteilen. Unter distributivem Mischen wird das gleichmäßige Verteilen von verschiedenen Komponenten in einem betrachteten Volumen verstanden. Distributives Mischen liegt zum Beispiel bei der Vermischung gleichartiger Polymere vor. Beim dispersiven Mischen werden Feststoffteilchen, Flüssigkeitstropfen oder Gasblasen zunächst zerteilt. Für das Zerteilen müssen ausreichend große Scherkräfte aufgebracht werden, um zum Beispiel die Oberflächenspannung an der Grenzfläche zwischen Polymerschmelze und einem Additiv zu überwinden. Unter Mischen wird im Folgenden immer distributives und dispersives Mischen verstanden.

In der Veröffentlichung [1] auf Seite 73ff wird die Schmelzeförderung und der Druckaufbau beschrieben. Die Schmelzeförderzonen dienen dazu, das Produkt von einer Verfahrenszone zur nächsten zu transportieren sowie Füllstoffe einzuziehen. Schmelzeförderzonen sind in der Regel teilgefüllt, wie z.B. beim Transport des Produktes von einer zur nächsten Verfahrenszone, beim Entgasen und in Verweilzeitzonen. Vor Druckverbrauchern wie z.B. Extruderdüsen, Rückförderelementen, Mischelementen und Schmelzefiltern entsteht eine Rückstauzone, in der vollgefüllt gefördert wird und in der der Druck zum Überwinden des Druckverbrauchers aufgebaut werden muss. Die in die Polymerschmelze eingebrachte Energie spaltet sich auf in Nutzleistung zum Fördern der Schmelze und in Dissipationsleistung, die sich nachteilig in einer Temperaturerhöhung der Schmelze bemerkbar macht. In den Schmelzeförderzonen sollte daher möglichst wenig Energie dissipiert werden. Für die reine Schmelzeförderung sind Gewindeelemente mit Gangsteigungen von einmal dem Extruderinnendurchmesser (1 D) üblich [1].

Bei der Verarbeitung von Polymeren werden die Polymere bevorzugt in die Form eines Halbzeuges, eines gebrauchsfertigen Produktes oder eines Bauteiles gebracht. Die Verarbeitung kann z.B. durch Spritzgießen, Extrusion, Folienblasen, Folienziehen oder Verspinnen erzeugen. Die Verarbeitung kann auch Mischungen von Polymeren mit Füll- und Zuschlagstoffen und Additiven sowie chemische Modifikationen wie z.B. Vulkanisation umfassen.

Extrusion von Polymeren werden, wie dem Fachmann bekannt ist, vorteilhaft auf Schneckenmaschinen mit zwei oder ggf. mehr Wellen durchgeführt.

Druckaufbauzonen befinden sich im Extruder in der Austragszone vor der Düsenplatte und/oder dem Schmelzefilter und vor jedem druckverbrauchenden, so genannten abstauenden Schneckenelement, wie z.B. Mischelementen oder rückfördernden oder förderneutralen Knetblöcken. In den Druckaufbauzonen muss der erforderliche Druck zur Überwindung der abstauenden Elemente aufgebaut werden. In der Austragszone muss der von der Düsenplatte, dem Werkzeug sowie evtl. nachgeschalteten Aggregaten wie z.B. Filtern verbrauchte Druck erzeugt werden. In der Druckaufbauzone erfolgt eine starke Rückströmung der Schmelze über die Schneckenkämme und dadurch ein erhöhter Energieeintrag [1].

Dem Fachmann ist bekannt, dass im Bereich der Schneckenkämme besonders viel Energie in der Schmelze dissipiert wird, was lokal zu starken Überhitzungen im Produkt führt. Dies ist beispielsweise in [1] auf den Seiten 160ff dargestellt. Diese lokalen Überhitzungen können zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen. Vor allem ein großer Kammwinkel ist hierbei schädlich.

Dem Fachmann ist ebenfalls bekannt [1], dass bei Verwendung konventioneller Schneckenelemente der erforderliche Druck im voll gefüllten Zustand im größten Teil des Betriebsbereich des gleichläufigen Doppelschneckenextruders im Fall von eingängigen Förderelementen mit weniger Energieeintrag und kleinerer Rückstaulänge aufgebaut werden kann als im Fall von zweigängigen Elementen.

Es ist jedoch zu beachten, dass eingängige Förderelemente stärker zur Pulsation neigen, d.h. sie können Durchsatzschwankungen z.B. aufgrund schwankender Dosierung kaum dämpfen. Grund dafür ist, dass bei eingängigen Förderelementen nur ein Produktstrom vorliegt im Vergleich zu drei Produktströmen bei zweigängigen Elementen. Dosierschwankungen können deshalb schneller zu Durchsatzschwankungen am Extruderaustritt führen als bei zwei- oder dreigängigen Förderelementen. Da nur ein Produktstrom vorliegt, ist die Mischwirkung von eingängigen Elementen gegenüber zwei- oder dreigängigen Förderelementen ebenfalls schlechter.

Dem Fachmann ist weiterhin bekannt, dass die bekannten eingängigen Schneckenelemente einen sehr hohen Energieeintrag in teilgefüllten Zonen haben, bedingt durch deren breiten Kamm. Dies ist der Qualität des Produktes abträglich. Die bekannten eingängigen Elemente werden deshalb selten verwendet.

Dem Fachmann ist bekannt, dass direkt abschabende Schneckenprofile nicht direkt in einen Doppelschneckenextruder eingesetzt werden können, vielmehr sind Spiele zwischen den Schneckenelementen und dem Gehäuse und / oder zwischen den Schneckenelementen selbst erforderlich. Die Geometriedaten für die ausgeführten Schneckengeometrien verschafft sich der Fachmann auf Grundlage der Kontur exakt abschabender Schnecken mit bekannten Methoden, wie sie z.B. in [1] dargestellt sind. Für Förderelemente sind in [1] auf den Seiten 28 ff verschiedene mögliche Strategien beschrieben. Bei Verwendung der dort angegebenen Längsschnitt- oder Raumäquidistante reduzieren sich die Kammwinkel *KWA0* der tatsächlich ausgeführten Schnecken, wie z.B. in [1], S. 100 dargestellt ist, gegenüber dem Winkel *KW0*. Insbesondere ein großes Spiel zwischen den Schnecken führt zu Verringerung von *KWA0.* Ein großes Spiel zwischen den Schnecken zur Verringerung des Kammwinkels ist jedoch ungünstig, weil dadurch der Effekt der gegenseitigen Selbstreinigung der Schnecken verringert wird und lange Verweilzeiten an der Oberfläche der Schneckenelemente auftreten, die zu lokaler Produktschädigung und damit zu Verschlechterung der Qualität des Produktes führt. Auch ist dem Fachmann bekannt, dass durch Vergrößerung der Spiele die Wirksamkeit von Schneckenelementen bezüglich Förderwirkung und Druckaufbau negativ beeinflusst wird, so dass zur Erfüllung einer gegebenen verfahrenstechnischen Aufgabe Spiele nicht zu groß gewählt werden dürfen.

In dem Patent DE 813 154 wird ein eingängiges, dicht kämmendes, selbstreinigendes, gleichsinnig drehendes Schneckenprofil gezeigt. Derartige Schneckenprofile besitzen den Vorteil, dass der Kammbereich den Zwickelbereich abdichtet, wodurch auf diesem Schneckenprofil basierende Förderelemente ein hohes Druckaufbauvermögen besitzen. Derartige Schneckenprofile besitzen den Nachteil, dass der Kammbereich sehr groß ist, wodurch es zu einer unerwünschten thermischen und mechanischen Belastung der zu verarbeitenden viskosen Fluide kommt.

In den Patenten US 4131371 A und DE 3412258 A1 werden exzentrische, dreigängige, dicht kämmende, selbstreinigende und gleichsinnig drehende Schneckenprofile gezeigt. Die Exzentrizität erfolgt immer derart, dass nur ein Kamm das Gehäuse abstreift. Derartige Schneckenprofile besitzen den Nachteil, dass der Zwickelbereich nicht abgedichtet wird, wodurch das Druckaufbauvermögen eines auf derartigen Schneckenprofilen beruhenden Förderelements klein ist.

In dem Patent DE 4239220 A1 wird ein 3-gängiges selbstreinigendes Schneckenprofil beschrieben, bei dem die Kammwinkel der 3 Kämme unterschiedlich groß sind. Lediglich der Kamm mit dem größten Kammwinkel berührt das Gehäuse. Derartige Schneckenprofile besitzen den Nachteil, dass der Zwickelbereich nicht abgedichtet wird, wodurch das Druckaufbauvermögen eines auf derartigen Schneckenprofilen beruhenden Förderelements klein ist.

In dem Patent EP 2 131 A1 werden unter anderem dicht kämmende, selbstreinigende, gleichsinnig drehende Schneckenprofile gezeigt, bei denen zwei Kammbereiche das Gehäuse abstreifen und der Abstand eines zwischen zwei Nutbereichen liegenden Flankenbereichs zum Gehäuse kleiner oder gleich der halben Gangtiefe ist. Derartige Schneckenprofile besitzen den Nachteil, dass der Abstand des besagten Flankenbereichs zum Gehäuse so gering ist, dass dieser besagte Flankenbereich wie ein Strömungshindernis wirkt, der den Druckaufbau eines auf derartigen Schneckenprofilen beruhenden Förderelements behindert.

Der Druckaufbau und die Schmelzeförderung in bisher bekannten gleichläufigen Doppelschneckenextrudern und Mehrwellenextrudern bringt demnach durch den schlechten Wirkungsgrad des Extruders Produkterwärmung und thermische Belastung mit sich und ist daher der Qualität des Produktes abträglich.

Bei der Extrusion von Polyethylen und Polyethylen-Copolymeren zeigen sich bei zu hoher Temperatur Aufbau von Molekulargewicht, Verzweigung und Vernetzung. Weiterhin reagieren Polyethylen und Polyethylen-Copolymere mit Luftsauerstoff in dem dem Fachmann bekannten Autoxidationszyklus ([2] Hepperle,J.: Schädigungsmechanismen bei Polymeren. Polymeraufbereitung 2002, VDI-K, VDI-Verlag GmbH, [3] Zweifel, H.: Stabilization of Polymeric Materials. Berlin: Springer 1997, [4] Schwarzenbach, K., et al.: Antioxidants, in Zweifel, H. (Hrsg.): Plastics Additives Handbook. München: Hanser 2001, [5] Cheng, H.N., schilling, F.C., Bovey, F.A.: 13C Nuclear Magnetic Resonance Observation of the Oxidation of Polyethylene, Macromolecules 9 (1976) S. 363-365) unter Bildung von geruchsintensiven und daher störenden niedermolekularen Komponenten wie beispielsweise Ketone, Aldehyde, Carbonsäuren, Hydroperoxide, Ester, Lactone und Alkohole.

Bei der Extrusion von Copolymeren auf Basis Polyethylen und Vinylacetat bildet sich bei zu hoher Temperatur zusätzlich geruchsintensive und korrosive Essigsäure.

Bei der Extrusion von Polypropylen und Polypropylen-Copolymeren zeigt sich zu hoher Temperatur Abbau von Molekulargewicht. Weiterhin reagieren Polyproplyen und Polypropylen-Copolymere mit Luftsauerstoff in dem Autoxidationszyklus unter Bildung von geruchsintensiven und daher störenden niedermolekularen Komponenten wie beispielsweise Ketone, Aldehyde, Carbonsäuren, Hydroperoxide, Ester, Lactone und Alkohole.

Bei der Extrusion von Polyvinylchlorid spaltet bei zu hoher Temperatur Polyvinlychlorid unter Verfärbung korrosives Salzsäuregas ab, wobei die Salzsäure wiederum katalytisch bei der weiteren Abspaltung von Salzsäure wirkt.

Bei der Extrusion von Polystyrol bildet sich bei zu hoher Temperatur gesundheitsschädliches Styrol sowie dimeres und trimeres Styrol, mit Abbau von Molekulargewicht und entsprechendem Verschlechterung von mechanischen Eigenschaften.

Bei der Extrusion von Polystyrol - Acrylnitril - Copolymer (SAN) verfärbt sich das Produkt unter thermischer Belastung zum Gelben hin, was zu verringerter Transparenz führt, und bildet das krebserregende Monomer Acrylnitril sowie Styrol, unter Abbau von Molekulargewicht und Verschlechterung von mechanischen Eigenschaften.

Bei der Extrusion von aromatische Polycarbonaten verfärbt sich unter zu hoher thermischer Belastung, insbesondere unter Sauerstoffeinfluss, zum Gelben hin, was zu verringerter Transparenz führt, und zeigt Abbau im Molekulargewicht, insbesondere unter Einfluss von Wasser. Auch werden unter erhöhter Temperatur Monomere wie z.B. Bisphenol A, zurückgespalten.

Bei der Extrusion von Polyester wie z.B. Polyethylenterephtalat, Polybutylenterephtaltat, Polytrimethylenterepthalat und Polylactid ergibt sich unter zu hoher Temperatur und Wassereinfluss eine Verringerung im Molekulargewicht und Verschiebung der Endgruppen im Molekül. Dies ist vor allem beim Recycling von Polyethylenterephtalat problematisch. Polyethylenterephtalat spaltet bei hoher Temperatur Acetaldehyd ab, was beispielsweise zu Veränderungen an Geschmack in dem Inhalt von Getränkeflaschen führen kann.

Bei der Extrusion von mit Dienkautschuken, insbesondere mit Butadienkautschuk schlagzäh modifizierten Thermoplasten, insbesondere schlagzäh modifizierte Polystyroltypen (HIPS) und schlagzäh modifiziertes SAN (Acrylnitril-Butadien-Styrol, ABS) spaltet sich unter zu hoher Temperatur krebserregendes Butadien sowie giftiges Vinylcyclohexen ab. Weiterhin vernetzt der Dienkautschuk, so dass Verschlechterungen der mechanischen Eigenschaften des Produktes auftreten.

Bei der Extrusion von Polyoxymethylen spaltet sich bei zu hoher Temperatur giftiges Formaldehyd ab.

Bei der Extrusion von Polyamiden wie Polyamid 6, Polyamid 6,6, Polyamid 4,6, Polyamid 11 und Polyamid 12 führt zu hohe Temperatur zu Verfärbungen des Produktes und zu Molekulargewichtsabbau und zur Rückbildung von Monomeren und Dimeren und damit zu Verschlechterung von mechanischen Eigenschaften, vor allem in Gegenwart von Wasser.

Bei der Extrusion von thermoplastischen Polyurethanen führt zu hohe Temperatur zu Veränderungen der Molekülstruktur durch Umurethanisierung und, in Gegenwart von Wasser, zu Molekulargewichtsabbau. Beides beeinflusst die Eigenschaften des thermoplastischen Polyurethans in unerwünschter Weise.

Bei der Extrusion Polymethylmethacrylat spaltet bei zu hoher thermischer Belastung unter Abbau von Molekulargewicht Methylmethacrylat ab, was zu Geruchsbelästigung und zu verschlechterten mechanischen Eigenschaften führt.

Bei der Extrusion von Polyphenylensulfid werden bei zu hoher Temperatur schwefelhaltige organische und anorganische Verbindungen abgespalten, die zu Geruchsbelästigung führen und zu Korrosion der Extrusionswerkzeuge führen kann. Auch werden hierbei niedermolekulare Oligomere und Monomere gebildet und Molekulargewicht abgebaut, was die mechanischen Eigenschaften von Polyphenylensulfid verschlechtert.

Bei der Extrusion von Polyphenylsulfon werden bei zu hoher Temperatur organische Verbindungen abgespalten, vor allem in Gegenwart von Wasser. Auch reduziert sich das Molekulargewicht, wodurch die mechanischen Eigenschaften verschlechtert werden.

Bei der Extrusion von Polyphenylenether werden bei zu hoher Temperatur niedermolekulare organische Verbindungen abgespalten, wobei sich das Molekulargewicht reduziert. Dies führt zu einer Verschlechterung der mechanischen Eigenschaften des Produktes.

Bei der Extrusion von Dien-Kautschuken wie beispielsweise Polybutadien (BR), Naturkautschuk (NR) und synthetisches Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien-Acrylnitril-Kautschuk (HNBR) sowie Ethylen-Proplyen-Dien-Copolymere (EPDM) bildet sich bei zu hoher Temperatur durch Vernetzung Gel, das zu Verschlechterung von mechanischen Eigenschaften der daraus hergestellten Bauteile führet. Bei Chlor- und Brombutylkautschuk kann unter erhöhter Temperatur korrosives Salzsäure- bzw. Bromwasserstoffgas abgespalten werden, das wiederum die weitere Zersetzung des Polymers katalysiert.

Bei der Extrusion von Kautschukmischungen, die Vulkanisatoren wie z.B. Schwefel oder Peroxide enthalten, werden durch zu hohe Temperaturen zum vorzeitigen Vulkanisieren gebracht. Dies führt dazu, dass aus diesen Kautschukmischungen keine Produkte mehr hergestellt werden können.

Bei der Extrusion von Mischungen aus einem oder mehreren Polymeren bei zu hohen Temperaturen treten jeweils die Nachteile der Extrusion der einzelnen Polymere auf.

Es bestand daher die Aufgabe, ein Verfahren zur Extrusion, insbesondere zur Schmelzeförderung zum Kneten und / oder Mischen" von plastischen Massen insbesondere von Polymerschmelzen und Mischungen von Polymerschmeizen, vor allem Thermoplasten und Elastomere, besonders bevorzugt Polycarbonat und Polycarbonat-Blends, bereitzustellen, das möglichst effizient ist, d.h. einen geringen Energieeintrag bei gleichzeitig hohem Druckaufbau erfordert, und schonend auf die plastischen Massen wirkt. Es war insbesondere Aufgabe, ein Verfahren für die Extrusion von Polycarbonatschmelzen bereitzustellen, bei dem hohe Schmelzetemperaturen bei längeren Verweilzeiten vermieden werden.

Überraschend wurde gefunden, dass die Extrusion plastischer Massen bei hohem Druckaufbau und guter Förderwirkung dann unter einem geringen Energieeintrag gelingt, wenn Schneckenelemente mit paarweise gleichsinnigen und paarweise exakt abschabenden Schneckenwellen eingesetzt werden, die dadurch gekennzeichnet, dass erzeugendes und erzeugtes Schneckenprofil eine Abfolge von Abdichtungsbereich - Übergangsbereich - Kanalbereich - Übergangsbereich aufweisen, wobei ein Abdichtungsbereich eine Abfolge von Kammbereich - Flankenbereich - Kammbereich ist, ein Kanalbereich eine Abfolge von Nutbereich - Flankenbereich - Nutbereich ist und ein Übergangsbereich eine Abfolge von Schneckenprofilbereichen ist, die mit einem Flankenbereich anfängt und mit einem Flankenbereich endet.

Gegenstand der vorliegenden Erfindung ist daher ein Verfahren gemäβ Anspruch 1.

Unter Abdichtungsbereich wird eine Abfolge von Kammbereich - Flankenbereich - Kammbereich verstanden. Unter Kanalbereich wird eine Abfolge von Nutbereich - Flankenbereich - Nutbereich verstanden. Unter Übergangsbereich wird eine Abfolge von Schneckenprofilbereichen verstanden, die mit einem Flankenbereich anfangt und mit einem Flankenbereich endet.

Der Abdichtungs bereiche der zu verwendenden schneckenelemente ist bevorzugt dadurch charakterisiert, dass
o der Flankenbereich bezogen auf den Drehpunkt des Schneckenprofils einen Winkel δ_fb1 besitzt, der größer oder gleich dem halben Öffnungswinkel zwischen den beiden Gehäusezwickeln ist (δ_fb1≥arccos(0,5*a/ra)) und der bevorzugt größer oder gleich dem Öffnungswinkel zwischen den beiden Gehäusezwickeln ist (δ_fb1≥2*arccos(0,5*a/ra)),
o ein Kammbereich bezogen auf den Drehpunkt des Schneckenprofils einen Winkel δ_kb1 besitzt, der kleiner oder gleich der Differenz des Kammwinkels eines eingängigen Erdmenger-Schneckenprofils minus des Öffnungswinkels zwischen den beiden Gehäusezwickeln ist (δ_kb1≤π-4*arccos(0,5*a/ra)) und der bevorzugt kleiner oder gleich dem Kammwinkel eines zweigängigen Erdmenger-Schneckenprofils ist (δ_kb1≤π/2-2*arccos(0,5*a/ra)),
o der andere Kammbereich bezogen auf den Drehpunkt des Schneckenprofils einen Winkel δ_kb2 besitzt, der kleiner oder gleich der Differenz des Kammwinkels eines eingängigen Erdmenger-Schneckenprofils minus des Öffnungswinkels zwischen den beiden Gehäusezwickeln ist (δ_kb2≤π-4*arccos(0,5*a/ra)) und der bevorzugt kleiner oder gleich dem Kammwinkel eines zweigängigen Erdmenger-Schneckenprofils ist (δ_kb2≤π/2-2*arccos(0,5*a/ra)).

Die Summe der Winkel der Kamm- und Flankenbereiche δ_kb1, δ_kb2 und δ_fb1 des Abdichtungsbereichs liegt bevorzugt im Bereich von 0,75*δ_gz bis 2*δ_gb+δ_gz. In einer besonders bevorzugten Ausführungsform liegt die Summe der Winkel der Kamm- und Flankenbereiche δ_kb1, δ_kb2 und δ_fb1 des Abdichtungsbereichs im Bereich von δ_gz bis δ_gb+δ_g.z.

Der Kanalbereich der zu verwendenden Schneckenelemente ist bevorzugt dadurch charakterisiert, dass
ο der Flankenbereich bezogen auf den Drehpunkt des Schneckenprofils einen Winkel δ_fb2 besitzt, der größer oder gleich dem halben Öffnungswinkel zwischen den beiden Gehäusezwickeln ist (δ_fb2≥arccos(0,5*a/ra)) und der bevorzugt größer oder gleich dem Öffnungswinkel zwischen den beiden Gehäusezwickeln ist (δ_fb2≥2*arccos(0,5*a/ra)), und der minimale Abstand des Flankenbereichs von dem Schneckenradius ra größer als die halbe Gangtiefe h ist,
ο ein Nutbereich bezogen auf den Drehpunkt des Schneckenprofils einen Winkel δ_nb1 besitzt, der kleiner oder gleich der Differenz des Kammwinkels eines eingängigen Erdmenger-Schneckenprofils minus des Öffnungswinkels zwischen den beiden Gehäusezwickeln ist (δ_nb1≤π-4*arccos(0,5*a/ra)) und der bevorzugt kleiner oder gleich dem Kammwinkel eines zweigängigen Erdmenger-Schneckenprofils ist (δ_nb1≤π/2-2*arccos(0,5*a/ra)),
ο der andere Nutbereich bezogen auf den Drehpunkt des Schneckenprofils einen Winkel δ_nb2 besitzt, der kleiner oder gleich der Differenz des Kammwinkels eines eingängigen Erdmenger-Schneckenprofils minus des Öffnungswinkels zwischen den beiden Gehäusezwickeln ist (δ_nb2≤π-4*arccos(0,5*a/ra)) und der bevorzugt kleiner oder gleich dem Kammwinkel eines zweigängigen Erdmenger-Schneckenprofils ist (δ_nb2≤π/2-2*arccos(0,5*a/ra)).

Die Summe der Winkel der Nut- und Flankenbereiche δ_nb1, δ_nb2 und δ_fb2 des Kanalbereichs liegt bevorzugt im Bereich von 0,75*δ_gz bis 2*δ_gb+δ_gz. In einer besonders bevorzugten Ausführungsform liegt die Summe der Winkel der Nut- und Flankenbereiche δ_nb1, δ_nb2 und δ_fb2 des Kanalbereichs im Bereich von δ_gz bis δ_gb+δ_gz.

Der Übergangsbereich ist dadurch charakterisiert, das er mit einem Flankenbereich anfängt und mit einem Flankenbereich endet. Bevorzugt besteht der Übergangsbereich aus einer Abfolge von Flankenbereich - Kammbereich - Flankenbereich oder aus einer Abfolge von Flankenbereich - Nutbereich - Flankenbereich oder aus einer Abfolge von Flankenbereich - Kammbereich - Flankenbereich - Nutbereich - Flankenbereich oder aus einer Abfolge von Flankenbereich - Nutbereich - Flankenbereich - Kammbereich - Flankenbereich. In einer besonders bevorzugten Ausführungsform besteht der Übergangsbereich aus einem Flankenbereich. In diesem Fall beginnt und endet der Übergangsbereich mit diesem einen besagten Flankenbereich.

Die Schneckenelemente sind nicht auf aus der heutzutage üblichen Modulbauweise einer Schnecke aus Schneckenelementen und Kemwellen beschränkt, sondern auch auf Schnecken in Massivbauweise anwendbar. Daher sind unter dem Begriff Schneckenelemente auch Schnecken in Massivbauweise zu verstehen.

Die erfindungsgemäß zu verwendenden Schneckenelemente können als Förderelemente, Knetelemente und / oder Mischelemente verwendet werden.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Dem Fachmann ist bekannt, dass direkt abschabende Schneckenprofile nicht direkt in einen Doppelschneckenextruder eingesetzt werden können, vielmehr sind Spiele zwischen den Schnecken erforderlich. Hierfür sind in [1] auf den Seiten 28 ff verschiedene mögliche Strategien beschrieben. Für die Schneckenprofile erfindungsgemäßer Schneckenelemente können Spiele im Bereich von 0,001 bis 0,1, bezogen auf den Durchmesser des Schneckenprofils, verwendet werden, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder, in den angegebenen Grenzen, variabel sein. Es ist auch möglich, innerhalb der Spiele ein Schneckenprofil zu verschieben. Mögliche Spielstrategien sind die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Achse) um das halbe Spiel Schnecke-Schnecke nach innen verschoben. Bei der Methode der Raumäquidistanten wird, ausgehend von der Raumkurve, auf der die Schneckenelemente sich abreinigen, das Schnecken element in der Richtung senkrecht zu den Flächen des exakt abschabenden Profils um das halbe Spiel zwischen Schnecke und Schnecke verkleinert. Bevorzugt wird die Längsschnitt-Äquidistante und die Raumäquidistante, besonders bevorzugt die Raumäquidistante verwendet.

Gegenstand der vorliegenden Erfindung ist weiterhin ein Verfahren zur Herstellung von plastischen Massen, insbesondere von Polymerschmelzen und Mischungen von Polymerschmelzen, vor allem Thermoplasten und Elastomeren, besonders bevorzugt Polycarbonat und Polycarbonat-Blends" dadurch gekennzeichnet, dass erfindungsgemäßen Schneckenelemente in mehrwelligen Schneckenmaschinen verwendet werden. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet- oder Förderelementen vorliegen. Es ist ebenso möglich, Knet- und Förderelemente in einer Scheckenmaschine miteinander zu kombinieren. Die erfindungsgemäßen Schneckenelemente können auch mit anderen Schneckenelementen, die nach dem Stand der Technik bekannt sind, kombiniert werden.

Die neuartigen Schneckenelemente zeichnen sich dadurch aus, dass sie die oben genannten Nachteile von nach dem Stand der Technik bekannten Schneckenelementen nicht aufweisen. Insbesondere ermöglichen die erfindungsgemäßen Schneckenelemente eine Abdichtung des Zwickelbereichs dadurch, dass sich jeweils ein Kammbereich in jeweils einem Gehäusezwickelbereich befindet, wodurch das Druckaufbauvermögen von auf derartigen Schneckenprofilen beruhenden Förderelementen groß ist. Insbesondere sind Schneckenelemente Gegenstand der vorliegenden Erfindung, deren Kammbereiche klein sind, wodurch die thermische und mechanische Produktbelastung minimiert wird. Insbesondere sind Schneckenelemente vermendert, bei denen der zwischen zwei Nutbereichen liegende Flankenbereich einen Abstand vom Gehäuse aufweist, der größer als die halbe Gangtiefe ist, wodurch der Strömungswiderstand klein gehalten wird. Insbesondere sind Schneckenelemente verwendet, die für alle Wellen eines Mehrwellenextruders bzw. die beiden Wellen eines Zweiwellenextruders ein identisches Schneckenprofil aufweisen.

Bevorzugte Materialien zur Erzeugung der Schneckenelemente sind Stähle, insbesondere Nitrierstähle und Edelstähle.

Plastische Massen, die erfindungsgemäß mit hoher Effizienz bei gleichzeitiger Produktschonung extrudiert werden können, sind z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Bevorzugt werden Kunststoffe und Polymerlösungen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, Polylactid Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht. Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern

In dem erfindungsgemäßen Verfahren kann der Extruder auf verschiedene Art mit Produkt beschickt werden, abhängig von der Art, in der das Polymer anfällt. In einer bevorzugten Variante wird der Extruder mit einer flüssigen Phase beschickt, die neben dem Polymer noch Lösungsmittel und ggf. Restmonomere enthalten kann. Die Form, in der Polymere nach der Reaktion und ggf. einer Voreindampfung anfallen, sind dem Fachmann bekannt. Beispiele hierfür sind
- Polystyrol mit Rest-Styrol und evtl. Ethylbenzol, Toluol, Xylol, Butanon oder einem anderen Lösemittel
- Copolymer von Styol und Acrylnitril mit Rest-Styrol, Rest-Acrylnitril, und evtl. Ethylbenzol, Toluol, Xylol, Butanon oder einem anderen Lösemittel
- Lineares Polyethylen niedriger oder hoher Dichte, verzweigtes Polyethylen mit Lösemittel wie Hexan, technisches Hexan, Propan, Isobutan und Momomeren wie Propylen, Buten-1, Hexen-1, 4-Methylpenten-1, Octen-1 (Prozesse mit Suspensionen sind: CX Prozess von Mitsui Chemicals (Hexan), Hostalen Prozess von Basell (Hexan), Chevron Philips USA (Isobutan), Borstar Prozess von Borealis (Propan) Belgien, und DSM nutz Hexan in einem Lösungsmittelprozess) Detail dazu sind in [6] (Comparative Analysis of Various Polyethylen Production Technologies, Chem. And Petroleum Eng. Vol. 44, Nos. 7-8, 2008) beschrieben
- Polycarbonat mit Lösemittel, z.B. Chlorbenzol und Methylenchlorid
- Polymethylenmethacrylat mit Monmer, d.h. Methylmethacrylat.

In dem erfindungsgemäßen Verfahren kann der Extruder beispielsweise auch mit Partikeln beschickt werden. In diesem Fall dient ein erfindungsgemäßer Extruder vor allem zum Aufschmelzen, zur Konfektionierung und zum Mischen mit Additiven. Die Form, in der die Polymere nach der Reaktion und ggf. einer Voreindampfung oder Fällung anfallen, sind dem Fachmann bekannt. Beispiele hierfür sind
- Polypropylen, bei dem das Polymer in Form von Pulver nach der letzten Reaktion anfällt
- Polyethylen hoher Dichte aus einem Gasphasen- oder Slurryprozess
- Emulsionspolymerisate wie beispielsweise Acrylnitril-Butadien-Styrol nach der Fällung und ggf. Trocnkung

Bei der Aufarbeitung eignet sich ein erfindungsgemäßer Doppel- oder Mehrwellenextruder besonders für Aufgaben mit Entgasung. Besondere Vorteile ergeben sich dabei bei der direkten Aufarbeitung von Recycling-Polyethylenterepthalat aus Flaschenware, die eine Entgasung bei minimaler Temperaturbelastung erfolgt.

Besonders bevorzugt wird das erfindungsgemäße Verfahren bei der Herstellung und der Compoundierung von Polycarbonat angewendet. Hierbei bietet es Vorteile vor allem bei der Farbe des Polycarbonats, bei nicht eingefärbtem Polycarbonat gemessen mit dem Yellowness Index (YI). Die erfindungsgemäßen Schneckenelemente werden hierbei besonders bevorzugt in der Entgasungszone eingesetzt.

Polycarbonate im Sinne der vorliegenden Erfindung sind sowohl Homopolycarbonate als auch Copolycarbonate; die Polycarbonate können in bekannter Weise linear oder verzweigt sein.

Bevorzugte Herstellungsweisen der erfindungsgemäß zu verwendenden Polycarbonate, einschließlich der Polyestercarbonate, sind das bekannte Grenzflächenverfahren und das bekannte Schmelzumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsumiert werden.

Das erfindungsgemäße Verfahren findet insbesondere bei der Herstellung von Polycarbonaten Verwendung. Gegenstand der vorliegenden Erfindung ist daher auch ein Verfahren zur Herstellung von Polycarbonaten, dadurch gekennzeichnet, das wenigstens ein Schritt des Herstellungsverfahrens ein erfindungsgemäßes Extrusionsverfahren umfasst.

Die Herstellung von Polycarbonaten unter Anwendung des erfindungsgemäßen Verfahrens erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Beispielhaft für die Herstellung von Polycarbonaten sei hier auf Schnell, "Chemistry and Physics of Polycarbonates", Polymer Reviews, Volume 9, Interscience Publishers, New York, London, Sydney 1964 verwiesen.

Die thermoplastischen Polycarbonate, die in dem erfindungsgemäßen Verfahren bevorzugt eingesetzt werden, einschließlich der thermoplastischen, aromatischen Polyestercarbonate haben ein mittleres Molekulargewicht M_{w} (ermittelt durch Messung der relativen Viskosität bei 25°C in CH₂Cl₂ und einer Konzentration von 0,5 g pro 100 ml CH₂Cl₂) von 12 000 bis 120 000, vorzugsweise von 15 000 bis 80 000 und insbesondere von 15 000 bis 60 000.

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die für die Umsetzung mit den Dihydroxyarylverbindungen geeigneten Diarylcarbonate bei der Schmelzeumesterung sind solche der allgemeinen Formel (II) 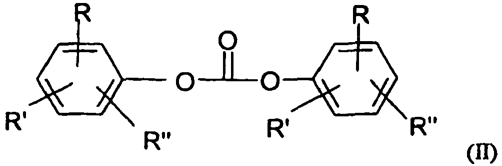 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalieylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.%, vorzugsweise bis zu 10 Gew.%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutyiammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol%, besonders bevorzugt 0,05 bis 5 Mol%.

Als Katalysatoren können im Schmelzumesterungsverfahren zur Herstellung von Polycarbonaten die in der Literatur bekannten basischen Katalysatoren wie beispielsweise Alkali- und Erdalkalihydroxyde und -oxyde und/oder Oniumsalze, wie z.B. Ammonium- oder Phosphoniumsalze, eingesetzt werden. Bevorzugt werden bei der Synthese Oniumsalze, besonders bevorzugt Phosphoniumsalze eingesetzt. Solche Phosphoniumsalze sind beispielsweise solche der allgemeinen Formel (IV) 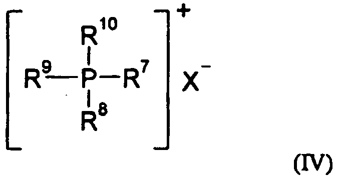 worin
- R⁷⁻¹⁰: für gleiche oder verschiedene gegebenenfalls substituierte C₁-C₁₀-Alkyl-, C₆-C₁₄-Aryl-, C₇-C₁₅-Arylalkyl- oder C₅-C₆-Cycloalkylreste, bevorzugt für Methyl oder C₆-C₁₄-Aryl, besonders bevorzugt Methyl oder Phenyl stehen und
- X: für ein Anion ausgewählt aus der Gruppe Hydroxyd, Sulfat, Hydrogensulfat, Hydrogencarbonat, Carbonat, Halogenid, bevorzugt Chlorid, und Alkylat oder Arylat der Formel -OR¹¹ stehen, wobei R¹¹ für einen gegebenenfalls substituierten C₆-C₁₄-Aryl-, C₇-C₁₅-Arylalkyl- oder C₅-C₆-Cycloalkylrest, C₁-C₂₀-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von 10⁻⁸ bis 10⁻³ mol, besonders bevorzugt in Mengen von 10⁻⁷ bis 10⁻⁴ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte C₁-C₁₀-Alkoxyde und C₆-C₁₄-Aryloxyde von Lithium, Natrium und Kalium, vorzugsweise Hydroxyde, gegebenenfalls substituierte C₁-C₁₀-Alkoxyde oder C₆-C₁₄-Aryloxyde von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionspektroskopie, 1 bis 500 ppb, vorzugsweise 5 bis 300 ppb und am meisten bevorzugt 5 bis 200 ppb, bezogen auf zu bildendes Polycarbonat. In bevorzugten Ausführungsformen des erfindungsgemäßen Verfahrens werden allerdings keine Alkalisalze verwendet.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens im Grenzflächenverfahren kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und / oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (< 2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein *tert*. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und / oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Für die Herstellung der Polyestercarbonate geeignete aromatische Dicarbonsäuren sind beispielsweise Phthalsäure, Terephthalsäure, Isophthalsäure, tert.-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und / oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

**C₁-C₄-Alkyl** steht im Rahmen der Erfindung beispielsweise für Methyl, Ethyl, n-Propyl, isoPropyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₀-Alkyl** darüber hinaus beispielsweise für n-Heptyl und n-Octyl, Pinakyl, Adamantyl, die isomeren Menthyle, n-Nonyl, n-Decyl, **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

**Aryl** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

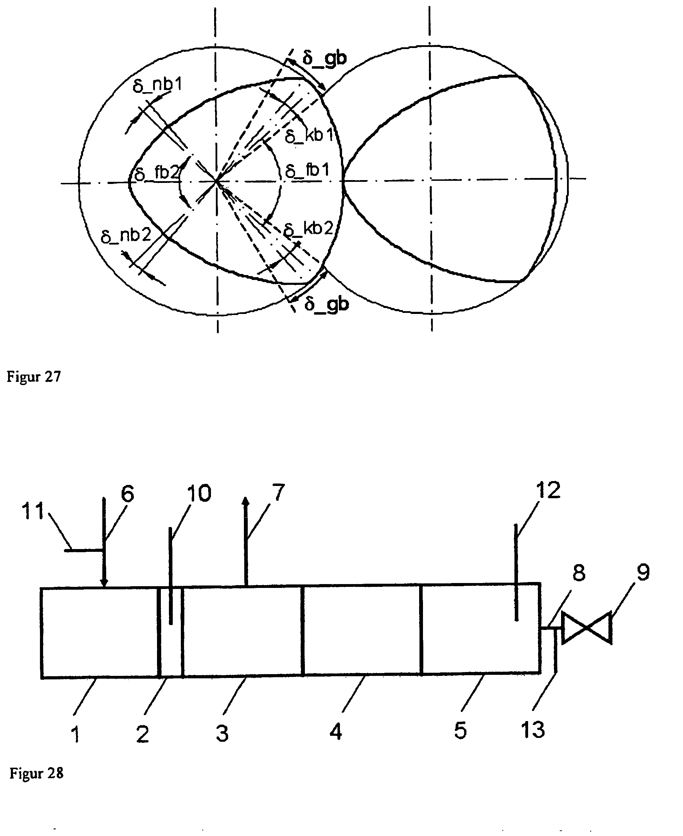

Die Erfindung wird nachstehend anhand der Figuren beispielhaft näher erläutert ohne sie jedoch auf diese zu beschränken. Bis auf die Figuren 28 bis 33 wurden alle Figuren mit Hilfe eines Computerprogramms erzeugt.

Bevorzugt verwendet man zur Erzeugung und / oder Beschreibung von Schneckenprofilen und - elementen dimensionslose Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für den dimensionslosen Achsabstand folgt A = a / a = 1. Für den dimensionslosen Schneckenaußenradius eines Schneckenprofils folgt RA = ra / a. Der dimensionslose Kernradius eines Schneckenprofils berechnet sich zu RI = ri / a. Die dimensionslose Gangtiefe eines Schneckenprofils berechnet sich zu H = h / a = RA - RI.

In den Figuren werden alle geometrischen Größen in ihrer dimensionslosen Form verwendet. Alle Winkelangaben erfolgen im Bogenmaß.

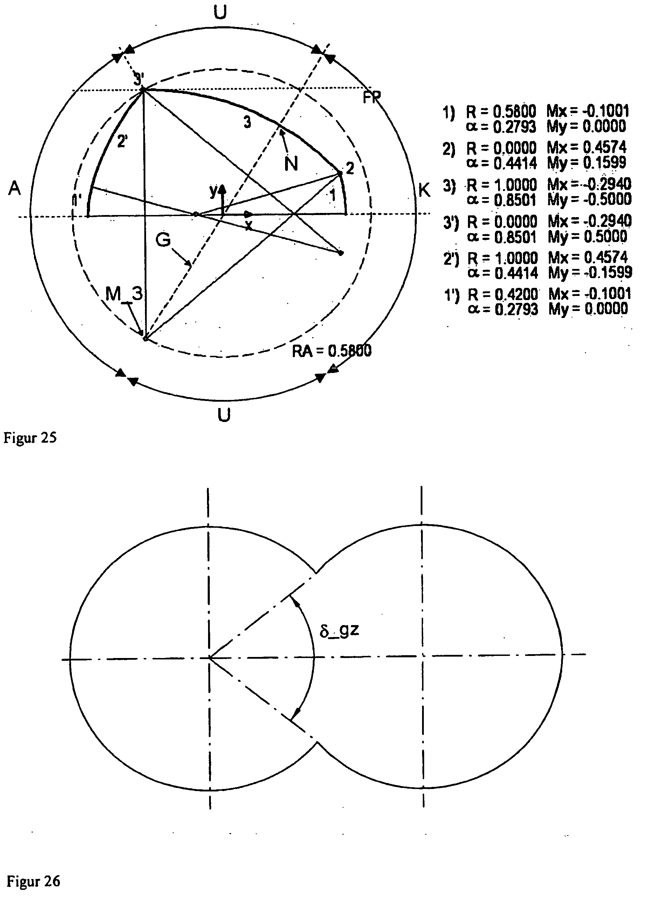

**Figur 25** zeigt im Querschnitt die Hälfte eines Schneckenprofils eines erfindungsgemäß verwendeten Schneckenelements. In der Mitte der Figur liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert. Das Schneckenprofil ist spiegelsymmetrisch zur x-Achse, sodass sich das gesamte Schneckenprofil durch Spiegelung der gezeigten Hälfte an der x-Achse ergeben würde.

Die Bereiche eines Schneckenprofils, die gleich dem Schneckenaußenradius sind, werden als Kammbereiche bezeichnet. Im Beispiel der Figur 25 ist dies nur der Kreisbogen 3', der den Schneckenaußenradius berührt. Er besitzt einen Radius von R_3'=0, d.h. an dieser Stelle weist das Profil einen Knick auf. Der Mittelpunkt des Kreisbogens 3' fällt mit dem Knick zusammen. Die "Größe des Knicks" ist durch den Winkel α_3' gegeben (α_3'=0,8501), d.h. der Übergang vom Kreisbogen 3 auf den Kreisbogen 2' erfolgt durch Drehung um den Winkel α_3'. Oder anders ausgedrückt: eine Tangente an den Kreisbogen 3 im Mittelpunkt des Kreisbogen 3' schneidet eine Tangente an den Kreisbogen 2' ebenfalls im Mittelpunkt des Kreisbogens 3' in einem Winkel von α_3'. Unter Berücksichtigung des Kreisbogens 3' gehen jedoch alle benachbarten Kreisbögen 3→3', 3'→2' tangential ineinander über.

Die Bereiche eines Schneckenprofils, die gleich dem Kernradius sind, werden als Nutbereiche bezeichnet. Im Beispiel der Figur 25 ist dies nur ein Punkt N auf dem Kreisbogen 3. Der Punkt N wird erhalten, indem man eine Gerade G durch den Mittelpunkt M_3 des Kreisbogens 3 und den Drehpunkt des Profils legt. Diese Gerade G schneidet den Kreisbogen 3 im Punkt N.

Die Bereiche eines Schneckenprofils, die kleiner als der Schneckenaußenradius und größer als der Kernradius sind, werden als Flankenbereiche bezeichnet. Dies sind im Beispiel der Figur 25 der Kreisbogen 1, der Kreisbogen 2, der Kreisbogen 2', der Kreisbogen 1' und der Kreisbogen 3 mit Ausnahme des Punkts N. Insofern lässt sich für den gezeigten Profilabschnitt beginnend mit dem Kreisbogen 1' und endend mit dem Kreisbogen 1 die folgende Abfolge von Bereichen ablesen: Flanke - Flanke - Kamm - Flanke - Nut - Flanke - Flanke - Flanke. Die Bereiche werden aufgrund der Achsensymmetrie des Profils durch Spiegelung an der x-Achse kopiert. Dadurch ergibt sich das Gesamtprofil mit der erfindungsgemäßen Abfolge:

Erfindungsgemäß weist das gezeigte Profil eine Abfolge A - U - K - U auf, wobei A für einen Abdichtungsbereich, U für einen Übergangsbereich und K für einen Kanalbereich steht. Der Abdichtungsbereich weist eine Abfolge von Kammbereich - Flankenbereich - Kammbereich auf. Der Kanalbereich weist eine Abfolge von Nutbereich - Flankenbereich - Nutbereich auf. Der Übergangsbereich weist einen Flankenbereich auf.

Der Abdichtungsbereich ist dadurch gekennzeichnet, dass das Schneckenprofil beim Übergang vom Flankenbereich auf den Kammbereich einen Knick aufweist. Ferner ist das Schneckenprofil dieser Figur dadurch charakterisiert, dass der Übergang vom Abdichtungsbereich zum Übergangsbereich einen Knick aufweist. Der kleinste dimensionslose Abstand des Flankenbereichs des Kanalbereichs zum dimensionslosen Schneckenaußenradius RA beträgt 0,1001 und ist damit größer als die halbe dimensionslose Gangtiefe H / 2 = 0,08.

Im Folgenden sind weitere erfindungsgemäß verwendete Schneckenelemente dargestellt. Dabei wird aus Übersichtsgründen auf die Angabe der Bereiche (Flankenbereich, Kammbereich, Nutbereich, Abdichtungsbereich, Kanalbereich, Übergangsbereich) in den Figuren verzichtet. Die Figuren enthalten jedoch alle Angaben, aus denen die Bestimmung der Bereiche vorgenommen werden kann. Ferner können Größen wie Öffnungswinkel zwischen den beiden Gehäusezwickeln und Kammwinkel anhand der Angaben in den Figuren leicht berechnet werden.

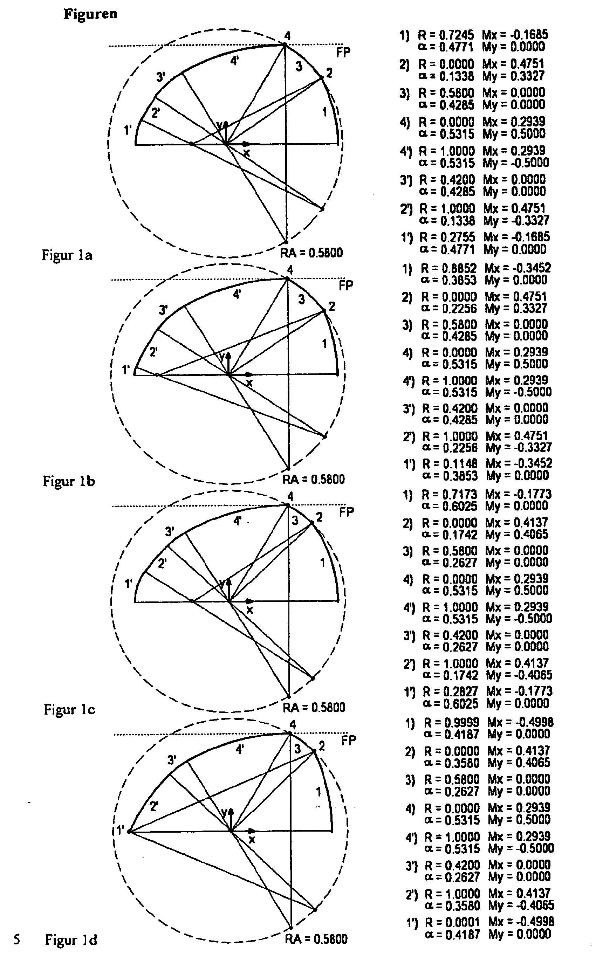

Die Figuren 1 bis 13 zeigen jeweils im Querschnitt die Hälfte eines Schneckenprofils eines erfindungsgemäß verwendeten Schneckenelements. Alle diese Figuren weisen den gleichen Aufbau auf, der nachfolgend im Detail beschrieben wird. In der Mitte der Figuren liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Schneckenprofil eindeutig definiert. Die Schneckenprofile sind jeweils spiegelsymmetrisch zur x-Achse, sodass sich die gesamten Schneckenprofile durch Spiegelung der gezeigten Hälfte an der x-Achse ergeben würden.

Schneckenprofile, bei denen die Hälfte des Schneckenprofils aus insgesamt 2 Kreisbögen bestehen, werden nachfolgend als 2-Kreis-Schneckenprofile bezeichnet. Schneckenprofile, bei denen die Hälfte des Schneckenprofils aus insgesamt 4 Kreisbögen bestehen, werden nachfolgend als 4-Kreis-Schneckenprofile bezeichnet. Schneckenprofile, bei denen die Hälfte des Schneckenprofils aus insgesamt 6 Kreisbögen bestehen, werden nachfolgend als 6-Kreis-Schneckenprofile bezeichnet. Schneckenprofile, bei denen die Hälfte des Schneckenprofils aus insgesamt 8 Kreisbögen bestehen, werden nachfolgend als 8-Kreis-Schneckenprofile bezeichnet.

**Figur 1****:** Die Figuren 1a bis 1d zeigen jeweils die Hälfte eines bevorzugten Schneckenprofils eines erfindungsgemäß verwendeten Schneckenelements, welches aus jeweils 8 Kreisbögen aufgebaut ist. In den Figuren 1a bis 1d beträgt der dimensionslose Schneckenaußenradius jeweils RA = 0,58. In den Figuren 1a bis 1d beträgt die dimensionslose Gangtiefe jeweils H=0,16. Die weiteren geometrischen Größen, die die Schneckenprofile exakt beschreiben, können aus den Figuren entnommen werden. Charakteristisch für die Schneckenprofile in den Figuren 1a bis 1d ist, dass der Abdichtungsbereich die Kreisbögen 1 bis 4 umfasst, wobei der Flankenbereich den Kreisbogen 1 und der Kammbereich die Kreisbögen 2 bis 4 umfasst, wobei der dimensionslose Radius der Kreisbögen 2 und 4 jeweils gleich 0 und der dimensionslose Radius des Kreisbogens 3 gleich dem dimensionslosen Schneckenaußenradius RA ist und wobei die Kreisbögen des Kammbereichs vollständig auf dem dimensionslosen Schneckenaußenradius RA liegen und damit eine linienförmige Abdichtung des Zwickelbereichs vorliegt. Ferner ist für diese Schneckenprofile charakteristisch, dass der Übergangsbereich den Kreisbogen 4' umfasst, dessen dimensionsloser Radius gleich dem dimensionslosen Achsabstand A ist. Ferner sind diese Schneckenprofile dadurch gekennzeichnet, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 2' gleich dem dimensionslosen Achsabstand A und der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 1a bis 1d sind die Abdichtungsbereiche dadurch gekennzeichnet, dass die Schneckenprofile jeweils beim Übergang vom Flankenbereich auf den Kammbereich einen Knick aufweisen. Ferner sind die Schneckenprofile dieser Figuren dadurch charakterisiert, dass der Übergang vom Abdichtungsbereich zum Übergangsbereich jeweils einen Knick aufweist. Den kleinsten dimensionslosen Abstand des Flankenbereichs des Kanalbereichs zum dimensionslosen Schneckenaußenradius RA weist Figur 1d auf. In der Figur 1d beträgt der besagte Abstand 0,0801 und ist damit größer als die halbe dimensionslose Gangtiefe H / 2 = 0,08.

Aus den Figuren 1a bis 1d wird deutlich, dass die Größe des Kammbereichs des Abdichtungsbereichs eingestellt werden kann. Aus diesen Figuren wird ferner deutlich, dass der maximale Abstand des Flankenbereichs des Abdichtungsbereichs zum Schneckenaußenradius eingestellt werden kann.

Die Figuren 1b und 1c sind ferner dadurch gekennzeichnet, dass die Position des Anfangspunktes des Kreisbogens 1 und die Position des Endpunktes des Kreisbogens 1' jeweils identisch sind. Durch Spiegeln der Figur 1b oder der Figur 1c an der x-Achse und durch Zusammensetzen des Schneckenprofils aus dem Schneckenprofil der Figur 1b und dem gespiegelten Schneckenprofil der Figur 1c oder aus dem Schneckenprofil der Figur 1c und dem gespiegelten Schneckenprofil der Figur 1b ergeben sich Schneckenprofile eines erfindungsgemäß verwendeten Schneckenelements, bei dem die Kammbereiche des Abdichtungsbereichs unterschiedlich groß sind.

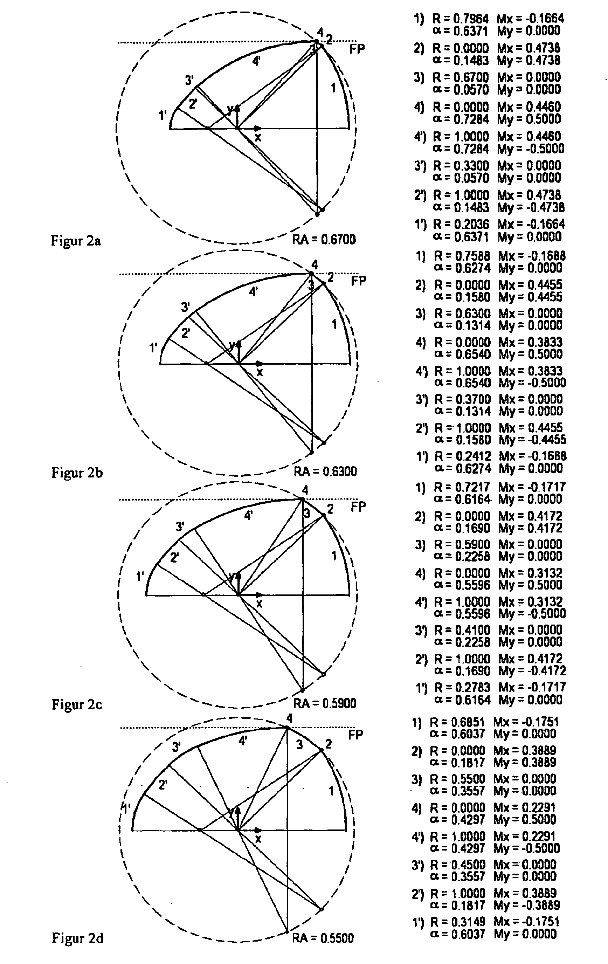

**Figur 2****:** Die Figuren 2a bis 2d zeigen jeweils die Hälfte eines bevorzugten Schneckenprofils eines erfindungsgemäß verwendeten Schneckenelements, welches aus jeweils 8 Kreisbögen aufgebaut ist. In den Figuren 2a bis 2d variiert der dimensionslosen Schneckenaußenradius im Bereich von RA = 0,55 bis RA = 0,67. In den Figuren 2a bis 2d variiert die dimensionslose Gangtiefe im Bereich von H = 0,10 bis H = 0,34. Die weiteren geometrischen Größen, die die Schneckenprofile exakt beschreiben, können aus den Figuren entnommen werden. Charakteristisch für die Schneckenprofile in den Figuren 2a bis 2d ist, dass der Abdichtungsbereich die Kreisbögen 1 bis 4 umfasst, wobei der Flankenbereich den Kreisbogen 1 und der Kammbereich die Kreisbögen 2 bis 4 umfasst, wobei der dimensionslose Radius der Kreisbögen 2 und 4 jeweils gleich 0 und der dimensionslose Radius des Kreisbogens 3 gleich dem dimensionslosen Schneckenaußenradius RA ist und wobei die Kreisbögen des Kammbereichs vollständig auf dem dimensionslosen Schneckenaußenradius RA liegen und damit eine linienförmige Abdichtung des Zwickelbereichs vorliegt. Ferner ist für diese Schneckenprofile charakteristisch, dass der Übergangsbereich den Kreisbogen 4' umfasst, dessen dimensionsloser Radius gleich dem dimensionslosen Achsabstand A ist. Ferner sind diese Schneckenprofile dadurch gekennzeichnet, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 2' gleich dem dimensionslosen Achsabstand A und der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 2a bis 2d sind die Abdichtungsbereiche dadurch gekennzeichnet, dass die Schneckenprofile jeweils beim Übergang vom Flankenbereich auf den Kammbereich einen Knick aufweisen. Ferner sind die Schneckenprofile dieser Figuren dadurch charakterisiert, dass der Übergang vom Abdichtungsbereich zum Übergangsbereich jeweils einen Knick aufweist. Den kleinsten dimensionslosen Abstand des Flankenbereichs des Kanalbereichs zum dimensionslosen Schneckenaußenradius RA weist Figur 2d auf. In der Figur 2d beträgt der besagte Abstand 0,06 und ist damit größer als die halbe dimensionslose Gangtiefe H / 2 = 0,05.

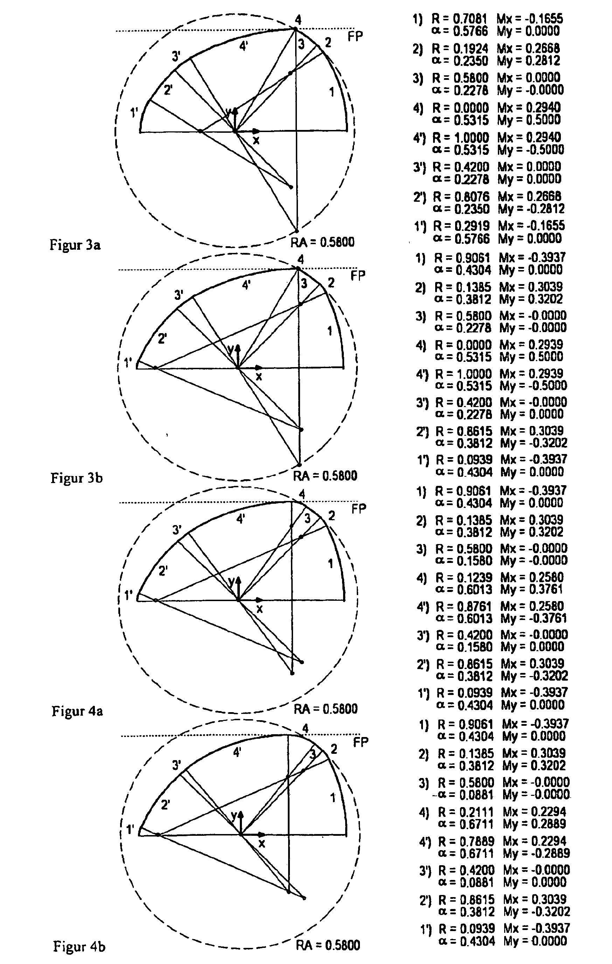

**Figur 3****:** Die Figuren 3a und 3b zeigen jeweils die Hälfte eines bevorzugten Schneckenprofils eines erfindungsgemäß verwendeten Schneckenelements, welches aus jeweils 8 Kreisbögen aufgebaut ist. In den Figuren 3a und 3b beträgt der dimensionslose Schneckenaußenradius jeweils RA = 0,58. In den Figuren 3a bis 3d beträgt die dimensionslose Gangtiefe jeweils H = 0,16. Die weiteren geometrischen Größen, die die Schneckenprofile exakt beschreiben, können aus den Figuren entnommen werden. Charakteristisch für die Schneckenprofile in den Figuren 3a und 3b ist, dass der Abdichtungsbereich die Kreisbögen 1 bis 4 umfasst, wobei der Flankenbereich die Kreisbögen 1 und 2 und der Kammbereich die Kreisbögen 3 und 4 umfasst, wobei der dimensionslose Radius des Kreisbogens 3 gleich dem dimensionslosen Schneckenaußenradius RA und der dimensionslose Radius des Kreisbogens 4 gleich 0 ist und wobei die Kreisbögen des Kammbereichs vollständig auf dem dimensionslosen Schneckenaußenradius RA liegen und damit eine linienförmige Abdichtung des Zwickelbereichs vorliegt. Ferner ist für diese Schneckenprofile charakteristisch, dass der Übergangsbereich den Kreisbogen 4' umfasst, dessen dimensionsloser Radius gleich dem dimensionslosen Achsabstand A ist. Ferner sind diese Schneckenprofile dadurch gekennzeichnet, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 3a und 3b sind die Abdichtungsbereiche dadurch gekennzeichnet, dass die Schneckenprofile jeweils beim Übergang vom Flankenbereich auf den Kammbereich keinen Knick aufweisen. Ferner sind die Schneckenprofile dieser Figuren dadurch charakterisiert, dass der Übergang vom Abdichtungsbereich zum Übergangsbereich jeweils einen Knick aufweist. Den kleinsten dimensionslosen Abstand des Flankenbereichs des Kanalbereichs zum dimensionslosen Schneckenaußenradius RA weist Figur 3b auf. In der Figur 3b beträgt der besagte Abstand 0,0924 und ist damit größer als die halbe dimensionslose Gangtiefe H/2=0,08.

**Figur 4****:** Die Figuren 4a und 4b zeigen jeweils die Hälfte eines bevorzugten Schneckenprofils eines erfindungsgemäß verwendeten Schneckenelements, welches aus jeweils 8 Kreisbögen aufgebaut ist. In den Figuren 4a und 4b beträgt der dimensionslose Schneckenaußenradius jeweils RA = 0,58. In den Figuren 4a bis 4b beträgt die dimensionslose Gangtiefe jeweils H = 0,16. Die weiteren geometrischen Größen, die die Schneckenprofile exakt beschreiben, können aus den Figuren entnommen werden. Charakteristisch für die Schneckenprofile in den Figuren 4a und 4b ist, dass der Abdichtungsbereich die Kreisbögen 1 bis 3 umfasst, wobei der Flankenbereich die Kreisbögen 1 und 2 und der Kammbereich den Kreisbogen 3 umfasst, wobei der dimensionslose Radius des Kreisbogens 3 gleich dem dimensionslosen Schneckenaußenradius RA ist und wobei der Kreisbogen des Kammbereichs vollständig auf dem dimensionslosen Schneckenaußenradius RA liegt und damit eine linienförmige Abdichtung des Zwickelbereichs vorliegt. Ferner ist für diese Schneckenprofile charakteristisch, dass der Übergangsbereich die Kreisbögen 4 und 4' umfasst. Ferner sind diese Schneckenprofile dadurch gekennzeichnet, dass der Kanalbereich die Kreisbögen 1' bis 3' umfasst, wobei der Flankenbereich die Kreisbögen 1' und 2' und der Nutbereich den Kreisbogen 3' umfasst, wobei der dimensionslose Radius des Kreisbogens 3' gleich dem dimensionslosen Kernradius RI ist und wobei der Kreisbogen des Nutbereichs vollständig auf dem dimensionslosen Kernradius RI liegt. In den Figuren 4a und 4b sind die Abdichtungsbereiche dadurch gekennzeichnet, dass die Schneckenprofile jeweils beim Übergang vom Flankenbereich auf den Kammbereich keinen Knick aufweisen. Ferner sind die Schneckenprofile dieser Figuren dadurch charakterisiert, dass der Übergang vom Abdichtungsbereich zum Übergangsbereich jeweils keinen Knick aufweist. Der kleinste dimensionslose Abstand des Flankenbereichs des Kanalbereichs zum dimensionslosen Schneckenaußenradius RA ist in den Figuren 4a und 4b gleich groß. Der besagte Abstand beträgt 0,0924 und ist damit größer als die halbe dimensionslose Gangtiefe H/2=0,08.

Neben den in den Figuren 3a, 3b, 4a und 4b gezeigten Schneckenprofilen, können, wie dem Fachmann bewusst ist, Schneckenprofile gebildet werden, bei denen der Radius des Kreisbogens 2 gleich 0 und der Radius des Kreisbogens 4 größer 0 ist. Dadurch werden Schneckenprofile erhalten, die dadurch gekennzeichnet sind, dass der Abdichtungsbereich eines Schneckenprofils beim Übergang von Flankenbereich auf den Kammbereich einen Knick aufweist und der Übergang vom Abdichtungsbereich zum Übergangsbereich eines Schneckenprofils keinen Knick aufweist.

Die Figuren 1 bis 4 zeigen Schneckenprofile von Schneckenelementen mit einer linienförmigen Abdichtung des Zwickelbereichs. Wie aus den Figuren ersichtlich ist, kann die Länge der linienförmigen Abdichtung durch Wahl der Parameter der Kreisbögen eingestellt werden. Ferner ist es möglich, den Übergang zwischen Kamm- und Flankenbereich beziehungsweise zwischen dem Abdichtungs- und dem Übergangsbereich mit oder ohne Knick im Schneckenprofil zu gestalten.

In den nachfolgenden Figuren werden Schneckenprofile von Schneckenelementen mit einer punktförmigen Abdichtung des Zwickelbereichs sein. Es ist auch hier möglich, den Übergang zwischen Kamm- und Flankenbereich beziehungsweise zwischen dem Abdichtungs- und dem Übergangsbereich mit oder ohne Knick im Schneckenprofil zu gestalten.

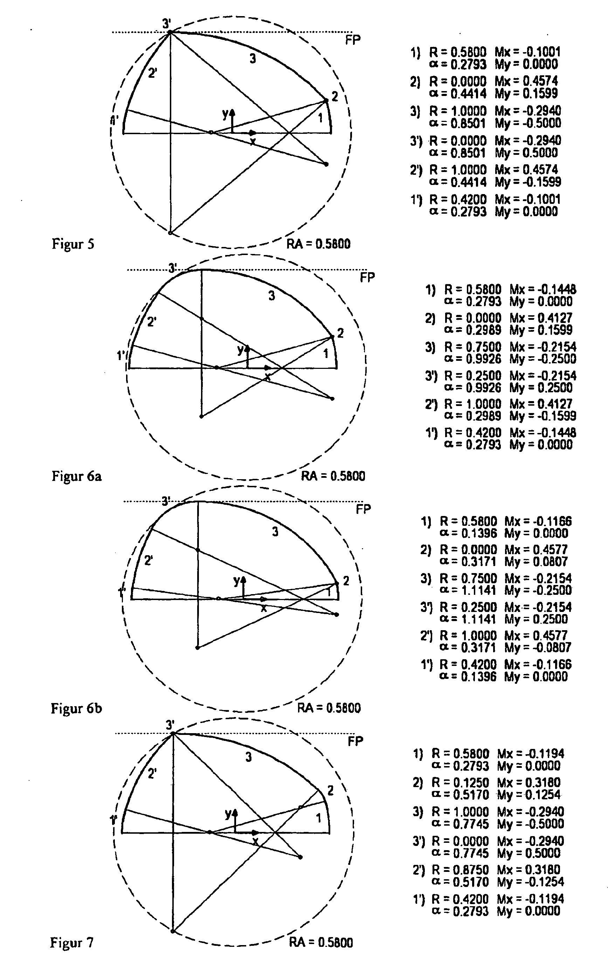

**Figur 5****:** Die Figur 5 zeigt die Hälfte eines bevorzugten Schneckenprofils eines erfindungsgemäß verwendeten Schneckenelements, welches aus 6 Kreisbögen aufgebaut ist. In der Figur 5 beträgt der dimensionslose Schneckenaußenradius RA = 0,58. In der Figur 5 beträgt die dimensionslose Gangtiefe H=0,16. Die weiteren geometrischen Größen, die das Schneckenprofil exakt beschreiben, können aus der Figur entnommen werden. Das Schneckenprofil ist identisch mit dem in Figur 25 gezeigten. Der Radius des Kreisbogens 3' ist gleich 0. Der Kreisbogen 3' liegt auf dem Schneckenaußenradius RA und bildet den Kammbereich des Abdichtungsbereichs. Es liegt eine punktförmige Abdichtung des Zwickelbereichs vor, wobei das Schneckenprofil am Punkt der Abdichtung einen Knick aufweist. Der Kanalbereich ist dadurch gekennzeichnet, dass der Radius des Kreisbogens 2 gleich 0 ist. Das Schneckenprofil weist daher an dieser Stelle einen Knick auf. In Figur 5 ist der minimale dimensionslose Abstand des Flankenbereichs des Kanalbereichs zum Schneckenaußenradius RA mit 0,1001 größer als die halbe dimensionslose Gangtiefe H / 2= 0,08.

**Figur 6****:** Die Figuren 6a bis 6b zeigen jeweils die Hälfte eines bevorzugten Schneckenprofils eines erfindungsgemäß verwendeten Schneckenelements, welches aus jeweils 6 Kreisbögen aufgebaut ist. Der dimensionslose Schneckenaußenradius beträgt RA = 0,58. In den Figuren 6a und 6b beträgt die dimensionslose Gangtiefe jeweils H = 0,16. Die weiteren geometrischen Größen, die die Schneckenprofile exakt beschreiben, können aus den Figuren entnommen werden. Der Radius des Kreisbogens 3' ist in beiden Figuren gleich 0,25. Charakteristisch für die Schneckenprofile in den Figuren 6a und 6b ist, dass der Kreisbogen 3' den Schneckenradius RA in einem Punkt tangiert. Der Tangierpunkt bildet den Kammbereich des Abdichtungsbereichs. Es liegt eine punktförmige Abdichtung des Zwickelbereichs vor, wobei das Schneckenprofil am Punkt der Abdichtung keinen Knick aufweist. Der Tangierpunkt teilt den Kreisbogen 3' in zwei Teile. Ein Teil gehört mit den Kreisbögen 1' und 2' zum Abdichtungsbereich. Der andere Teil gehört mit einem Teil des Kreisbogens 3 zum Übergangsbereich. Der Kanalbereich ist dadurch gekennzeichnet, dass der Radius des Kreisbogens 2 gleich 0 ist. Das Schneckenprofil weist daher an dieser Stelle einen Knick auf. In den Figuren 6a und 6b ist der minimale dimensionslose Abstand des Flankenbereichs des Kanalbereichs zum Schneckenaußenradius RA mit 0,1448 beziehungsweise 0,1166 größer als die halbe dimensionslose Gangtiefe H / 2 = 0,08.

**Figur 7****:** Die Figur 7 zeigt die Hälfte eines bevorzugten Schneckenprofils eines erfindungsgemäß verwendeten Schneckenelements, welches aus 6 Kreisbögen aufgebaut ist. Der dimensionslose Schneckenaußenradius beträgt RA = 0,58. In der Figur 7 beträgt die dimensionslose Gangtiefe H = 0,16. Die weiteren geometrischen Größen, die das Schneckenprofil exakt beschreiben, können aus der Figur entnommen werden. Die Abdichtung des Zwickelbereichs erfolgt wie in Figur 5 über den Kreisbogen 3'. Im Vergleich zur Figur 5 ist der Kanalbereich in Figur 7 dadurch gekennzeichnet, dass der Radius des Kreisbogens 2 größer als 0 ist. Das Schneckenprofil weist daher an dieser Stelle keinen Knick auf. In Figur 7 ist der minimale dimensionslose Abstand des Flankenbereichs des Kanalbereichs zum Schneckenaußenradius RA mit 0,1194 größer als die halbe dimensionslose Gangtiefe H / 2 = 0,08.

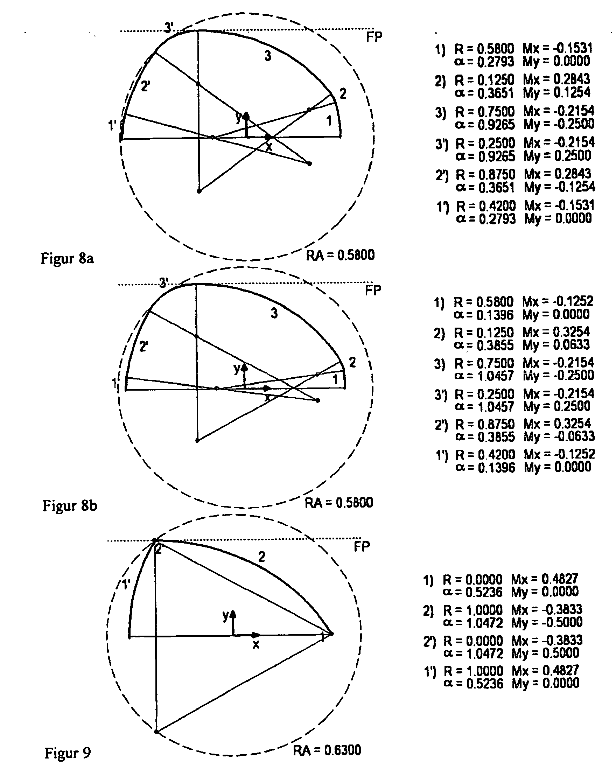

**Figur 8****:** Die Figuren 8a bis 8b zeigen jeweils die Hälfte eines bevorzugten Schneckenprofils eines erfindungsgemäß verwendeten Schneckenelements, welches aus jeweils 6 Kreisbögen aufgebaut ist. Der dimensionslose Schneckenaußenradius beträgt RA = 0,58. In den Figuren 8a und 8b beträgt die dimensionslose Gangtiefe jeweils H = 0,16. Die weiteren geometrischen Größen, die die Schneckenprofile exakt beschreiben, können aus den Figuren entnommen werden. Die Abdichtung des Zwickelbereichs erfolgt wie in Figur 6 über den Kreisbogen 3', welcher den Schneckenaußenradius RA an einem Punkt tangiert. Im Vergleich zur Figur 6 ist der Kanalbereich in Figur 8 dadurch gekennzeichnet, dass der Radius des Kreisbogens 2 größer als 0 ist. Das Schneckenprofil weist daher an dieser Stelle keinen Knick auf. In den Figuren 8a und 8b ist der minimale dimensionslose Abstand des Flankenbereichs des Kanalbereichs zum Schneckenaußenradius RA mit 0,1531 beziehungsweise 0,1252 größer als die halbe dimensionslose Gangtiefe H / 2 = 0,08.

**Figur 9****:** Die Figur 9 zeigt die Hälfte eines bevorzugten Schneckenprofils eines erfindungsgemäß verwendeten Schneckenelements, welches aus 4 Kreisbögen aufgebaut ist. Der dimensionslose Schneckenaußenradius beträgt RA = 0,63. In der Figur 9 beträgt die dimensionslose Gangtiefe H = 0,26. Die weiteren geometrischen Größen, die das Schneckenprofil exakt beschreiben, können aus der Figur entnommen werden. Der Radius des Kreisbogens 2' ist gleich 0. Der Kreisbogen 2' liegt auf dem Schneckenaußenradius RA und bildet den Kammbereich des Abdichtungsbereichs. Es liegt eine punktförmige Abdichtung des Zwickelbereichs vor, wobei das Schneckenprofil am Punkt der Abdichtung einen Knick aufweist. Der Kanalbereich ist dadurch gekennzeichnet, dass der Radius des Kreisbogens 1 gleich 0 ist. Das Schneckenprofil weist daher an dieser Stelle einen Knick auf. In Figur 9 ist der minimale dimensionslose Abstand des Flankenbereichs des Kanalbereichs zum Schneckenaußenradius RA mit 0,1473 größer als die halbe dimensionslose Gangtiefe H/2=0,13.

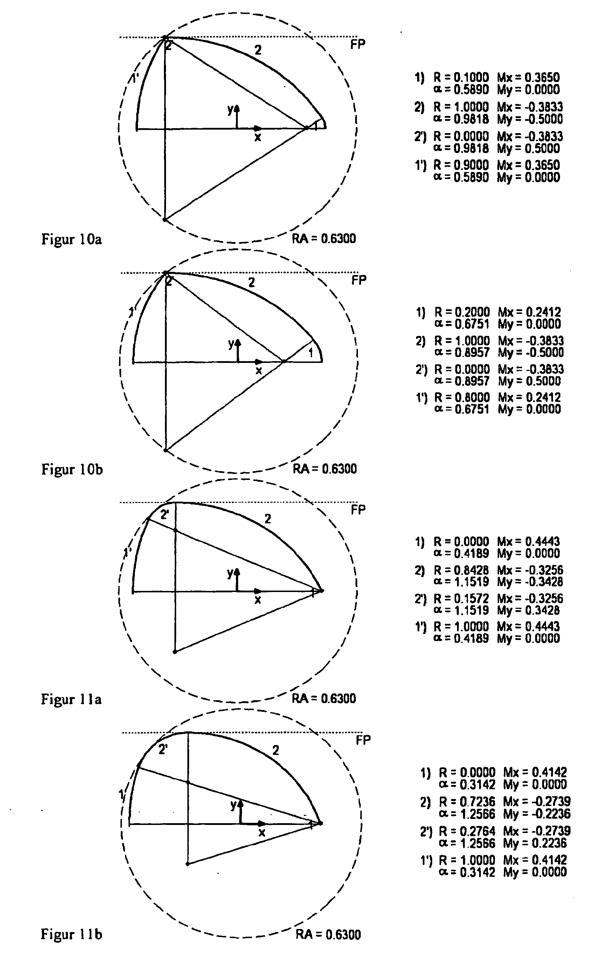

**Figur 10****:** Die Figuren 10a bis 10b zeigen jeweils die Hälfte eines bevorzugten Schneckenprofils eines erfindungsgemäßen Schneckenelements, welches aus jeweils 4 Kreisbögen aufgebaut ist. Der dimensionslose Schneckenaußenradius beträgt RA = 0,63. In den Figuren 10a und 10b beträgt die dimensionslose Gangtiefe jeweils H = 0,26. Die weiteren geometrischen Größen, die die Schneckenprofile exakt beschreiben, können aus den Figuren entnommen werden. Die Abdichtung des Zwickelbereichs erfolgt wie in Figur 9 über den Kreisbogen 2'. Im Vergleich zur Figur 9 ist der Kanalbereich in Figur 10 dadurch gekennzeichnet, dass der Radius des Kreisbogens 1 größer als 0 ist. Das Schneckenprofil weist daher an dieser Stelle keinen Knick auf. In, den Figuren 10a und 10b ist der minimale dimensionslose Abstand des Flankenbereichs des Kanalbereichs zum Schneckenaußenradius RA mit 0,1650 beziehungsweise 0,1888 größer als die halbe dimensionslose GangtiefeH/2=0,13.

**Figur 11****:** Die Figuren 11a bis 11b zeigen jeweils die Hälfte eines bevorzugten Schneckenprofils eines erfindungsgemäß verwendeten Schneckenelements, welches aus jeweils 4 Kreisbögen aufgebaut ist. Der dimensionslose Schneckenaußenradius beträgt RA = 0,63. In den Figuren 11a und 11b beträgt die dimensionslose Gangtiefe jeweils H = 0,26. Die weiteren geometrischen Größen, die die Schneckenprofile exakt beschreiben, können aus den Figuren entnommen werden. Der Radius des Kreisbogens 2' ist in den Figuren 11a und 11b gleich 0,1572 bzw. 0,2764. Charakteristisch für die Schneckenprofile in den Figuren 11a und 11b ist, dass der Kreisbogen 2' den Schneckenradius RA in einem Punkt tangiert. Der Tangierpunkt bildet den Kammbereich des Abdichtungsbereichs. Es liegt eine punktförmige Abdichtung des Zwickelbereichs vor, wobei das Schneckenprofil am Punkt der Abdichtung keinen Knick aufweist. Der Tangierpunkt teilt den Kreisbogen 2' in zwei Teile. Ein Teil gehört mit dem Kreisbögen 1' zum Abdichtungsbereich. Der andere Teil gehört mit einem Teil des Kreisbogens 2 zum Übergangsbereich. Der Kanalbereich ist dadurch gekennzeichnet, dass der Radius des Kreisbogens 1 gleich 0 ist. Das Schneckenprofil weist daher an dieser Stelle einen Knick auf. In den Figuren 11a und 11b ist der minimale dimensionslose Abstand des Flankenbereichs des Kanalbereichs zum Schneckenaußenradius RA mit 0,1857 beziehungsweise 0,2158 größer als die halbe dimensionslose Gangtiefe H / 2 = 0,13.

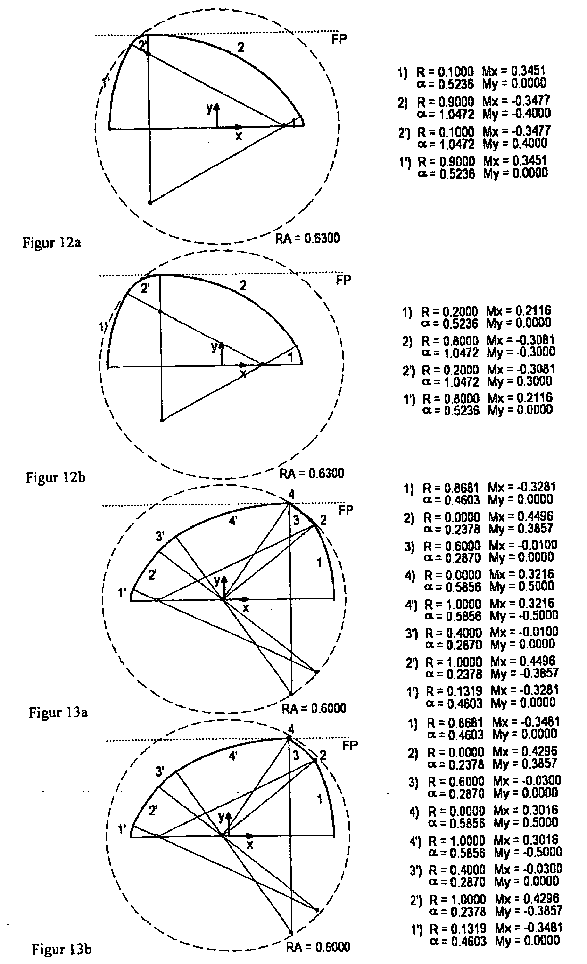

**Figur 12****:** Die Figuren 12a bis 12b zeigen jeweils die Hälfte eines bevorzugten Schneckenprofils eines erfindungsgemäß verwendeten Schneckenelements, welches aus jeweils 4 Kreisbögen aufgebaut ist. Der dimensionslose Schneckenaußenradius beträgt RA = 0,63. In den Figuren 12a und 12b beträgt die dimensionslose Gangtiefe jeweils H = 0,26. Die weiteren geometrischen Größen, die die Schneckenprofile exakt beschreiben, können aus den Figuren entnommen werden. Die Abdichtung des Zwickelbereichs erfolgt wie in Figur 11 über den Kreisbogen 2', welcher den Schneckenaußenradius RA an einem Punkt tangiert. Im Vergleich zur Figur 11 ist der Kanalbereich in Figur 12 dadurch gekennzeichnet, dass der Radius des Kreisbogens 1 größer als 0 ist. Das Schneckenprofil weist daher an dieser Stelle keinen Knick auf. In den Figuren 12a und 12b ist der minimale dimensionslose Abstand des Flankenbereichs des Kanalbereichs zum Schneckenaußenradius RA mit 0,1849 beziehungsweise 0,2184 größer als die halbe dimensionslose Gangtiefe H / 2 = 0,13. Den Tangierpunkt des Kreisbogens 2' mit dem Schneckenaußenradius RA erhält man, in dem man den Schnittpunkt einer Gerade, die durch den Koordinatenursprung und den Mittelpunkt des Kreisbogens 2' führt, mit dem besagten Kreisbogen 2' berechnet. Den Tangierpunkt des Kreisbogens 2 mit dem Schneckenkernradius RI erhält man, in dem man den Schnittpunkt einer Gerade, die durch den Koordinatenursprung und den Mittelpunkt des Kreisbogens 2 führt, mit dem besagten Kreisbogen 2 berechnet.

In den Figuren 1 bis 4 liegt eine linienförmige Abdichtung des Zwickelbereichs vor. In den Figuren 5 bis 12 liegt eine punktförmige Abdichtung des Zwickelbereichs vor, wobei das Schneckenprofil in den Figuren 5, 7, 9 und 10 einen Knick besitzt und in den Figuren 6, 8, 11 und 12 keinen Knick besitzt. Wie der Fachmann erkennt, ist es mit den erfindungsgemäß verwendeten Schneckenprofilen somit möglich, die thermische und mechanische Beanspruchung der zu bearbeitenden viskosen Fluide gezielt an Be- und Verarbeitungserfordemisse anzupassen.

In den Figuren 1 bis 12 werden Hälften von Schneckenprofilen eines erfindungsgemäß verwendeten Schneckenelements bestehend aus maximal 8 Kreisbögen gezeigt. Die Erfindung ist jedoch keinesfalls auf 8 Kreisbögen beschränkt. Vielmehr können beliebig viele Kreisbögen zur Erzeugung von erfindungsgemäß verwendeten Schneckenprofilen herangezogen werden.

**Figur 13****:** Alle eingängigen Schneckenprofile können längs der x-Achse in einem gewissen Umfang in positiver oder negativer x-Richtung verschoben werden, ohne ihre Selbstreinigung zu verlieren, da durch die Verschiebung längs der x-Achse weiterhin die Bedingung erfüllt bleibt, die Gerade FP in einem Punkt zu berühren. Die Figur 13 zeigt derartige Verschiebungen. Die Figuren 13a bis 13b zeigen jeweils die Hälfte eines bevorzugten Schneckenprofils eines erfindungsgemäß verwendeten Schneckenelements, welches aus jeweils 8 Kreisbögen aufgebaut ist. Der dimensionslose Schneckenaußenradius des unverschobenen Schneckenprofils beträgt RA = 0,6. In den Figuren 13a und 13b beträgt die dimensionslose Gangtiefe des unverschobenen Schneckenprofils jeweils H = 0,2. Die weiteren geometrischen Größen, die die Schneckenprofile exakt beschreiben, können aus den Figuren entnommen werden. In den Figuren 13a und 13b ist das gesamte Schneckenprofil um eine Strecke des 0,01- beziehungsweise 0,03-fachen Achsabstands nach links verschoben. Man erkennt, dass die Radien und Winkel der einzelnen Kreisbögen durch das Verschieben nicht verändert werden. Der Grad der linienförmigen Abdichtung des Zwickel bereichs durch den Kreisbogen 3 wird dadurch einstellbar. Allgemein ist durch das Verschieben des Schneckenprofils eines erfindungsgemäß verwendeten Schneckenelements der Grad einer linien- oder punktförmigen Abdichtung des Zwickelbereichs einstellbar. Insbesondere kann dadurch die mechanische und thermische Beanspruchung des viskosen Fluids im Bereich der Abdichtung gezielt eingestellt werden. Ein Schneckenprofil eines erfindungsgemäß verwendeten Schneckenelements wird bevorzugt um eine Strecke des 0- bis 0,05-fachen Achsabstandes, besonders bevorzugt um eine Strecke des 0- bis 0,025-fachen Achsabstandes verschoben.

Ein in x-Richtung verschobenes Schneckenprofil kann in einem zweiten Schritt in positiver oder negativer y-Richtung verschoben werden, ohne das dadurch die Selbstreinigung der Schneckenprofile verloren geht. Dadurch kommt es zu einer asymmetrischen Abdichtung des Zwickelbereichs. Beispielsweise kann der Grad der Abdichtung des Zwickelbereichs in den Kammbereichen abhängig von der Drehrichtung der Schneckenelemente erfolgen. Der maximale Abstand der Kammbereiche des Abdichtungsbereichs der Schneckenprofile vom Gehäuse liegt bevorzugt im Bereich des 0- bis 0,05-fachen Achsabstandes, besonders bevorzugt im Bereich des 0- bis 0,025-fachen Achsabstandes.

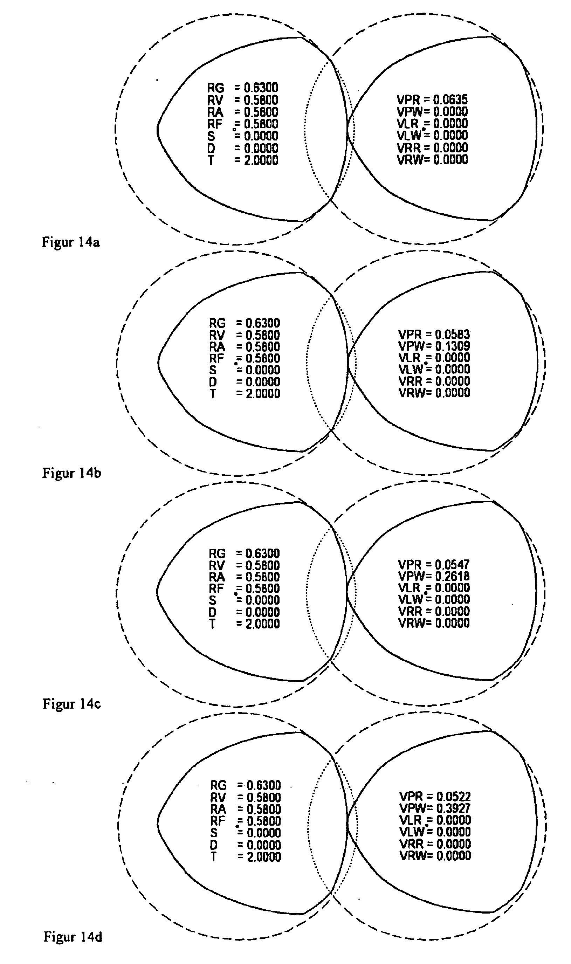

Die Figuren 14 bis 16 zeigen das erzeugende und das erzeugte Schneckenprofil innerhalb eines achtförmigen Schneckengehäuses. Innerhalb der beiden Schneckenprofile befinden sich Zahlenwertangaben zu folgenden Schneckengrößen:
- RG: Radius der beiden Gehäusebohrungen
- RV: Virtueller Gehäuseradius, der kleiner gleich dem Gehäuseradius RG ist
- RA: Schneckenaußenradius der dicht kämmenden, selbstreinigenden Schneckenprofile
- RF: Schneckenaußenradius der zu fertigenden Schneckenprofile
- S: Spiel zwischen den beiden zu fertigenden Schneckenprofilen
- D: Spiel zwischen den zu fertigenden Schneckenprofilen und dem Gehäuse
- T: Steigung eines Förder-, Misch- oder Übergangselements
- VPR: Größe der Verschiebung der ebenen, dicht kämmenden, selbstreinigenden Schneckenprofile, falls diese exzentrisch angeordnet werden
- VPW: Winkel der Verschiebung (Richtungsangabe) der ebenen, dicht kämmenden, selbstreinigenden Schneckenprofile, falls diese exzentrisch angeordnet werden
- VLR: Größe der Verschiebung des zu fertigenden Schneckenprofils der linken Welle innerhalb der Spiele
- VLW: Winkel der Verschiebung des zu fertigenden Schneckenprofils der linken Welle innerhalb der Spiele
- VRR: Größe der Verschiebung des zu fertigenden Schneckenprofils der rechten Welle innerhalb der Spiele
- VRW: Winkel der Verschiebung des zu fertigenden Schneckenprofils der rechten Welle innerhalb der Spiele

Das Schneckengehäuse, welches sich aus zwei gegenseitig durchdringenden Bohrungen mit jeweils dem Radius RG und dem Abstand A = 1 ergibt, wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis gekennzeichnet. Die dicht kämmenden, selbstreinigenden Schneckenprofile werden durch eine dicke, durchgezogene Linie gekennzeichnet. Die Schneckenprofile in der Fertigung werden durch eine dünne, durchgezogene Linie dargestellt.

Dem Fachmann ist bekannt, dass zwischen dem Schneckenaußenradius RA des dicht kämmenden, selbstreinigenden Schneckenprofils, dem virtuellen Gehäuseradius RV, dem Spiel S zwischen den beiden zu fertigenden Schneckenprofilen und dem Spiel D zwischen den zu fertigenden Schneckenprofilen und dem Schneckengehäuse folgender Zusammenhang gilt: RA = RV - D + S/2.

Dem Fachmann ist ferner bekannt, dass zwischen dem Schneckenaußenradius RF des zu fertigenden Schneckenprofils, dem virtuellen Gehäuseradius RV und dem Spiel D zwischen den zu fertigenden Schneckenprofilen und dem Schneckengehäuse folgender Zusammenhang gilt: RF = RV - D.

Typischerweise ist der virtuelle Gehäuseradius RV gleich dem ausgeruhrten Gehäuseradius RG. Wird der virtuelle Gehäuseradius RV kleiner als der Gehäuseradius RG gewählt, so ergibt sich zwischen den Schneckenprofilen und dem Gehäuse ein zusätzliches Spiel. Dieses Spiel kann dazu genutzt werden, das erzeugende und das erzeugte Schneckenprofil unter Beibehaltung der Selbstreinigung exzentrisch zu verschieben. Die Exzentrizität ist durch Angabe der Größe der Verschiebung VPR und der Richtung der Verschiebung in Form eines Winkels VPW eindeutig charakterisiert.

**Figur 14****:** Die Figuren 14a bis 14d zeigen bevorzugte Ausführungsformen einer exzentrischen Positionierung der Schneckenprofile erfindungsgemäßer Schneckenelemente. Die geometrischen Kenngrößen können den einzelnen Figuren entnommen werden. Exzentrisch positionierte, eingängige, dicht kämmende, selbstreinigende Schneckenprofile sind dadurch charakterisiert, dass der Abstand der Schneckenprofile zum Gehäuse unabhängig von der Richtung der Verschiebung für die linke und rechte Welle gleich groß ist. Die Schneckenprofile in der Figur 14a sind soweit längs der Verbindungslinie der beiden Drehpunkte der Schneckenprofile verschoben, dass jeweils ein Punkt der Kammbereiche des Abdichtungsbereichs der Schneckenprofile das Gehäuse berührt, so dass eine Abdichtung des Zwickelbereichs erreicht wird. Die Schneckenprofile in den Figuren 14b bis 14d sind jeweils soweit verschoben, dass lediglich ein Punkt eines Kammbereichs des Abdichtungsbereichs der Schneckenprofile das Gehäuse berührt. Die Größe der dazu notwendigen Verschiebung hängt von der Richtung der Verschiebung ab. Es können ferner exzentrische Positionierungen der Schneckenprofile gewählt werden, bei dem kein Punkt der Kammbereiche des Abdichtungsbereichs der Schneckenprofile das Gehäuse berührt. Allgemein ist durch das exzentrische Positionieren des Schneckenprofils eines erfindungsgemäß verwendeten Schneckenelements der Grad einer linien- oder punktförmigen Abdichtung des Zwickelbereichs einstellbar. Insbesondere kann dadurch die mechanische und thermische Beanspruchung des viskosen Fluids im Bereich der Abdichtung gezielt eingestellt werden. Insbesondere kann der Grad der Abdichtung des Zwickelbereichs in den Kammbereichen abhängig von der Drehrichtung der Schneckenelemente angepasst werden. Der maximale Abstand der Kammbereiche des Abdichtungsbereichs der Schneckenprofile vom Gehäuse liegt bevorzugt im Bereich des 0- bis 0,05-fachen Achsabstandes, besonders bevorzugt im Bereich des 0- bis 0,025-fachen Achsabstandes.

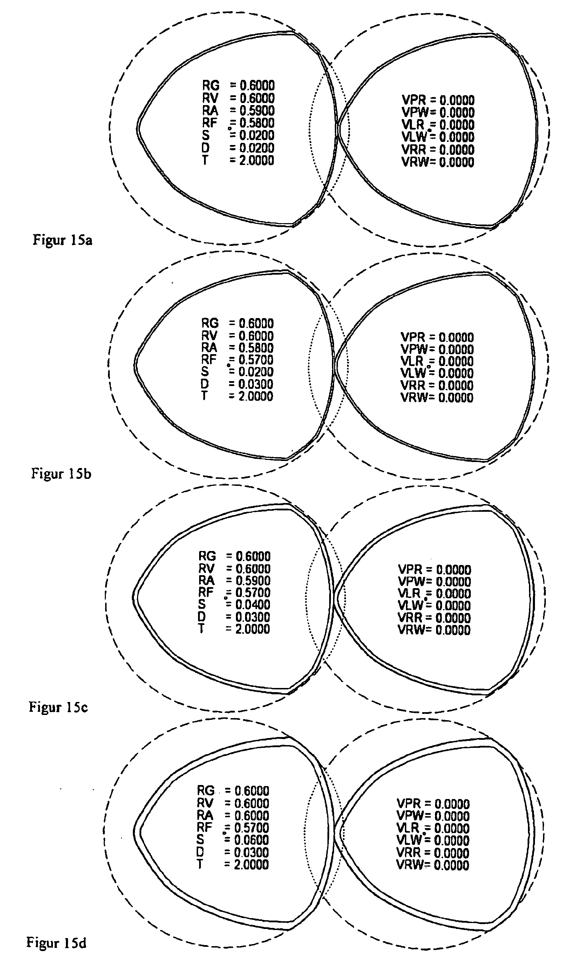

**Figur 15****:** Wie dem Fachmann bekannt ist, benötigen alle Schneckenelemente in der Praxis ein gewisses Spiel und zwar sowohl untereinander als auch gegenüber dem Gehäuse. Die Figuren 15a bis 15d zeigen verschiedene Spielstrategien. Die geometrischen Kenngrößen können den einzelnen Figuren entnommen werden. In Figur 15a wird eine Spielstrategie gezeigt, bei der das Spiel zwischen den zu fertigenden Schneckenprofilen und zwischen den zu fertigenden Schneckenprofilen und dem Gehäuse gleich groß ist. In Figur 15b wird eine Spielstrategie gezeigt, bei der das Spiel zwischen den zu fertigenden Schneckenprofilen kleiner ist als das Spiel zwischen den zu fertigenden Schneckenprofilen und dem Gehäuse. In Figur 15c wird eine Spielstrategie gezeigt, bei der das Spiel zwischen den zu fertigenden Schneckenprofilen größer ist als das Spiel zwischen den zu fertigenden Schneckenprofilen und dem Gehäuse. In Figur 15d wird eine weitere Ausführungsform nach Figur 15c mit besonders großen Spielen gezeigt. Typische, in der Praxis vorkommende Spiele liegen für das Spiel zwischen den zu fertigenden Schneckenprofilen im Bereich 0,002 bis 0,1. Typische, in der Praxis vorkommende Spiele liegen für das Spiel zwischen den zufertigenden Schneckenprofilen und dem Gehäuse im Bereich 0,002 bis 0,1. Typische, in der Praxis vorkommende Spiele sind über den Umfang des Schneckenprofils konstant. Es ist jedoch zulässig, sowohl das Spiel zwischen den zu fertigenden Schneckenprofilen als auch das Spiel zwischen den zu fertigenden Schneckenprofilen und dem Gehäuse über den Umfang der Schneckenprofile zu variieren.

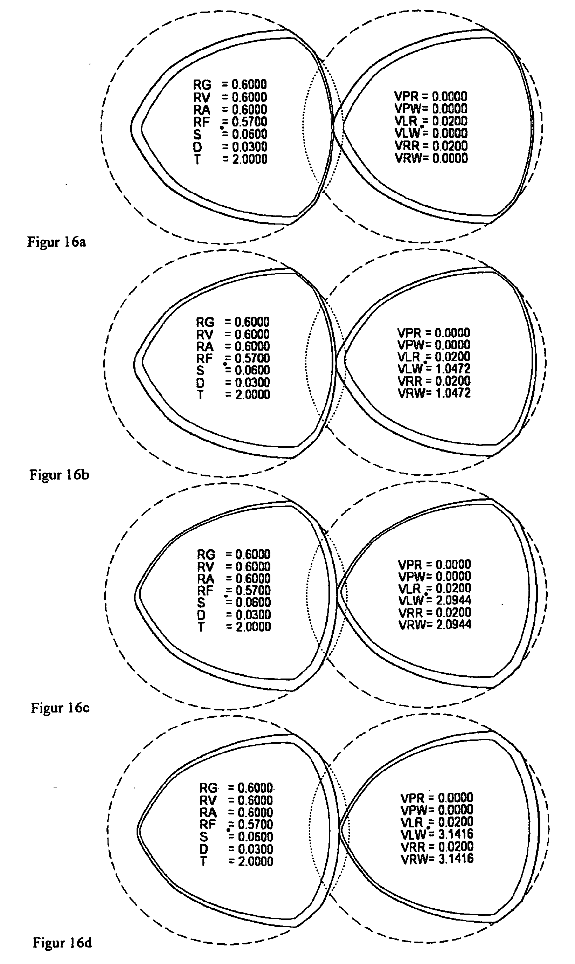

**Figur 16****:** Weiterhin ist es möglich, die zu fertigenden Schneckenprofile innerhalb der Spiele zu verschieben. Die Figuren 16a bis 16d zeigen eine Auswahl möglicher Verschiebungen. Die geometrischen Kenngrößen können den einzelnen Figuren entnommen werden. In den Figuren 16a bis 16d beträgt die Größe der Verschiebung für jeweils beide zu fertigenden Schneckenprofile VLR= VRR= 0,02. In den Figuren 16a bis 16d wird die Richtung der Verschiebung für jeweils beide zu fertigende Schneckenprofile zwischen VLW = VRW = 0 und VLW = VRW = π schrittweise variiert. Es ist zulässig, die beiden zu fertigenden Schneckenprofile unabhängig voneinander in verschiedene Richtungen und um verschiedene Größen zu verschieben. Hier bietet sich dem Fachmann eine weitere Möglichkeit, den Grad der Abdichtung des Zwickelbereichs durch die beiden Kammbereiche des Abdichtungsbereichs eines erfindungsgemäß verwendeten Schneckenprofils einzustellen. Insbesondere kann dadurch die mechanische und thermische Beanspruchung des viskosen Fluids im Bereich der Abdichtung gezielt eingestellt werden.

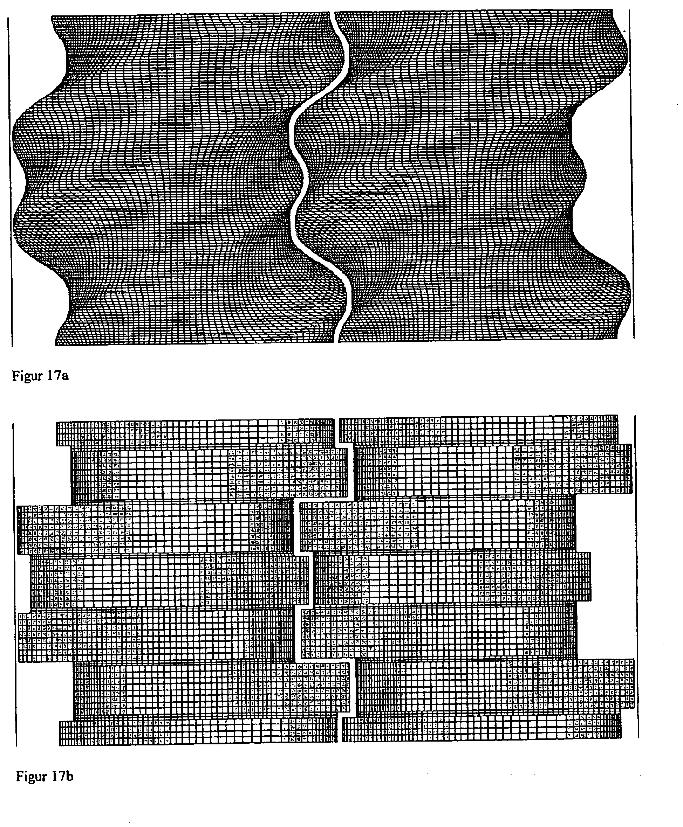

Die **Figur 17a** zeigt beispielhaft ein Paar eines erfindungsgemäß verwendeten eingängigen Förderelements, dessen Schneckenprofil analog zu den Figuren 1 und 2 aus 8 Kreisbögen aufgebaut ist. Der Gehäuseradius beträgt RG = 0,6. Das Spiel zwischen den beiden Förderelementen beträgt S = 0,02. Das Spiel zwischen den beiden Förderelementen und dem Gehäuse beträgt D = 0,01. Die Steigung der Förderelemente beträgt T = 1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudern verwendet werden kann.

Die **Figur 17b** zeigt beispielhaft ein Paar eines erfindungsgemäß verwendeten eingängigen Knetelements, dessen Schneckenprofil analog zu den Figuren 1 und 2 aus 8 Kreisbögen aufgebaut ist. Der Gehäuseradius beträgt RG = 0,6. Das Spiel zwischen den Knetscheiben der beiden Knetelemente beträgt S = 0,02. Das Spiel zwischen den Knetscheiben der beiden Knetelemente und dem Gehäuse beträgt D = 0,01. Das Knetelement besteht aus 7 Knetscheiben, die jeweils um einen Winkel von π/3 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

Die Figuren 1 bis 17 zeigen Schneckenprofile und Schneckenelemente, in denen der dimensionslose Schneckenaußenradius RA die Werte 0,55, 0,58, 0,59, 0,6, 0,63 und 0,67 hat. Die Schneckenprofile erfindungsgemäßer Schneckenelemente sind nicht auf diese diskreten Werte des dimensionslosen Schneckenaußenradius limitiert. Im erfindungsgemäßen Verfahren können erfindungsgemäße eingängige Schneckenprofile mit einem dimensionslosen Schneckenaußenradius im Bereich von RA = 0,51 und RA = 0,707, bevorzugt im Bereich von RA = 0,52 bis RA = 0,7 verwendet werden.

Überraschender Weise führen auch dreigängige Schneckenprofile, die im Wesentlichen in Richtung eines Nutbereichs eines dreigängigen Schneckenprofils exzentrisch positioniert sind, zu einer Abfolge von Abdichtungsbereich - Übergangsbereich - Kanalbereich - Übergangsbereich und damit zu erfindungsgemäß verwendeten Schneckenelementen.

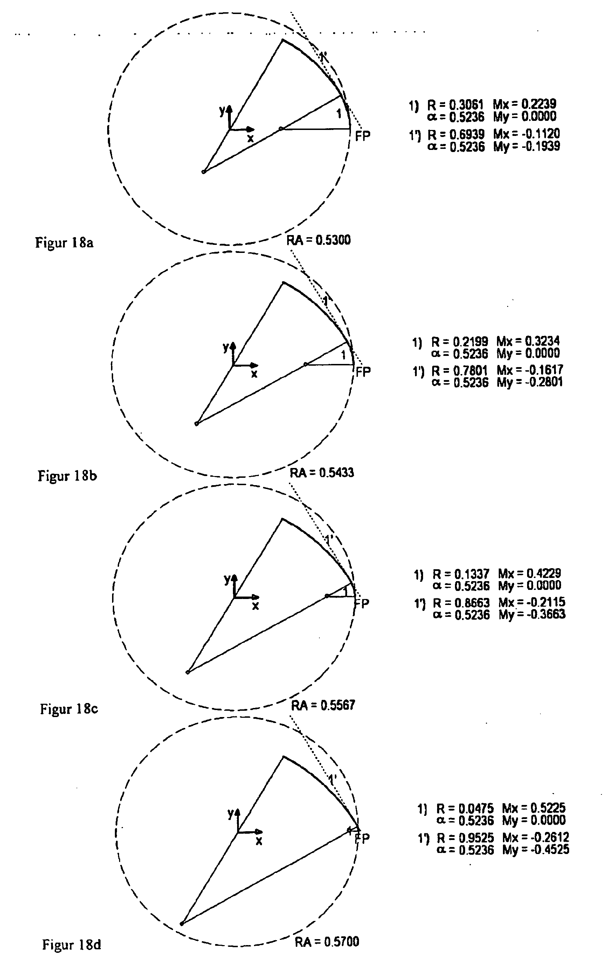

Die Figuren 18 bis 20 beschreiben zentrisch positionierte Schneckenprofile der Gangzahl 3. In den Figuren 18 bis 20 wird immer ein Sechstel eines Schneckenprofils der Gangzahl 3 gezeigt.

**Figur 18****:** Die Figuren 18a bis 18d zeigen bevorzugte 2-Kreis-Schneckenprofile eines dreigängigen Schneckenprofils. Die Figuren 18a bis 18d unterscheiden sich durch den Schneckenaußenradius RA. In den Figuren 18a bis 18d ist der Radius R_1 des 1. Kreisbogens vom Schneckenaußenradius RA abhängig. In den Figuren 18a bis 18d besitzt der 1. Kreisbogen jeweils den Winkel α_1 = α/6.

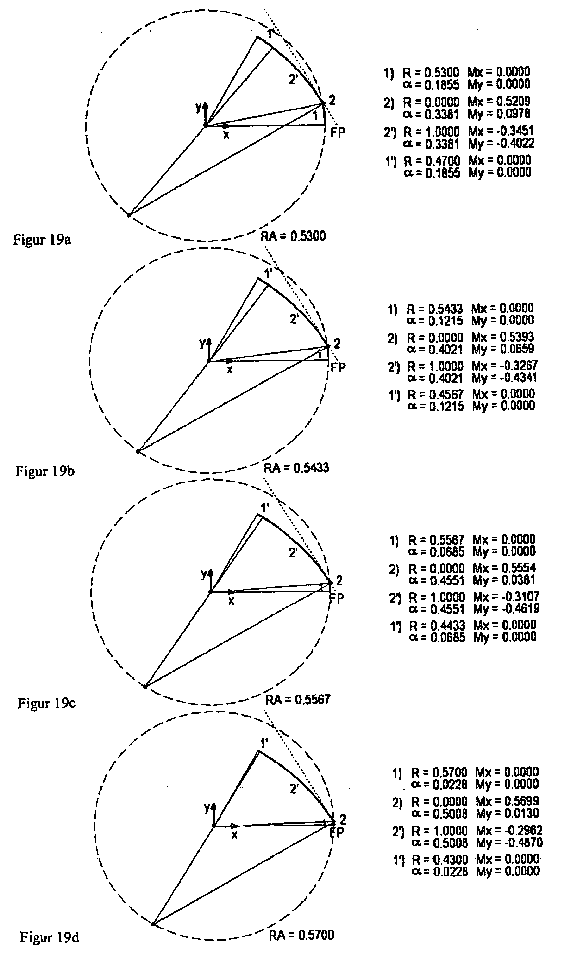

**Figur 19****:** Die Figuren 19a bis 19d zeigen bevorzugte 4-Kreis-Schneckenprofile eines dreigängigen Schneckenprofils. Die Figuren 19a bis 19d unterscheiden sich durch den Schneckenaußenradius RA. In den Figuren 19a bis 19d besitzt der 1. Kreisbogen jeweils den Radius R_1 = RA. In den Figuren 19a bis 19d besitzt der 2. Kreisbogen jeweils den Radius R_2 = 0. In den Figuren 19a bis 19d ist der Winkel α_1 des 1. Kreisbogens vom Schneckenaußenradius RA abhängig. In den Figuren 19a bis 19d ist der Radius α_2 des 2. Kreisbogens vom Schneckenaußenradius RA abhängig.

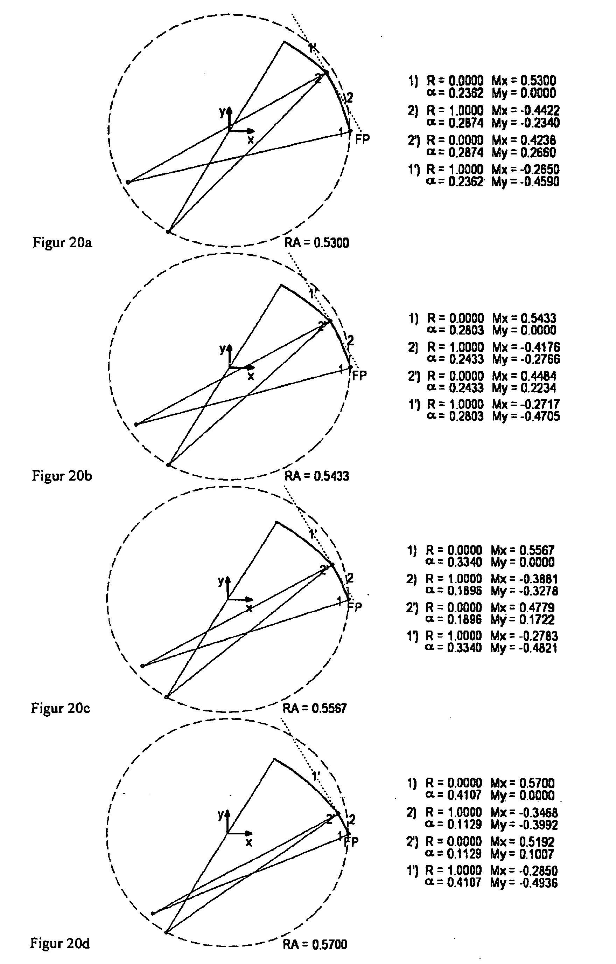

**Figur 20****:** Die Figuren 20a bis 20d zeigen weitere bevorzugte 4-Kreis-Schneckenprofile eines dreigängigen Schneckenprofils. Die Figuren 20a bis 20d unterscheiden sich durch den Schneckenaußenradius RA. In den Figuren 20a bis 20d besitzt der 1. Kreisbogen jeweils den Radius R_1 = 0. In den Figuren 20a bis 20d besitzt der 2. Kreisbogen jeweils den Radius R_2=A= 1. In den Figuren 20a bis 20d ist der Winkel α_1 des 1. Kreisbogens vom Schneckenaußenradius RA abhängig. In den Figuren 20a bis 20d ist der Radius α_2 des 2. Kreisbogens vom Schneckenaußenradius RA abhängig.

In den Figuren 18 bis 20 wird ein Sechstel von dreigängigen Schneckenprofilen bestehend aus maximal 4 Kreisbögen gezeigt. Dreigängige Schneckenprofile sind jedoch keinesfalls auf 4 Kreisbögen beschränkt. Vielmehr können beliebig viele Kreisbögen zur Erzeugung von dreigängigen Schneckenprofilen herangezogen werden.

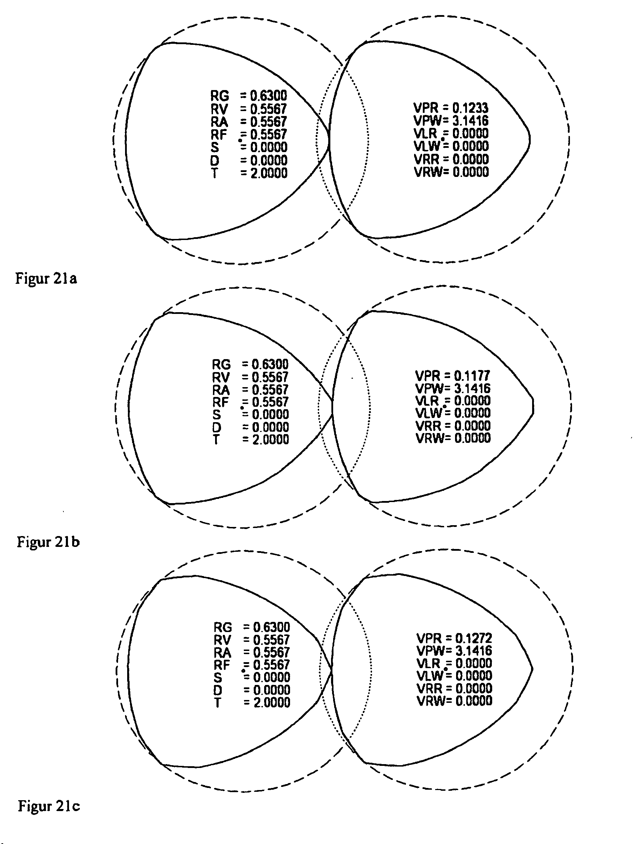

**Figur 21****:** Die Figuren 21a bis 21c zeigen bevorzugte Ausführungsformen einer exzentrischen Positionierung dreigängiger Schneckenprofile. Die Figur 21a zeigt eine exzentrische Positionierung eines dreigängigen Schneckenprofils nach Figur 18c. Die Figur 21b zeigt eine exzentrische Positionierung eines dreigängigen Schneckenprofils nach Figur 19c. Die Figur 21c zeigt eine exzentrische Positionierung eines dreigängigen Schneckenprofils nach Figur 20c. Der virtuelle Gehäuseradius beträgt RV = 0,5567 und ist kleiner als der Gehäuseradius RG (RG = 0,63). Die weiteren geometrischen Kenngrößen können den einzelnen Figuren entnommen werden. Exzentrisch positionierte, dreigängige, dicht kämmende, selbstreinigende Schneckenprofile sind dadurch charakterisiert, dass der minimale Abstand der Schneckenprofile zum Gehäuse unabhängig von der Richtung der Verschiebung für die linke und rechte Welle gleich groß ist. Die dreigängigen Schneckenprofile in den Figuren 21a bis 21c sind jeweils so exzentrisch positioniert, dass jeweils ein Punkt der Kammbereiche des Abdichtungsbereichs der Schneckenprofile das Gehäuse berührt, so dass eine Abdichtung des Zwickelbereichs erreicht wird. Das exzentrisch positionierte dreigängige Schneckenprofil führt zu einem erfindungsgemäß verwendeten Schneckenprofil mit einer Abfolge von Abdichtungsbereich - Übergangsbereich - Kanalbereich - Übergangsbereich. Die Abdichtung erfolgt also über zwei der drei Kämme eines dreigängigen Schneckenelements.

Die dreigängigen Schneckenprofile werden in Richtung eines ihrer Nutbereiche aus der zentrischen Position verschoben. In den Figuren 21a bis 21c erfolgte die Verschiebung längs der Verbindungslinie der beiden Drehpunkte der Schneckenprofile. Die Größe der Verschiebung, mit der eine Abdichtung des Zwickelbereichs erreicht wird, hängt von dem gewählten Schneckenprofil ab.

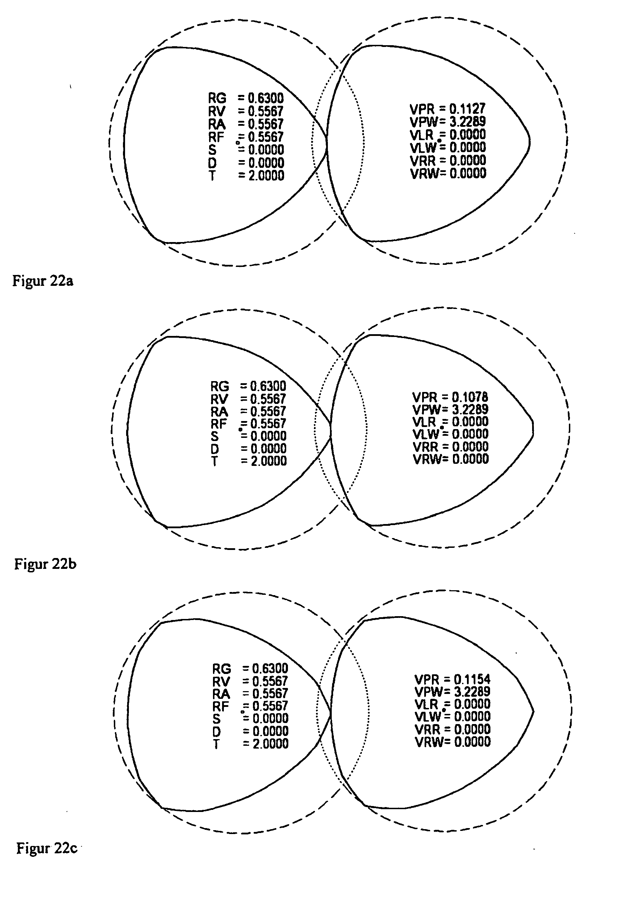

**Figur 22****:** Die Figuren 22a bis 22c zeigen weitere bevorzugte Ausführungsformen einer exzentrischen Positionierung dreigängiger Schneckenprofile. Die Figur 22a zeigt eine exzentrische Positionierung eines dreigängigen Schneckenprofils nach Figur 18c. Die Figur 22b zeigt eine exzentrische Positionierung eines dreigängigen Schneckenprofils nach Figur 19c. Die Figur 22c zeigt eine exzentrische Positionierung eines dreigängigen Schneckenprofils nach Figur 20c. Der virtuelle Gehäuseradius beträgt RV=0,5567 und ist kleiner als der Gehäuseradius RG (RG=0,63). Die weiteren geometrischen Kenngrößen können den einzelnen Figuren entnommen werden. Die Schneckenprofile in den Figuren 22a bis 22c sind jeweils so exzentrisch positioniert, dass lediglich ein Punkt eines Kammbereichs des Abdichtungsbereichs der Schneckenprofile das Gehäuse berührt. Die Größe der dazu notwendigen Verschiebung hängt von der Richtung der Verschiebung ab.

Es können ferner exzentrische Positionierungen der Schneckenprofile gewählt werden, bei dem kein Punkt der Kammbereiche des Abdichtungsbereichs der Schneckenprofile das Gehäuse berührt. Allgemein ist durch das exzentrische Positionieren des Schneckenprofils eines erfindungsgemäß verwendeten Schneckenelements der Grad einer linien- oder punktförmigen Abdichtung des Zwickelbereichs einstellbar. Insbesondere kann dadurch die mechanische und thermische Beanspruchung des viskosen Fluids im Bereich der Abdichtung gezielt eingestellt werden. Insbesondere kann der Grad der Abdichtung des Zwickelbereichs in den Kammbereichen abhängig von der Drehrichtung der Schneckenelemente angepasst werden. Der maximale Abstand der Kammbereiche des Abdichtungsbereichs der Schneckenprofile vom Gehäuse liegt bevorzugt im Bereich des 0-bis 0,05-fachen Achsabstandes, besonders bevorzugt im Bereich des 0- bis 0,025-fachen Achsabstandes.

Wie dem Fachmann bekannt ist, benötigen alle Schneckenelemente in der Praxis ein gewisses Spiel und zwar sowohl untereinander als auch gegenüber dem Gehäuse. Für die exzentrisch positionierten dreigängigen Schneckenprofile und den daraus resultierenden Schneckenelementen gelten die bereits genannten Spielstrategien und die bereits genannten Spielgrößen gemäß Figur 15. Weiterhin ist es möglich, die zu fertigenden Schneckenprofile innerhalb der Spiele zu verschieben. Es gelten diesbezüglich die Aussagen gemäß Figur 16.

In den Figuren 21 bis 22 werden exzentrisch positionierte dreigängige Schneckenprofile gezeigt, bei denen ein Sechstel des Schneckenprofils aus maximal 4 Kreisbögen besteht. Die Erfindung ist jedoch nicht auf exzentrisch positionierte dreigängige Schneckenprofile beschränkt, bei denen ein Sechstel des Schneckenprofils aus maximal 4 Kreisbögen besteht. Vielmehr können beliebig viele Kreisbögen zur Erzeugung von erfindungsgemäß verwendeten Schneckenprofilen herangezogen werden.

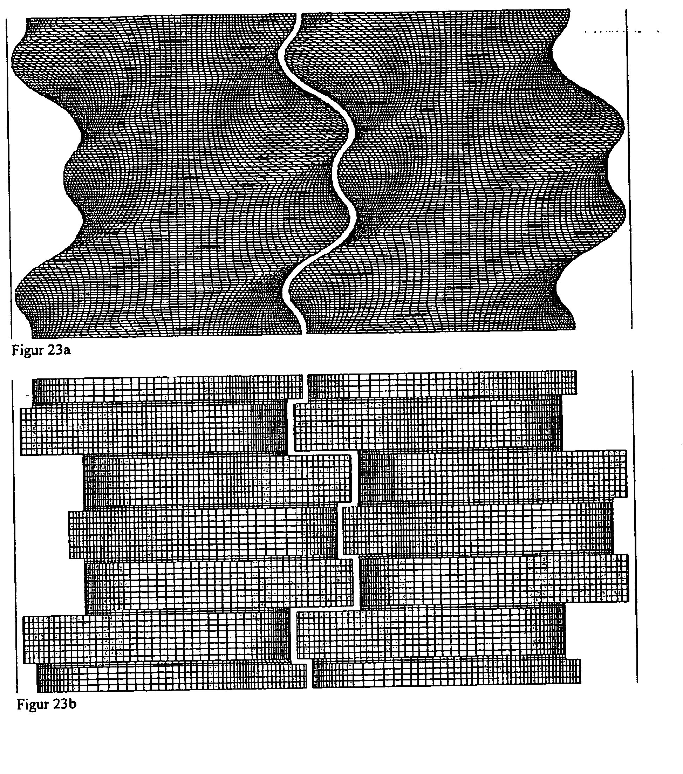

**Figur 23a** zeigt beispielhaft ein Paar eines erfindungsgemäß verwendeten exzentrischen dreigängigen Förderelements, das auf dem Schneckenprofil nach Figur 19c basiert. Der Gehäuseradius beträgt RG = 0,63 und der virtuelle Gehäuseradius RV = 0,5567. Das Spiel zwischen den beiden Förderelementen beträgt S = 0,02. Das Spiel zwischen den beiden Förderelementen und dem Gehäuse beträgt D = 0,01. Die Steigung der Förderelemente beträgt T = 1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt. Auf den Oberflächen der beiden Förderelemente ist ferner ein mögliches Rechengitter dargestellt, welches zur Berechnung der Strömung in Zwei- und Mehrwellenextrudem verwendet werden kann.

**Figur 23b** zeigt beispielhaft ein Paar eines erfindungsgemäß verwendeten exzentrischen dreigängigen Knetelements, das auf dem Schneckenprofil nach Figur 19c basiert. Der Gehäuseradius beträgt RG = 0,63 und der virtuelle Gehäuseradius RV = 0,5567. Das Spiel zwischen den Knetscheiben der beiden Knetelemente beträgt S = 0,02. Das Spiel zwischen den Knetscheiben der beiden Knetelemente und dem Gehäuse beträgt D = 0,01. Das Knetelement besteht aus 7 Knetscheiben, die jeweils um einen Winkel von π/3 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt. Auf den Oberflächen der beiden Knetelemente ist ferner ein mögliches Rechengitter dargestellt, welches zur Berechnung der Strömung in Zwei- und Mehrwellenextrudern verwendet werden kann.

Die Figuren 18 bis 20 zeigen dreigängige Schneckenprofile, in denen der dimensionslose Schneckenaußenradius RA die Werte 0,53, 0,5433, 0,5567 und 0,57 hat. Dreigängige Schneckenprofile sind nicht auf diese diskreten Werte des dimensionslosen Schneckenaußenradius limitiert. Vielmehr können dreigängige Schneckenprofile mit einem dimensionslosen Schneckenaußenradius im Bereich von RA = 0,505 bis RA = 0,577, bevorzugt im Bereich von RA = 0,51 bis RA = 0,57 verwendet werden.

Die Figuren 21 bis 23 zeigen exzentrisch positionierte dreigängige Schneckenprofile und Schneckenelemente, in denen der dimensionslose Gehäuseradius RG gleich 0,63 und der virtuelle Gehäuseradius RV gleich 0,5567 ist. Die exzentrisch positionierten dreigängigen Schneckenprofile erfindungsgemäßer Schneckenelemente sind nicht auf diesen diskreten Wert des Gehäuseradius beziehungsweise des virtuellen Gehäuseradius limitiert. Im erfindungsgemäßen Verfahren können exzentrisch positionierte dreigängige Schneckenprofile in einem Gehäuse mit einem Radius RG im Bereich von 0,51 bis 0,707, bevorzugt im Bereich von 0,52 bis 0,7 positioniert werden, wobei der virtuelle Gehäuseradius mit einem Radius RV im Bereich von 0,505 bis 0,577, bevorzugt im Bereich von 0,51 bis 0,57 liegt.

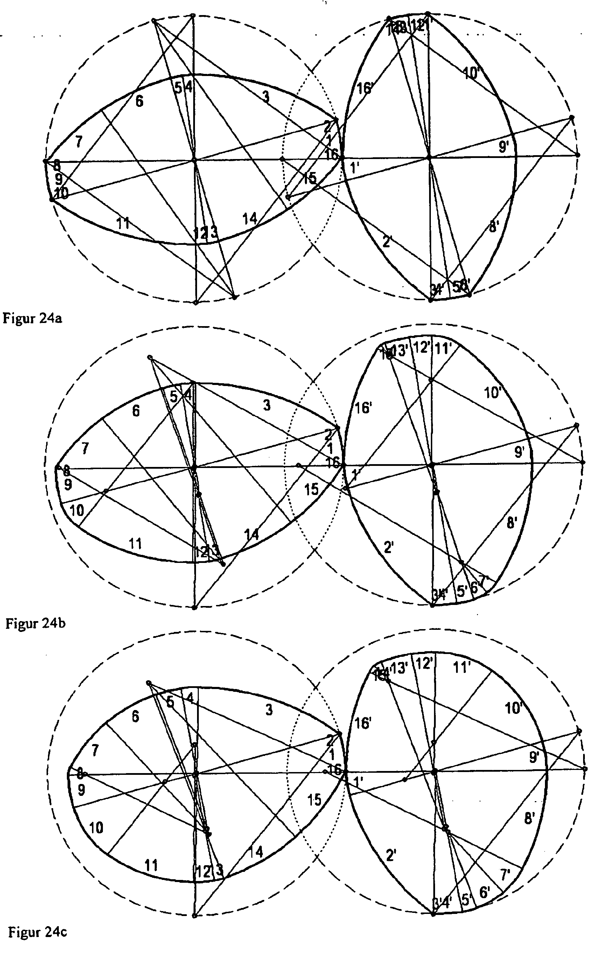

Die **Figuren 24a bis 24f** zeigen den Übergang von einem Paar zweigängiger Schneckenprofile auf ein Paar eingängiger Schneckenprofile. Alle diese Figuren weisen den gleichen Aufbau auf, der nachfolgend im Detail beschrieben wird. Das erzeugende Schneckenprofil wird durch das linke Schneckenprofil dargestellt. Das erzeugte Schneckenprofil wird durch das rechte Schneckenprofil dargestellt. Beide Schneckenprofile bestehen aus 16 Kreisbögen. Die Kreisbögen des erzeugenden und des erzeugten Schneckenprofils sind durch dicke, durchgezogene Linien gekennzeichnet, die mit den jeweiligen Nummern der Kreisbögen versehen sind. Bedingt durch die Vielzahl der Kreisbögen und bedingt durch die Erzeugung der Figuren mittels eines Computerprogramms kann es vorkommen, dass sich die Nummern einzelner Kreisbögen überlappen und daher schlecht lesbar sind, siehe zum Beispiel die Kreisbögen 3', 4' und die Kreisbögen 5', 6', 7' in Figur 24a. Trotz der teilweisen schlechten Lesbarkeit einzelner Nummern, wird der Aufbau der Profile aus dem Zusammenhang in Verbindung mit dieser Beschreibung dennoch deutlich.

Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Der Schneckenaußenradius ist jeweils für das erzeugende und das erzeugte Schneckenprofil annähernd gleich groß. Im Bereich des Schneckengehäuses ist der Schneckenaußenradius durch eine dünne, gestrichelte Linie gekennzeichnet, im Zwickelbereich durch eine dünne, gepunktete Linie.

Die Figur 24a zeigt ein Paar von zweigängigen Schneckenprofilen, mit denen der Übergang gestartet wird. Das erzeugende und das erzeugte Schneckenprofil sind zueinander symmetrisch. Die Kreisbögen 1 und 9 des erzeugenden Schneckenprofils berühren auf ihrer gesamten Länge den Schneckenaußenradius. Die Kreisbögen 4, 5 und 12, 13 des erzeugenden Schneckenprofils berühren auf ihrer gesamten Länge den Kemradius. Die Kreisbögen 4', 5' und 12', 13' des erzeugten Schneckenprofils berühren auf ihrer gesamten Länge den Schneckenaußenradius. Die Kreisbögen 1' und 9' des erzeugten Schneckenprofils berühren auf ihrer gesamten Länge den Kernradius.

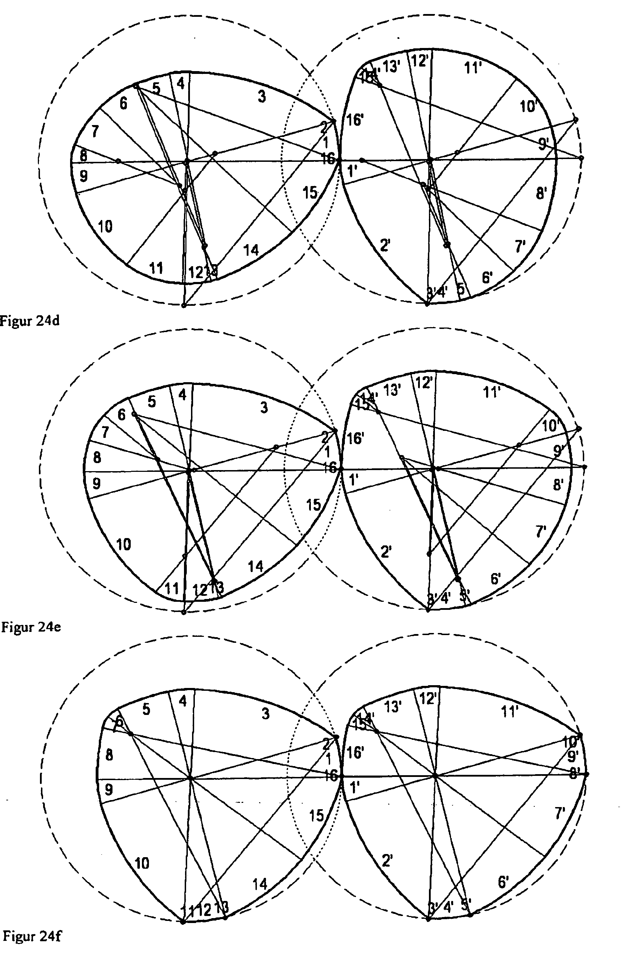

Die Figur 24f zeigt ein Paar von eingängigen Schneckenprofilen, mit denen der Übergang endet. Das erzeugende und das erzeugte Schneckenprofil sind zueinander symmetrisch. Die Kreisbögen 1 und 12 des erzeugenden Schneckenprofils berühren auf ihrer gesamten Länge den Schneckenaußenradius. Die Kreisbögen 4 und 9 des erzeugenden Schneckenprofils berühren auf ihrer gesamten Länge den Kemradius. Die Kreisbögen 4' und 9' des erzeugten Schneckenprofils berühren auf ihrer gesamten Länge den Schneckenaußenradius. Die Kreisbögen 1' und 12' des erzeugten Schneckenprofils berühren auf ihrer gesamten Länge den Kernradius.

Die Figur 24b zeigt ein Paar von Übergangsprofilen, bei denen der Übergang von den zweigängigen Schneckenprofilen zu den eingängigen Schneckenprofilen zu 20% vollzogen ist. Die Figur 24c zeigt ein Paar von Übergangsprofilen, bei denen der Übergang zu 40% vollzogen ist. Die Figur 24d zeigt ein Paar von Übergangsprofilen, bei denen der Übergang zu 60% vollzogen ist. Die Figur 24e zeigt ein Paar von Übergangsprofilen, bei denen der Übergang zu 80% vollzogen ist.

Der Übergang erfolgt dergestalt, dass immer der Kreisbogen 1 des erzeugenden Schneckenprofils auf seiner gesamten Länge den dimensionslosen Schneckenaußenradius RA berührt, wodurch der zugehörige Kreisbogen 1' des erzeugten Schneckenprofils auf seiner gesamten Länge den dimensionslosen Kernradius RI' berührt. Der Übergang erfolgt dergestalt, dass immer der Kreisbogen 4' des erzeugten Schneckenprofils den dimensionslosen Schneckenaußenradius RA' berührt, wodurch der zugehörige Kreisbogen 4 des erzeugenden Schneckenprofils den dimensionslosen Kernradius RI berührt. Dadurch, dass immer ein Kreisbogen des erzeugenden und des erzeugten Schneckenprofils auf dem Schneckenaußenradius liegt oder ihn berührt, wird während des gesamten Übergangs die Abreinigung der Gehäuseinnenoberfläche gewährleistet. Ferner ist aus den Figuren 24b bis 24e ersichtlich, dass das erzeugende und das erzeugte Schneckenprofil asymmetrisch sind. Ein Paar von Übergangselementen besteht immer aus einem ersten Übergangselement, welches auf den erzeugenden Übergangsprofilen beruht, und aus einem zweiten Übergangsetement, welches auf den erzeugten Übergangsprofilen beruht.

Die Figur 24 zeigt Übergangsprofile, in denen der dimensionslose Schneckenaußenradius des erzeugenden Schneckenprofils und der dimensionslose Schneckenaußenradius des erzeugten Schneckenprofils im Bereich von RA = 0,6146 bis RA = 0,6288 liegen. Im erfindungsgemäßen Verfahren können Schneckenprofile mit einem dimensionslosen Schneckenaußenradius des Schneckenprofils zwischen RA größer 0 und RA kleiner oder gleich 1, bevorzugt im Bereich von RA = 0,52 bis RA = 0,707 verwendet werden.

**Figur 26** zeigt ein achtförmiges Schneckengehäuse mit zwei Bohrungen. Der Bereich in dem sich zwei Gehäusebohrungen durchdringen, wird als Zwickelbereich bezeichnet. Die beiden Schnittpunkte von zwei Gehäusebohrungen werden als Gehäusezwickel bezeichnet. Zusätzlich ist der Öffnungswinkel δ_gz zwischen den beiden Gehäusezwickeln eingezeichnet.

**Figur 27** zeigt die Winkel δ_fb1, δ_fb2, δ_nb1, δ_nb2, δ_kb1, δ_kb2 und δ_gb anhand eines erfindungsgemäß verwendeten Schneckenprofils.

**Figur 28** zeigt einen Doppelschneckenextruder. Der Extruder weist einen Aufbau aus 5 Gehäuseteilen (1-5) auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (6) zugefiihrt. Gehäuse (2) beinhaltet eine Messstelle (10) für einen Schmelzetemperatursensor. Gehäuse (3) enthält eine Entgasungsöffnung (7). Gehäuse (4) ist geschlossen und Gehäuse (5) ist ein Flansch, der den Querschnitt von der achtförmigen Bohrung des Doppelschneckenextruders auf eine Rohrleitung (8) überführt. Im Flansch ist ein Schmelzetemperatursensor (12) angebracht. Nach dem Flansch folgt ein Ventil (9) zum Drosseln. Der Innendurchmesser von Ventil (9) und Leitung (8) beträgt jeweils 15 mm, die Ventillänge 95 mm und die Leitungslänge 120 mm. Nummer (13) ist eine Drucksensor und Nummer (11) ein Tempertursensor in der Schmelzeleitung.

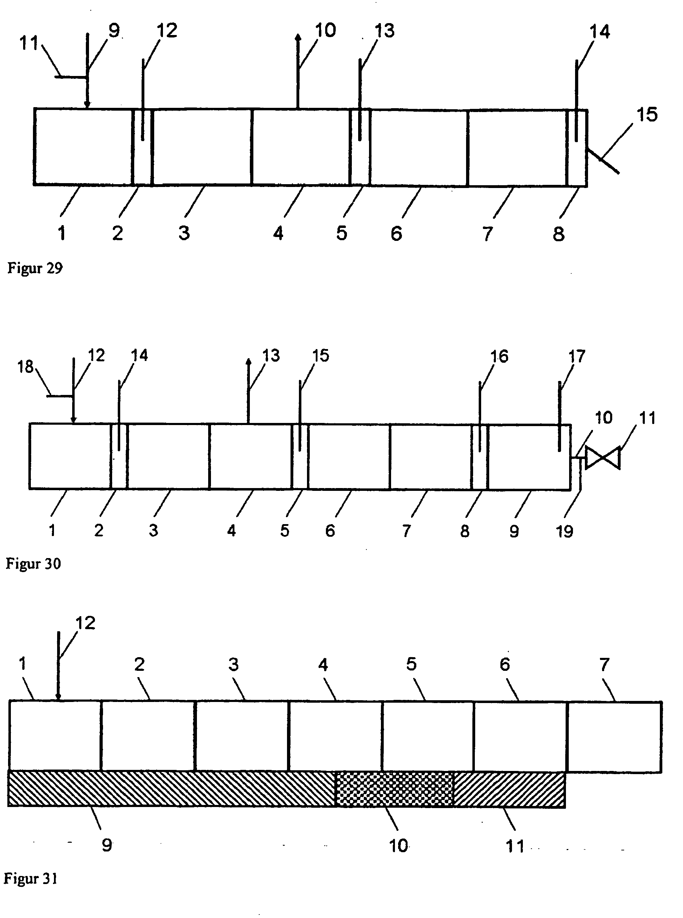

**Figur 29** zeigt einen Doppelschneckenextruder. Der Extruder weist einen Aufbau aus 8 Gehäuseteilen (1-8) auf, in denen gleichsinnig drehende, miteinander kämmende Wellen angeordnet sind.

Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (9) zugeführt. In der Rohrleitung sitzt ein Schmelzetemperatursensor (II). Gehäuse (2) beinhaltet eine Messstelle (12) für einen Schmelzetemperatursensor. Gehäuse (3) ist geschlossen und Gehäuse (4) enthält eine Entgasungsöffnung (10). Gehäuse (5) beinhaltet eine Messstelle (13) für einen Schmelzetemperatursensor. Gehäuse (6) und (7) sind geschlossen und Gehäuse (8) beinhaltet eine Messstelle (14) für einen Schmelzetemperatursensor. Das Gehäuse (8) ist and Ende offen, so dass man die achtförmige Bohrung des Gehäuses sehen kann. Ein Handthermometer (15) dient zur Messung der Schmelzetemperatur.

**Figure 30** zeigt einen Doppelschneckenextruder. Der Extruder weist einen Aufbau aus 9 Gehäuseteilen (1-9) auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (12) zugeführt. In der Rohrleitung sitzt ein Schmelzetemperatursensor (18). Gehäuse (2) beinhaltet eine Messstelle (14) für einen Schmelzetemperatursensor. Gehäuse (3) ist geschlossen und Gehäuse (4) enthält eine Entgasungsöffnung (13). Gehäuse (5) beinhaltet eine Messstelle (15) für einen Schmelzetemperatursensor. Gehäuse (6) und (7) sind geschlossen und Gehäuse (8) beinhaltet eine Messstelle (16) für einen Schmelzetemperatursensor. Gehäuse (9) ist ein Flansch, die den Querschnitt von der achtförmigen Bohrung des Doppelschneckenextruders auf (Rund) eine Rohrleitung (10) überführt. Im Flansch ist ein Schmelzetemperatursensor (17) angebracht. Nach dem Flansch folgt ein Ventil (11) zum Drosseln. Der Innendurchmesser von Ventil (11) und Leitung (10) beträgt jeweils 15 mm, die Ventillänge 95 mm und die Leitungslänge 120 mm. In der Rohrleitung (19) ist eine Drucksensor (19) angebracht.

**Figur 31** zeigt einen Doppelschneckenextruder mit einem Aufbau aus 6 Gehäusen (1-6), in denen gleichsinnig drehende, miteinander kämmende Wellen angeordnet sind. Die Maschine ist ein ZSK 32Mc mit 32mm Gehäusedurchmesser von Coperion Werner & Pfleiderer. In das erste Gehäuse (1) wird das Granulat zugeführt (12). Die übrigen Gehäuse (2-6) sind geschlossen und am Ende ist eine Breitschlitzdüse (7).

Die beiden Schneckenwellen (nicht gezeichnet) sind symmetrisch mit Schneckenelementen bestückt. In der Einzugszone (9) sind die Schneckenwellen mit zweigängigen Förderelementen mit der Gangsteigung 42 mm und 63,5mm bestückt. Die Einzugszone reicht bis zur Mitte des Gehäuses (4), dann beginnt die Aufschmelzzone (10). Die Aufschmelzzone (10) reicht bis zum Ende des fünften Gehäuses (5) und besteht aus dreigängigen Knetblöcken und Übergangsknetblöcken von zwei auf dreigängig bzw. umgekehrt. Darauf folgt die Austragszone (11)

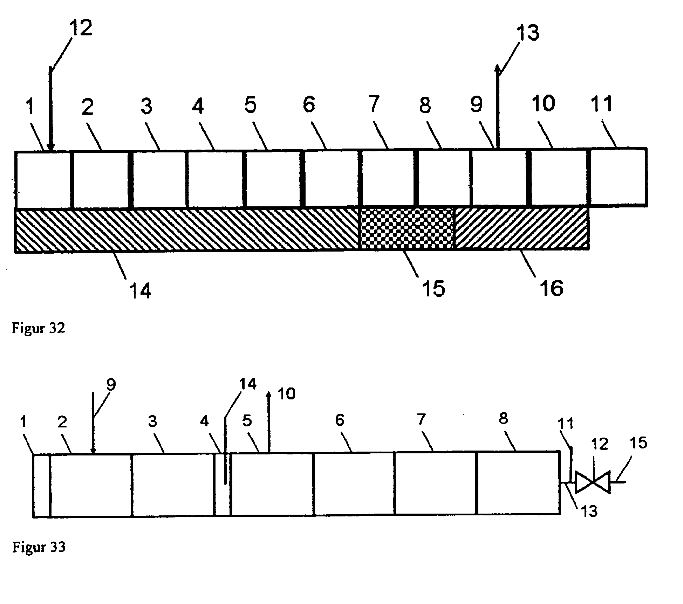

**Figur 32** zeigt einen Doppelschneckenextruder mit einem Aufbau aus 11 Gehäusen (1-11), in denen gleichsinnig drehende, miteinander kämmende Wellen angeordnet sind. Die Maschine ist ein ZSK 32Mc mit 32mm Gehäusedurchmesser von Coperion Werner & Pfleiderer. In das erste Gehäuse (1) wird das Granulat zugeführt (12). Die übrigen Gehäuse (2,3,4,5,6,7,8,10) sind geschlossen bis auf Gehäuse (9) dort ist eine Entgasungsöffnung (13). Am Ende ist eine Vierlochdüse (11) montiert.

Die beiden Schneckenwellen (nicht gezeichnet) sind symmetrisch mit Schneckenelementen bestückt. Am Anfang in der Einzugszone (14) sind die Schneckenwellen mit zweigängigen Förderelementen bestückt. Die Einzugszone (14) reicht bis zum Anfang des Gehäuses (7), dann beginnt die Aufschmelzzone (15). Die Aufschmelzzone (15) reicht bis zur Mitte des Gehäuses (8) und besteht aus dreigängigen Knetblöcken und Übergangsknetblöcken von zwei auf dreigängig bzw. umgekehrt. Die Austragszone (16) bzw. Druckaufbauzone beginnt in der Mitte des Gehäuses (9) nach der Aufschmelzzone.

**Figur 33** zeigt einen Doppelschneckenextruder. Der Extruder weist einen Aufbau aus sieben Gehäusen (1-7) auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das zweite Gehäuse (2) wird die Polymerschmelze über eine beheizte Rohrleitung (9) zugeführt. Gehäuse (3) ist geschlossen und Gehäuse (4) beinhaltet eine Messstelle (14) für einen Schmelzetemperatursensor. Gehäuse (5) enthält eine Entgasungsöffnung (10). Gehäuse (6) und (7) sind geschlossen. Gehäuse (8) ist ein Flansch, der den Querschnitt von der achtförmigen Bohrung des Doppelschneckenextruders auf (Rund) eine Rohrleitung (13) überführt. Nach dem Flansch folgt ein Ventil (12) zum Drosseln. Der Innendurchmesser von Ventil und Leitung beträgt 15 mm bei Länge von 95 mm des Ventils und 120 mm der Leitung. In der Rohrleitung (13) ist eine Drucksensor (11) installiert. Ein Handthermometer (15) dient zur Messung der Schmelzetemperatur am Austritt.

### Beispiele

In den Beispielen 1 - 11 werden Versuche auf einer ZSK 40 Sc von Coperion Werner & Pfleiderer und einer ZSK 32 Mc von Coperion Werner & Pfleiderer vorgestellt. Die ZSK 32 Mc hat einen Achsabstand von 26,2mm und einen Gehäusedurchmesser von 31,8mm. Die ZSK 40 Sc hat einen Achsabstand von 33,4 mm und einen Gehäusedurchmesser von 40,3mm. Der Öffnungswinkel zwischen den beiden Gehäusezwickeln δ_gz beträgt in der ZSK 32 Mc etwa 69° und in der ZSK 40 Sc etwa 68°. Die in den Beispielen verwendeten zweigängigen Förderelemente mit einem Erdmenger-Schneckenprofil gemäß Stand der Technik haben auf der ZSK 32 Mc einen Kammwinkel von etwa 20° und auf der ZSK 40 Sc einem Kammwinkel von etwa 21°. Die in den Beispielen verwendeten eingängigen Förderelemente mit einem Erdmenger-Schneckenprofil gemäß Stand der Technik haben auf der ZSK 40 Sc einem Kammwinkel von etwa 110°. Die in den Beispielen verwendeten erfindungsgemäß verwendeten Förderelemente haben auf der ZSK 32 Mc haben einen Abdichtungswinkel von etwa 106°, bestehend aus einem Kammwinkel δ_kb1 von etwa 9°, einem Flankenwinkel δ_fb1 von etwa 88° und einem Kammwinkel δ_kb2 von etwa 9°, und einen Kanalwinkel von etwa 110°, bestehend aus einem Nutwinkel δ_nb1 von etwa 12°, einem Flankenwinkel δ_fb2 von etwa 86° und einem Nutwinkel δ_kb2 von etwa 12°. Die in den Beispielen verwendeten erfindungsgemäß verwendeten Förderelemente haben auf der ZSK 40 Sc haben einen Abdichtungswinkel von etwa 104°, bestehend aus einem Kammwinkel δ_kb1 von etwa 3°, einem Flankenwinkel δ_fb1 von etwa 98° und einem Kammwinkel δ_kb2 von etwa 3°, und einen Kanalwinkel von etwa 110°, bestehend aus einem Nutwinkel δ_nb1 von etwa 8°, einem Flankenwinkel δ_fb2 von etwa 94° und einem Nutwinkel δ_kb2 von etwa 8°.

An der ZSK40 Sc sind an einigen Stellen Zwischenplatten eingebracht, die zur Aufnahme der Messtechnik dienen (siehe z.B. Figur 29, Zwischenplatte (2)). Diese Zwischenplatten werden im Folgenden vereinfacht ebenfalls als Gehäuse bezeichnet.

### Vergleichsbeispiel 1

Der Doppelschneckenextruder (Figur 28) weist einen Aufbau aus 5 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (6) zugeführt. Gehäuse (2) beinhaltet eine Messstelle (10) für einen Schmelzetemperatursensor. Gehäuse (3) enthält eine Entgasungsöffnung (7). Gehäuse (4) ist geschlossen und Gehäuse (5) ist ein Flansch, der den Querschnitt von der achtförmigen Bohrung des Doppelschneckenextruders auf eine Rohrleitung (8) überführt. Nach dem Flansch folgt ein Ventil (9) zum Drosseln. Der Innendurchmesser von Ventil (9) und Leitung (8) beträgt jeweils 15 mm, die Ventillänge 95 mm und die Leitungslänge 120 mm.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26 mm, welche im eingebauten Zustand unterhalb des Schmelzetemperatursensors (10) angeordnet ist. Darauf folgend ist die Welle mit 8 zweigängigen Förderelementen mit der Gangsteigung 40 mm und Länge 40 mm und einem Förderelement mit Gangsteigung 40 mm und Länge 20 mm bestückt.

Bei einer Drehzahl von 250 U/min der Wellen und einem Durchsatz von 80 kg/h Makrolon® 2805 (Hersteller: Bayer MaterialScience AG) wurden bei verschiedenen Drücken, eingestellt über den Drucksensor (13) vor dem Ventil (9), die Temperatur (12) der Schmelze am Ende des Extruders im Flansch (5) gemessen. Des weiteren ist die Eingangstemperatur der Schmelze in den Doppelschneckenextruder gemessen worden (11). Die Extrudergehäuse (1,2,3,4,5), Leitungen (6,8) und das Ventil (9) wurden dabei auf 290°C beheizt. Die Ergebnisse sind in Tabelle 1 dargestellt.

**Tabelle 1**

| Druck vor Ventil | 20,6 bar | 40,4 bar | 60,1 bar | 79,8 bar |
|---|---|---|---|---|
| Temperatur Eintritt (11) | 320°C | 320°C | 319°C | 319°C |
| Temperatur Austritt (12) | 334°C | 338°C | 342°C | 346°C |
| Temperaturdifferenz Austritt-Eintritt | 14°C | 18°C | 23°C | 27°C |

### Beispiel 2

Der Extruder wurde wie in Beispiel 1 aufgebaut. Der Wellenbesatz wurde im Vergleich zu Beispiel 1 nach der Buchse wie folgt geändert: die 8 zweigängigen Förderelemente mit der Gangsteigung 40 mm und Länge 40 mm und das eine Förderelement mit Gangsteigung 40 mm und Länge 20 mm wurden durch erfindungsgemäße Förderelemente ersetzt. Die Förderelemente haben eine Steigung von 30 mm und Länge von 30 mm und es sind 11 Stück auf die Welle gesetzt worden. Bei einer Drehzahl von 250 U/min der Wellen und einem Durchsatz von 80 kg/h Makrolon® 2805 (Hersteller: Bayer MaterialScience AG) wurden bei verschiedenen Drücken vor dem Ventil (9) die Temperatur (12) der Schmelze am Ende des Extruders im Flansch (5) gemessen. Des weiteren ist die Eingangstemperatur (11) der Schmelze in den Doppelschneckenextruder gemessen worden. Die Extrudergehäuse (1,2,3,4,5), Leitungen (6,8) und das Ventil (9) wurden dabei auf 290°C beheizt.

Der Anstieg zwischen Schmelzeeintritts- und Schmelzeaustrittstemperatur ist deutlich geringer bei Verwendung der erfindungsgemäßen Schneckenelemente im Vergleich zu den konventionellen zweigängigen Elementen aus Beispiel 1, wie die Ergebnisse in Tabelle 2 zeigen.

**Tabelle 2**

| Druck vor Ventil | 20,3 bar | 40,1 bar | 60,2 bar | 80,1 bar |
|---|---|---|---|---|
| Temperatur Eintritt (11) | 321°C | 321°C | 322°C | 322°C |
| Temperatur Austritt (12) | 328°C | 331°C | 334°C | 336°C |
| Temperaturdifferenz Austritt-Eintritt | 7°C | 10°C | 12°C | 14°C |

### Beispiel 3

Der Extruder wurde wie in Beispiel 1 aufgebaut. Der Wellenbesatz wurde im Vergleich zu Beispiel 1 nach der Buchse wie folgt geändert: die 8 zweigängigen Förderelemente mit der Gangsteigung 40 mm und Länge 40 mm und das eine Förderelement mit Gangsteigung 40 mm und Länge 20 mm wurden durch erfindungsgemäße Schneckenelemente und klassische eingängige Elemente ersetzt. Beide Elementetypen haben eine Steigung von 30 mm und Länge von 30 mm und es sind 5 Stück der erfindungsgemäßen Schneckenelemente und dahinter 6 klassische eingängige Elemente mit einer Steigung von 30 mm und einer Länge von 30 mm auf die Welle gesetzt worden. Bei einer Drehzahl von 250 U/min der Wellen und einem Durchsatz von 80 kg/h Makrolon® 2805 (Hersteller: Bayer MaterialScience AG) wurden bei verschiedenen Drücken vor dem Ventil (9) die Temperatur (12) der Schmelze am Ende des Extruders im Flansch (5) gemessen. Des weiteren ist die Eingangstemperatur (11) der Schmelze in den Doppelschneckenextruder gemessen worden. Die Extrudergehäuse (1,2,3,4,5), Leitungen (6,8) und das Ventil (9) wurden dabei auf 290°C beheizt.

Das Beispiel vergleicht die klassischen eingängigen Förderelemente mit den erfindungsgemäßen Förderelementen. Die Resultate in Tabelle 3 zeigen deutlich höhere Temperaturen bei den klassischen eingängigen Elementen.

**Tabelle 3**

| Druck vor Ventil | 20,7 bar | 39,8 bar | 60,2 bar | 79,9 bar |
|---|---|---|---|---|
| Temperatur Eintritt (11) | 320°C | 320°C | 320°C | 320°C |
| Temperatur Austritt (12) | 334°C | 337°C | 340°C | 342°C |
| Temperaturdifferenz Austritt-Eintritt | 14°C | 17°C | 20°C | 22°C |

### Vergleichsbeispiel 4

Der Doppelschneckenextruder (Figur 29) weist einen Aufbau aus 8 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (9) zugeführt. Gehäuse (2) beinhaltet eine Messstelle (12) für einen Schmelzetemperatursensor. Gehäuse (3) ist geschlossen und Gehäuse (4) enthält eine Entgasungsöffnung (10). Gehäuse (5) beinhaltet eine Messstelle (13) für einen Schmelzetemperatursensor. Gehäuse (6) und (7) sind geschlossen und Gehäuse (8) beinhaltet eine Messstelle (14) für einen Schmelzetemperatursensor. Das Gehäuse (8) ist and Ende offen, so dass man die achtförmige Bohrung des Gehäuses sehen kann.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26 mm, welche im eingebauten Zustand unterhalb des Schmelzetemperatursensors (12) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (13) angeordnet ist. Darauf folgend ist die Welle mit 8 zweigängigen Förderelementen mit der Gangsteigung 40 mm und Länge 40 mm bestückt.

Bei verschiedenen Drehzahlen der Wellen und einem Durchsatz von 80 kg/h Makrolon® 2805 (Hersteller: Bayer MaterialScience AG) wurde die Temperatur (Messstelle (14)) der Schmelze am Ende des Extruders gemessen. Zusätzlich wurde die Temperatur mit einem Handthermometer (15) gemessen, das am offenen Austritt in die Schmelze gehalten wurde. Des weiteren ist die Eingangstemperatur (Messstelle (11)) der Schmelze in den Doppelschneckenextruder gemessen worden. Die Extrudergehäuse (1,2,3,4,5,6,7,8) und Leitung (9) wurden dabei auf 290°C beheizt. Die Ergebnisse sind in Tabelle 4 dargestellt.

**Tabelle 4**

| Drehzahl U/min | 100 | 150 | 200 | 250 | 300 | 350 |
|---|---|---|---|---|---|---|
| Temperatur Eintritt (11) | 319°C | 319°C | 318°C | 318°C | 318°C | 317°C |
| Temperatur Austritt (15) | 324°C | 334°C | 339°C | 348°C | 350°C | 349°C |
| Temperaturdifferenz Austritt-Eintritt | 5°C | 15°C | 21°C | 30°C | 32°C | 32°C |

### Beispiel 5

Der Doppelschneckenextruder (Figur 29) weist einen Aufbau aus 8 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (9) zugeführt. Gehäuse (2) beinhaltet eine Messstelle (12) für einen Schmelzetemperatursensor. Gehäuse (3) ist geschlossen und Gehäuse (4) enthält eine Entgasungsöffnung (10). Gehäuse (5) beinhaltet eine Messstelle (13) für einen Schmelzetemperatursensor. Gehäuse (6) und (7) sind geschlossen und Gehäuse (8) beinhaltet eine Messstelle (14) für einen Schmelzetemperatursensor. Das Gehäuse (8) ist and Ende offen, so dass man die achtförmige Bohrung des Gehäuses sehen kann.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26 mm, welche im eingebauten Zustand unterhalb des Schmelzetemperatursensors (12) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (13) angeordnet ist. Darauf folgend ist die Welle mit 11 erfindungsgemäßen Förderelementen mit der Gangsteigung 30 mm und Länge 30 mm bestückt.

Bei verschiedenen Drehzahlen der Wellen und einem Durchsatz von 80 kg/h Makrolon® 2805 (Hersteller: Bayer MaterialScience AG) wurden die Temperatur (Messstelle (14)) der Schmelze am Ende des Extruders gemessen. Zusätzlich wurde die Temperatur mit einem Handthermometer (15) gemessen, das am offenen Austritt in die Schmelze gehalten wurde. Des weiteren ist die Eingangstemperatur (Messstelle (11)) der Schmelze in den Doppelschneckenextruder gemessen worden. Die Extrudergehäuse (1,2,3,4,5,6,7,8) und Leitung (9) wurden dabei auf 290°C beheizt. Die Ergebnisse in Tabelle 5 zeigen deutlich niedrigere Temperaturen und Temperaturdifferenzen zwischen Ein- (11) und Austritt (15) als beim Beispiel 4 in Tabelle 4.

**Tabelle 5**

| Drehzahl U/min | 100 | 150 | 200 | 250 | 300 | 350 |
|---|---|---|---|---|---|---|
| Temperatur Eintritt (11) | 321°C | 318°C | 318°C | 319°C | 319°C | 318°C |
| Temperatur Austritt (15) | 321°C | 331°C | 333°C | 329°C | 342°C | 351°C |
| Temperaturdifferenz Austritt-Eintritt | 0°C | 13°C | 15°C | 10°C | 23°C | 33°C |

### Beispiel 6

Der Doppelschneckenextruder (Figur 29) weist einen Aufbau aus 8 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (9) zugeführt. Gehäuse (2) beinhaltet eine Messstelle (12) für einen Schmelzetemperatursensor. Gehäuse (3) ist geschlossen und Gehäuse (4) enthält eine Entgasungsöffnung (10). Gehäuse (5) beinhaltet eine Messstelle (13) für einen Schmelzetemperatursensor. Gehäuse (6) und (7) sind geschlossen und Gehäuse (8) beinhaltet eine Messstelle (14) für einen Schmelzetemperatursensor. Das Gehäuse (8) ist and Ende offen, so dass man die achtförmige Bohrung des Gehäuses sehen kann.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26 mm, welche im eingebauten Zustand unterhalb des Schmelzetemperatursensors (12) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (13) angeordnet ist. Darauf folgend ist die Welle mit 5 erfindungsgemäßen Förderelementen mit der Gangsteigung 30 mm und Länge 30 mm bestückt. Danach wurde die Welle mit 6 klassischen eingängigen Förderelementen mit einer Länge von 30mm und einer Gangsteigung von 30mm bestückt.

Bei verschiedenen Drehzahlen der Wellen und einem Durchsatz von 80 kg/h Makrolon® 2805 (Hersteller: Bayer MaterialScience AG) wurden die Temperatur (Messstelle (14)) der Schmelze am Ende des Extruders gemessen. Zusätzlich wurde die Temperatur mit einem Handthermometer (15) gemessen, das am offenen Austritt in die Schmelze gehalten wurde. Des weiteren ist die Eingangstemperatur (Messstelle (11)) der Schmelze in den Doppelschneckenextruder gemessen worden. Die Extrudergehäuse (1,2,3,4,5,6,7,8) und Leitung (9) wurden dabei auf 290°C beheizt. Die Ergebnisse in Tabelle 6 zeigen deutlich höhere Temperaturen und Temperaturdifferenzen zwischen Ein- (11) und Austritt (15) als beim erfindungsgemäßen Verfahren in Beispiel 5 in Tabelle 5.

**Tabelle 6**

| Drehzahl U/min | 100 | 150 | 200 | 250 | 350 |
|---|---|---|---|---|---|
| Temperatur Eintritt (11) | 317°C | 317°C | 318°C | 317°C | 318°C |
| Temperatur Austritt (15) | 321°C | 330°C | 338°C | 345°C | 350°C |
| Temperaturdifferenz Austritt-Eintritt | 4°C | 13°C | 20°C | 28°C | 31°C |

### Vergleichsbeispiel 7

Der Doppelschneckenextruder (Figur 30) weist einen Aufbau aus 9 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (12) zugeführt. Gehäuse (2) beinhaltet eine Messstelle (14) für einen Schmelzetemperatursensor. Gehäuse (3) ist geschlossen und Gehäuse (4) enthält eine Entgasungsöffnung (13). Gehäuse (5) beinhaltet eine Messstelle (15) für einen Schmelzetemperatursensor. Gehäuse (6) und (7) sind geschlossen und Gehäuse (8) beinhaltet eine Messstelle (16) für einen Schmelzetemperatursensor. Gehäuse (9) ist ein Flansch, die den Querschnitt von der achtförmigen Bohrung des Doppelschneckenextruders auf (Rund) eine Rohrleitung (10) überführt. Nach dem Flansch folgt ein Ventil (11) zum Drosseln. Der Innendurchmesser von Ventil (11) und Leitung (10) beträgt jeweils 15 mm, die Ventillänge 95 mm und die Leitungslänge 120 mm.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (15) angeordnet ist. Darauf folgend ist die Welle mit 8 zweigängigen Förderelementen der Gangsteigung 40 mm und der Länge 40 mm bestückt.

Bei verschiedenen Drehzahlen der Wellen und einem Durchsatz von 80 kg/h Bayblend® T45 (Hersteller: Bayer MaterialScience AG) wurden die Temperatur (Messstelle (17)) der Schmelze am Ende des Extruders gemessen. Des weiteren ist die Eingangstemperatur (Messstelle (18)) der Schmelze in den Doppelschneckenextruder gemessen worden. Die Extrudergehäuse (1,2,3,4,5,6,7,8,9), Leitung (10,12) und das Ventil (11) wurden dabei auf 240°C beheizt. Das Ventil (11) ist vollständig geöffnet. Die Ergebnisse sind in Tabelle 7 dargestellt.

**Tabelle 7**

| Drehzahl U/min | 150 | 250 | 350 |
|---|---|---|---|
| Temperatur Eintritt (18) | 274°C | 274°C | 274°C |
| Temperatur Austritt (17) | 285°C | 292°C | 300°C |
| Temperaturdifferenz Austritt-Eintritt | 11°C | 18°C | 26°C |

### Beispiel 8

Der Doppelschneckenextruder (Figur 30) weist einen Aufbau aus 9 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (12) zugeführt. Gehäuse (2) beinhaltet eine Messstelle (14) für einen Schmelzetemperatursensor. Gehäuse (3) ist geschlossen und Gehäuse (4) enthält eine Entgasungsöffnung (13). Gehäuse (5) beinhaltet eine Messstelle (15) für einen Schmelzetemperatursensor. Gehäuse (6) und (7) sind geschlossen und Gehäuse (8) beinhaltet eine Messstelle (16) für einen Schmelzetemperatursensor. Gehäuse (9) ist ein Flansch, die den Querschnitt von der achtförmigen Bohrung des Doppelschneckenextruders auf (Rund) eine Rohrleitung (10) überführt. Nach dem Flansch folgt ein Ventil (11) zum Drosseln. Der Innendurchmesser von Ventil (11) und Leitung (10) beträgt jeweils 15 mm, die Ventillänge 95 mm und die Leitungslänge 120 mm.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (15) angeordnet ist. Darauf folgend ist die Welle mit 11 erfindungsgemäßen Förderelementen der Gangsteigung 30 mm und der Länge 30 mm bestückt.

Bei verschiedenen Drehzahlen der Wellen und einem Durchsatz von 80 kg/h Bayblend® T45 (Hersteller: Bayer MaterialScience AG) wurden die Temperatur (Messstelle (17)) der Schmelze am Ende des Extruders gemessen. Des weiteren ist die Eingangstemperatur (Messstelle (18)) der Schmelze in den Doppelschneckenextruder gemessen worden. Die Extrudergehäuse (1,2,3,4,5,6,7,8,9), Leitung (10,12) und das Ventil (11) wurden dabei auf 240°C beheizt. Das Ventil (11) ist vollständig geöffnet. Die Ergebnisse sind in Tabelle 8 dargestellt und zeigen geringere Temperaturen als im Beispiel 7 in Tabelle 7.

**Tabelle 8**

| Drehzahl U/min | 150 | 250 | 350 |
|---|---|---|---|
| Temperatur Eintritt (18) | 275°C | 275°C | 273°C |
| Temperatur Austritt (17) | 281°C | 291°C | 297°C |
| Temperaturdifferenz Austritt-Eintritt | 6°C | 16°C | 24°C |

### Vergleichsbeispiel 9

Der Doppelschneckenextruder (Figur 30) weist einen Aufbau aus 9 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (12) zugeführt. Gehäuse (2) beinhaltet eine Messstelle (14) für einen Schmelzetemperatursensor. Gehäuse (3) ist geschlossen und Gehäuse (4) enthält eine Entgasungsöffnung (13). Gehäuse (5) beinhaltet eine Messstelle (15) für einen Schmelzetemperatursensor. Gehäuse (6) und (7) sind geschlossen und Gehäuse (8) beinhaltet eine Messstelle (16) für einen Schmelzetemperatursensor. Gehäuse (9) ist ein Flansch, die den Querschnitt von der achtförmigen Bohrung des Doppelschneckenextruders auf (Rund) eine Rohrleitung (10) überführt. Nach dem Flansch folgt ein Ventil (11) zum Drosseln. Der Innendurchmesser von Ventil (11) und Leitung (10) beträgt jeweils 15 mm, die Ventillänge 95 mm und die Leitungslänge 120 mm.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (15) angeordnet ist. Darauf folgend ist die Welle mit 8 zweigängigen Förderelementen der Gangsteigung 40 mm und der Länge 40 mm bestückt.

Bei einer Drehzahl von 250 U/min der Wellen und einem Durchsatz von 80 kg/h Bayblend® T45 (Hersteller: Bayer MaterialScience AG) wurden bei verschiedenen Drücken (Druckmesssensor (19) vor dem Ventil (11) die Temperatur (Messstelle (17)) der Schmelze am Ende des Extruders im Flansch (9) gemessen. Des weiteren ist die Eingangstemperatur (Messstelle (18)) der Schmelze in den Doppelschneckenextruder gemessen worden. Die Extrudergehäuse (1,2,3,4,5,6,7,8,9), Leitung (10,12) und das Ventil (11) wurden dabei auf 240°C beheizt. Die Ergebnisse sind in Tabelle 9 dargestellt.

**Tabelle 9**

| Druck vor Ventil in bar | 13 | 40 | 70 |
|---|---|---|---|
| Temperatur Eintritt (18) | 273°C | 274°C | 273°C |
| Temperatur Austritt (17) | 291°C | 296°C | 301°C |
| Temperaturdifferenz Austritt-Eintritt | 18°C | 220C | 28°C |

### Beispiel 10

Der Doppelschneckenextruder (Figur 30) weist einen Aufbau aus 9 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (12) zugeführt. Gehäuse (2) beinhaltet eine Messstelle (14) für einen Schmelzetemperatursensor. Gehäuse (3) ist geschlossen und Gehäuse (4) enthält eine Entgasungsöffnung (13). Gehäuse (5) beinhaltet eine Messstelle (15) für einen Schmelzetemperatursensor. Gehäuse (6) und (7) sind geschlossen und Gehäuse (8) beinhaltet eine Messstelle (16) für einen Schmelzetemperatursensor. Gehäuse (9) ist ein Flansch, die den Querschnitt von der achtförmigen Bohrung des Doppelschneckenextruders auf (Rund) eine Rohrleitung (10) überführt. Nach dem Flansch folgt ein Ventil (11) zum Drosseln. Der Innendurchmesser von Ventil (11) und Leitung (10) beträgt jeweils 15 mm, die Ventillänge 95 mm und die Leitungslänge 120 mm.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei-zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (15) angeordnet ist. Darauf folgend ist die Welle mit 11 erfindungsgemäßen Förderelementen der Gangsteigung 30 mm und der Länge 30 mm bestückt.

Bei einer Drehzahl von 250 U/min der Wellen und einem Durchsatz von 80 kg/h Bayblend® T45 (Hersteller: Bayer MaterialScience AG) wurden bei verschiedenen Drücken (Druckmesssensor (19) vor dem Ventil (11) die Temperatur (Messstelle (17)) der Schmelze am Ende des Extruders im Flansch (9) gemessen. Des weiteren ist die Eingangstemperatur (Messstelle (18)) der Schmelze in den Doppelschneckenextruder gemessen worden. Die Extrudergehäuse (1,2,3,4,5,6,7,8,9), Leitung (10,12) und das Ventil (11) wurden dabei auf 240°C beheizt. Die Ergebnisse sind in Tabelle 10 dargestellt und zeigen geringere Temperaturen als im Beispiel 9 in Tabelle 9.

**Tabelle 10**

| Druck vor Ventil in bar | 20,4 | 39,8 | 70,3 |
|---|---|---|---|
| Temperatur Eintritt (18) | 275°C | 275°C | 275°C |
| Temperatur Austritt (17) | 289°C | 292°C | 298°C |
| Temperaturdifferenz Austritt-Eintritt | 14°C | 17°C | 23°C |

### Beispiel 11

Der Doppelschneckenextruder (Figur 30) weist einen Aufbau aus 9 Gehäuseteilen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das erste Gehäuse (1) wird die Polymerschmelze über eine beheizte Rohrleitung (12) zugeführt. Gehäuse (2) beinhaltet eine Messstelle (14) für einen Schmelzetemperatursensor. Gehäuse (3) ist geschlossen und Gehäuse (4) enthält eine Entgasungsöffnung (13). Gehäuse (5) beinhaltet eine Messstelle (15) für einen Schmelzetemperatursensor. Gehäuse (6) und (7) sind geschlossen und Gehäuse (8) beinhaltet eine Messstelle (16) für einen Schmelzetemperatursensor. Gehäuse (9) ist ein Flansch, die den Querschnitt von der achtförmigen Bohrung des Doppelschneckenextruders auf (Rund) eine Rohrleitung (10) überführt. Nach dem Flansch folgt ein Ventil (11) zum Drosseln. Der Innendurchmesser von Ventil (11) und Leitung (10) beträgt jeweils 15 mm, die Ventillänge 95 mm und die Leitungslänge 120 mm.

Die beiden Schneckenwellen (nicht gezeichnet) sind symmetrisch mit Schneckenelementen bestückt. Am Anfang sind die Schneckenwellen jeweils mit zwei zweigängigen Förderelementen mit der Gangsteigung 25 mm und Länge 25 mm bestückt. Darauf folgen zwei zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Darauf folgend ist die Welle mit 5 zweigängigen Förderelementen mit der Gangsteigung 60 mm und Länge 60 mm und einem Förderelement mit Gangsteigung 60 mm und Länge 30 mm bestückt. Anschließend folgt eine Buchse mit einer Länge von 35 mm und einem Durchmesser von 26 mm, welche im eingebauten Zustand unterhalb des Schmelzetemperatursensors (15) angeordnet ist. Darauf folgend ist die Welle mit 5 erfindungsgemäßen Förderelementen der Gangsteigung 30 mm und der Länge 30 mm bestückt. Darauf folgen 6 klassische eingängige Förderelemente der Gangsteigung 30 mm und der Länge 30 mm.

Bei einer Drehzahl von 250 U/min der Wellen und einem Durchsatz von 80 kg/h Hayblend® T45 (Hersteller: Bayer MaterialScience AG) wurden bei verschiedenen Drücken (Druckmesssensor (19) vor dem Ventil (11) die Temperatur (Messstelle (17)) der Schmelze am Ende des Extruders im Flansch (9) gemessen. Des weiteren ist die Eingangstemperatur (Messstelle (18)) der Schmelze in den Doppelschneckenextruder gemessen worden. Die Extrudergehäuse (1,2,3,4,5,6,7,8,9), Leitung (10,12) und das Ventil (11) wurden dabei auf 240°C beheizt. Die Ergebnisse sind in Tabelle 11 dargestellt und zeigen höhere Temperaturen als im Beispiel 10 in Tabelle 10.

**Tabelle 11**

| Druck vor Ventil in bar | 20,1 | 40,1 | 70,6 |
|---|---|---|---|
| Temperatur Eintritt (18) | 278°C | 278°C | 278°C |
| Temperatur Austritt (17) | 296°C | 302°C | 303°C |
| Temperaturdifferenz Austritt-Eintritt | 18°C | 24°C | 25°C |

Beispiele 12 und 13 zum Aufschmelzen wurden auf einer ZSK 32Mc (Coperion Werner & Pfleiderer) mit einer Mischung von Makrolon® 3108 (Hersteller: Bayer MaterialScience AG) und ODS® 2015 (Hersteller: Bayer MaterialScience AG) durchgeführt. Das Makrolon® 3108 wurde mit 1% farbigen Makrolex® 420 lila eingefärbt. Die Experimente wurden mit dem Aufbau in Figur 31 durchgeführt. Das Verhältnis aus Makrolon® 3108 und ODS® 2015 beträgt 25% zu 75% (%=Massen%).

Der Extruder hat eine Länge von 24 L/D. Der Extruder besteht aus einer Einzugszone (9) bestückt mit Förderelemente, einer Aufschmelzzone (10) besetzt mit Knetblöcken und einer Austragszone (11), deren Konfiguration variiert wurde. Das Granulat wurde vorgetrocknet. Die Düse (7) am Austritt des Extruders ist eine Breitschlitzdüse mit einer Spalthöhe von 1 mm und einer Breite von 140 mm.

Der aus der Düse austretende Polymerfilm wurde durch eine CCD Kamera aufgenommen und mit einer Lichtquelle hinterleuchtet. Die Kamera hat 1280x960 Pixel und eine Auflösung von 29 µm/pixel. Es wurde jede Sekunde ein Bild des Polymerfilms aufgenommen und insgesamt 180 Bilder pro Versuch gemacht.

Wird das hochviskosere Makrolon® 3108 nicht vollständig aufgeschmolzen so entstehen dunkle lila Flecken im Polymerfilm die durch die Kamera aufgezeichnet werden. Der Rand des Polymerfilms wird durch die Kamera erkannt und die Fläche des Polymerfilms im Bild berechnet. Die Fläche von dunklen Lila flecken wird zu dieser Fläche ins Verhältnis gesetzt. Dies dient als Maß für das Aufschmelzen einer Schneckenkonfiguration. Je größer der Anteil an nicht aufgeschmolzenen Granulaten ist desto schlechter ist der Besatz.

### Vergleichsbeispiel 12

Der Doppelschneckenextruder (Fig. 31) weist einen Aufbau aus 6 Gehäusen (1-6) auf, in denen gleichsinnig drehende, miteinander kämmende Wellen angeordnet sind. Die Maschine ist ein ZSK 32Mc mit 32mm Gehäusedurchmesser von Coperion Werner & Pfleiderer. In das erste Gehäuse (1) wird das Granulat zugeführt (12). Die übrigen Gehäuse (2-6) sind geschlossen und am Ende ist eine Breitschlitzdüse (7).

Die beiden Schneckenwellen (nicht gezeichnet) sind symmetrisch mit Schneckenelementen bestückt. In der Einzugszone (9) sind die Schneckenwellen mit zweigängigen Förderelementen mit der Gangsteigung 42 mm und 63,5mm bestückt. Die Einzugszone reicht bis zur Mitte des Gehäuses (4), dann beginnt die Aufschmelzzone (10). Die Aufschmelzzone (10) reicht bis zum Ende des fünften Gehäuses (5) und besteht aus dreigängigen Knetblöcken und Übergangsknetblöcken von zwei auf dreigängig bzw. umgekehrt. Die Aufschmelzzone wurde am Ende durch ZME und/oder linksgängige Knetblöcke abgestaut.

Die Austragszone (11) bzw. Druckaufbauzone beginnt am Ende des fünften Gehäuses. Sie besteht aus einem zweigängigen Förderelement mit der Länge 28mm und der Steigung 28mm. Darauf folgen zwei Förderelemente mit einer Länge von 42mm und einer Steigung von 42mm. Danach folgt eine Schneckenspitze mit der Steigung 28mm und der Länge 42mm.

Bei einem Durchsatz von 130 kg/h und einer Drehzahl von 400 U/min der Wellen sind 4,53% Flächenanteile durch nicht aufgeschmolzenes Granulat im Polymerfilm besetzt (siehe Tabelle 12).

### Beispiel 13

Der Aufbau ist der gleiche wie beim Referenzbeispiel. Nur die Austragszone bzw. Druckaufbauzone wurde mit erfindungsgemäßen Schneckenelementen bestückt.

Die Förderzone (11) beginnt am Ende des fünften Gehäuses. Sie besteht nun aus fünf erfindungsgemäßen Schneckenelementen der Länge 28mm und der Steigung 28mm.

Die exakt gleichen Betriebsbedingungen wie beim Referenzversuch wurden eingestellt. Überraschend wurde entdeckt, dass der Anteil an nicht Aufgeschmolzenen Granulat auf 1,89% sinkt. Damit zeigen die erfindungsgemäßen Schneckenelemente eindeutig eine Verbesserung beim Aufschmelzen im Vergleich zum aktuellen Stand der Technik.

**Tabelle 12:**

| Besatz | Durchsatz in kg/h | Drehzahl in U/min | Partikelfläche in % |
|---|---|---|---|
| Vergleichsbeispiel 12 | 130 | 400 | 4,53 |
| Beispiel 13 | 130 | 400 | 1,89 |

Beispiele 14 und 15 zum Compoundieren wurden auf einer ZSK 32Mc (Coperion Werner & Pfleiderer) durchgeführt. Die Experimente wurden mit dem Aufbau in Figur 32 durchgerührt. Die Zusammensetzung besteht aus 40,17 Massen-% Komponente A, 47,60 Massen-% Komponente B, 8,90 Massen-% Komponente C und 3,33 Massen-% Komponente D

### Komponente A

Lineares Polycarbonat auf Basis Bisphenol A mit einer relativen Lösungsviskosität von ηᵣₑₗ = 1,275, gemessen in CH₂Cl₂ als Lösungsmittel bei 25°C und einer Konzentration von 0,5 g/100 ml.

### Komponente B

ABS-Polymerisat, hergestellt durch Emulsions-Polymerisation von 50 Gew.-% bezogen auf das ABS-Polymerisat einer Mischung aus 27 Gew.-% Acrylnitril und 73 Gew.-% Styrol in Gegenwart von 50 Gew.-% bezogen auf das ABS-Polymerisat eines teilchenförmig vernetzten Polybutadienkautschuks (mittlerer Teilchendurchmesser d₅₀ = 0,35 µm).

### Komponente C

Styrol / Arylnitril-Copolymerisat mit einem Styrol / Acrylnitril-Gewichtsverhältnis von 72:28 und einer Grenzviskosität von 0,55 dl/g (Messung in Dimethylformamid bei 20°C).

### Komponente D

Komponente D besteht aus Additive wie Entformungsmittel und Thermostabilisator.

Der Extruder hat eine Länge von 40 L/D und besteht aus einer Einzugszone (14) bestückt mit Förderelemente, einer Aufschmelzzone (15) besetzt mit Knetblöcken und einer Austragszone (16), deren Konfiguration variiert wurde, vor einer Düse (11). Das Granulat wurde vorgetrocknet. Die Düse (11) am Austritt des Extruders ist eine Vierlochdüse. Nach der Düse (11) wurde das Bayblend durch ein Wasserbad gezogen und granuliert.

Von dem Granulat wurden bei dem eingestellten Betriebspunkt Proben genommen. 50 Granulatkörner wurden unter einem Mikroskop analysiert. Die zylinderförmigen Granulatkörner wurde an der Stirnseite angeleuchtet und von der gegenüberliegenden Seite mit dem Mikroskop betrachtet. Je nach Besatz und Betriebspunkt können nicht aufgeschmolzene Polycarbonat Bereiche im sonst opaken Granulat zu sehen sein, durch die das Licht durchscheint. Diese Bereiche werden Fenster genannt. Die Anzahl der Fenster bezogen auf die Probe von 50 Granulatkörner stellt ein Maß für das Aufschmelzen dar. Optimal sind keine Fenster.

### Vergleichsbeispiel 14

Der Doppelschneckenextruder (Figur 32) weist einen Aufbau aus 11 Gehäusen auf, in denen gleichsinnig drehende, miteinander kämmende Wellen angeordnet sind. Die Maschine ist ein ZSK 32Mc mit 32mm Gehäusedurchmesser von Coperion Werner & Pfleiderer. In das erste Gehäuse (1) wird das Granulat zugeführt (12). Die übrigen Gehäuse (2,3,4,5,6,7,8,10) sind geschlossen bis auf Gehäuse (9) dort ist eine Entgasungsöffnung (13). Am Ende ist eine Vierlochdüse (11) montiert.

Die beiden Schneckenwellen (nicht gezeichnet) sind symmetrisch mit Schneckenelementen bestückt. Am Anfang in der Einzugszone (14) sind die Schneckenwellen mit zweigängigen Förderelementen bestückt. Die Einzugszone (14) reicht bis zum Anfang des Gehäuses (7), dann beginnt die Aufschmelzzone (15). Die Aufschmelzzone (15) reicht bis zur Mitte des Gehäuses (8) und besteht aus dreigängigen Knetblöcken und Übergangsknetblöcken von zwei auf dreigängig bzw. umgekehrt. Die Aufschmelzzone wurde am Ende durch ZME und/oder linksgängige Knetblöcke abgestaut.

Die Austragszone (16) bzw. Druckaufbauzone beginnt in der Mitte des Gehäuses (9) nach der Aufschmelzzone. Sie besteht aus einem zweigängigen Förderelement mit der Länge 28mm und der Steigung 28mm. Darauf folgen zwei ZME mit einer Länge von 13mm und einer Steigung von 13,5um. Danach folgen drei zweigängige Förderelemente mit der Steigung 42mm und der Länge 42mm. Dann folgen drei zweigängige Förderelemente mit der Steigung 28mm und der Länge 28mm. Nun folgt ein Förderelemente mit der Steigung 28mm und der Länge 14mm. Am Schluss ist die Schneckenspitze mit einer Länge von 42mm und der Steigung 28mm.

Bei einem Durchsatz von 145 kg/h und einer Drehzahl von 600 U/min der Wellen wurden 100 Fenster in 50 Granulaten gesehen (siehe Tabelle 13). Bei einem Durchsatz von 160 kg/h und einer Drehzahl von 600 U/min der Wellen wurden 211 Fenster in 50 Granulaten gesehen.

### Beispiel 15

Der Doppelschneckenextruder (Figur 32) weist einen Aufbau aus 11 Gehäusen auf, in denen gleichsinnig drehende, miteinander kämmende Wellen angeordnet sind. Die Maschine ist ein ZSK 32Mc mit 32mm Gehäusedurchmesser von Coperion Werner & Pfleiderer. In das erste Gehäuse (1) wird das Granulat zugeführt (12). Die übrigen Gehäuse (2,3,4,5,6,7,8,10) sind geschlossen bis auf Gehäuse (9) dort ist eine Entgasungsöffnung (13). Am Ende ist eine Vierlochdüse (11) montiert.

Die beiden Schneckenwellen (nicht gezeichnet) sind symmetrisch mit Schneckenelementen bestückt. Am Anfang in der Einzugszone (14) sind die Schneckenwellen mit zweigängigen Förderelementen bestückt. Die Einzugszone (14) reicht bis zum Anfang des Gehäuses (7), dann beginnt die Aufschmelzzone (15). Die Aufschmelzzone (15) reicht bis zur Mitte des Gehäuses (8) und besteht aus dreigängigen Knetblöcken und Übergangsknetblöcken von zwei auf dreigängig bzw. umgekehrt. Die Aufschmelzzone wurde am Ende durch ZME und/oder linksgängige Knetblöcke abgestaut.

Die Austragszone (16) bzw. Druckaufbauzone beginnt in der Mitte des Gehäuses (8) nach der Aufschmelzzone. Sie besteht aus einem erfindungsgemäßen Schneckenelement der Länge 28mm und der Steigung 28mm. Darauf folgen zwei ZME mit einer Länge von 13mm und einer Steigung von 13,5mm. Danach folgen 10 erfindungsgemäße Schneckenelemente mit der Steigung 28mm und der Länge 28mm.

Die exakt gleichen Betriebsbedingungen wie beim Referenzversuch wurden eingestellt. Überraschend wurde gefunden, dass sich die Fensteranzahl mit der neuheitlichen Schneckenelementen deutlich reduzieren lässt (siehe Tabelle 13). Damit zeigen die erfindungsgemäßen Schneckenelemente eindeutig eine Verbesserung beim Aufschmelzen von Bayblend® T45 im Vergleich zum aktuellen Stand der Technik.

**Tabelle 13:**

| Besatz | Durchsatz in kg/h | Drehzahl in U/min | Fensteranzahl |
|---|---|---|---|
| Vergleichsbeispiel 14 | 160 | 600 | 211 |
| Beispiel 15 | 160 | 600 | 58 |
| Vergleichsbeispiel 14 | 145 | 600 | 100 |
| Beispiel 15 | 145 | 600 | 18 |

Beispiele 16 - 19 zum Fördern von Polymeren wurden auf einer ZSK 40Sc (Coperion Werner & Pfleiderer) durchgeführt. Die Experimente wurden mit dem Aufbau in Figur 33 durchgeführt.

Der Doppelschneckenextruder (Figur 33) weist einen Aufbau aus sieben Gehäusen (1-7) auf, in denen gleichsinnig drehende, miteinander kämmende Wellen angeordnet sind. Die Maschine hat Gehäusedurchmesser von 40mm. In das zweite Gehäuse (2) wird die Polymerschmelze über eine beheizte Rohrleitung (9) zugeführt. Gehäuse (3) ist geschlossen und Gehäuse (4) beinhaltet eine Messstelle (14) für einen Schmelzetemperatursensor. Gehäuse (5) enthält eine Entgasungsöffnung (10). Gehäuse (6) und (7) sind geschlossen. Gehäuse (8) ist ein Flansch, der den Querschnitt von der achtförmigen Bohrung des Doppelschneckenextruders auf (Rund) eine Rohrleitung (13) überführt. Nach dem Flansch folgt ein Ventil (12) zum Drosseln. Der Innendurchmesser von Ventil und Leitung beträgt 15 mm bei Länge von 95 mm des Ventils und 120 mm der Leitung. Vor dem Ventil (12) wird der Druck über den Sensor (11) gemessen. Die Austrittstemperatur der Schmelze wird über ein Handthermometer gemessen, das in die Öffnung des Ventils (12) gehalten wird.

### Vergleichsbeispiel 16

Der Doppelschneckenextruder (Figur 33) weist einen Aufbau aus sieben Gehäusen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das zweite Gehäuse (2) wird die Polymerschmelze über eine beheizte Rohrleitung (9) zugeführt. Gehäuse (3) ist geschlossen und Gehäuse (4) beinhaltet eine Messstelle (14) für einen Schmelzetemperatursensor. Gehäuse (5) enthält eine Entgasungsöffnung (10). Gehäuse (6) und (7) sind geschlossen. Gehäuse (8) ist ein Flansch, der den Querschnitt von der achtförmigen Bohrung des Doppelschneckenextruders auf (Rund) eine Rohrleitung (13) überführt. Nach dem Flansch folgt ein Ventil (12) zum Drosseln. Der Innendurchmesser von Ventil und Leitung beträgt 15 mm bei Länge von 95 mm des Ventils und 120 mm der Leitung.

Die beiden Schneckenwellen (nicht gezeichnet) sind symmetrisch mit Schneckenelementen bestückt. Am Anfang sind die Schneckenwellen jeweils mit drei zweigängigen Förderelementen mit der Gangsteigung 25 mm und Länge 25 mm bestückt. Darauf folgen fünf zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Hinter der Buchse sitzt eine ZME mit einer Länge von 20mm und einer Steigung von 10mm. Darauf folgend ist die Welle mit zwei zweigängigen Förderelementen mit der. Gangsteigung 60 mm und Länge 60 mm und einem Förderelement mit Gangsteigung 60 mm und Länge 30 mm bestückt.

Darauf folgend ist die Welle mit acht zweigängigen Förderelementen mit der Gangsteigung 40 mm und Länge 40 mm bestückt.

Bei einer Drehzahl von 250 U/min der Wellen und einem Durchsatz von 80 kg/h wurden bei verschiedenen Drücken (Druckmesssensor (11)) vor dem Ventil (12) die Temperaturerhöhung gemessen. Folgende Materialien wurden gefahren: Polypropylen®, Polystyrol®, Pocan®. Die Temperatur (Messstelle 14) der Schmelze im Doppelschneckenextruder ist gemessen worden. Zusätzlich wurde die Temperatur mit einem Handthermometer (15) am Austritt des Rohres gemessen. Das Thermometer wurde in das Rohr in die Schmelze gehalten. Tabelle 14 zeigt die Temperaturerhöhung von (14) nach (15).

**Tabelle 14: Temperaturerhöhung in K**

| Material/Druck vor Ventil in bar | 20 | 35 | 50 | 65 |
|---|---|---|---|---|
| BASF Polystyrol® 454C 2Kg | 20 | 24 | 26 | 30 |
| Basell, Polypropylen Metocene® HM 562S | 18 | 21 | 25 | 29 |
| BASF, Polystyrol® 158K | 17 | 21 | 26 | 31 |
| Lanxess, Pocan® B 1600 | 13 | 18 | 21 | 22 |

### Beispiel 17

Der Doppelschneckenextruder (Figur 33) weist einen Aufbau aus sieben Gehäusen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das zweite Gehäuse (2) wird die Polymerschmelze über eine beheizte Rohrleitung (9) zugeführt. Gehäuse (3) ist geschlossen und Gehäuse (4) beinhaltet eine Messstelle (14) für einen Schmelzetemperatursensor. Gehäuse (5) enthält eine Entgasungsöffnung (10). Gehäuse (6) und (7) sind geschlossen. Gehäuse (8) ist ein Flansch, der den Querschnitt von der achtförmigen Bohrung des Doppelschneckenextruders auf (Rund) eine Rohrleitung (13) überführt. Nach dem Flansch folgt ein Ventil (12) zum Drosseln. Der Innendurchmesser von Ventil und Leitung beträgt 15 mm bei Länge von 95 mm des Ventils und 120 mm der Leitung.

Die beiden Schneckenwellen (nicht gezeichnet) sind symmetrisch mit Schneckenelementen bestückt. Am Anfang sind die Schneckenwellen jeweils mit drei zweigängigen Förderelementen mit der Gangsteigung 25 mm und Länge 25 mm bestückt. Darauf folgen fünf zweigängige Forderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Hinter der Buchse sitzt eine ZME mit einer Länge von 20mm und einer Steigung von 10mm. Darauf folgend ist die Welle mit zwei zweigängigen Förderelementen mit der Gangsteigung 60 mm und Länge 60 mm und einem Förderelement mit Gangsteigung 60 mm und Länge 30 mm bestückt.

Darauf folgend ist die Welle mit 11 erfindungsgemäßen Schneckenelementen mit der Gangsteigung 30 mm und Länge 30 mm bestückt.

Bei einer Drehzahl von 250 U/min der Wellen und einem Durchsatz von 80 kg/h wurden bei verschiedenen Drücken (Druckmesssensor (11)) vor dem Ventil (12) die Temperaturerhöhung gemessen. Folgende Materialien wurden gefahren: Polypropylen®, Polystyrol®, Pocan®. Die Temperatur (Messstelle 14) der Schmelze im Doppelschneckenextruder ist gemessen worden. Zusätzlich wurde die Temperatur mit einem Handthermometer (15) am Austritt des Rohres gemessen. Das Thermometer wurde in das Rohr in die Schmelze gehalten. Tabelle 15 zeigt die Temperaturerhöhung von (14) nach (15). Die Neuheit zeigt bei allen Produkten eine geringere Temperaturerhöhung.

**Tabelle 15: Temperaturerhöhung in K**

| **Material/Druck vor Ventil in bar** | **20** | **35** | **50** | **65** |
|---|---|---|---|---|
| BASF, Polystyrol® 454C 2Kg | 18 | 21 | 25 | 26 |
| Basell, Polypropylen Metocene® HM 562S | 18 | 21 | 24 | 28 |
| BASF, Polystyrol® 158K | 16 | 20 | 22 | 25 |
| Lanxess, Pocan® B 1600 | - | 16 | 19 | 19 |

### Vergleichsbeispiel 18

Der Doppelschneckenextruder (Figur 33) weist einen Aufbau aus sieben Gehäusen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das zweite Gehäuse (2) wird die Polymerschmelze über eine beheizte Rohrleitung (9) zugeführt. Gehäuse (3) ist geschlossen und Gehäuse (4) beinhaltet eine Messstelle (14) für einen Schmelzetemperatursensor. Gehäuse (5) enthält eine Entgasungsöffnung (10). Gehäuse (6) und (7) sind geschlossen. Gehäuse (8) ist ein Flansch, der den Querschnitt von der achtförmigen Bohrung des Doppelschneckenextruders auf (Rund) eine Rohrleitung (13) überführt. Nach dem Flansch folgt ein Ventil (12) zum Drosseln. Der Innendurchmesser von Ventil und Leitung beträgt 15 mm bei Länge von 95 mm des Ventils und 120 mm der Leitung.

Die beiden Schneckenwellen (nicht gezeichnet) sind symmetrisch mit Schneckenelementen bestückt. Am Anfang sind die Schneckenwellen jeweils mit drei zweigängigen Förderelementen mit der Gangsteigung 25 mm und Länge 25 mm bestückt. Darauf folgen fünf zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (14) angeordnet ist. Hinter der Buchse sitzt eine ZME mit einer Länge von 20mm und einer Steigung von 10mm. Darauf folgend ist die Welle mit zwei zweigängigen Förderelementen mit der Gangsteigung 60 mm und Länge 60 mm und einem Förderelement mit Gangsteigung 60 mm und Länge 30 mm bestückt.

Darauf folgend ist die Welle mit acht zweigängigen Förderelementen mit der Gangsteigung 40 mm und Länge 40 mm bestückt.

Bei verschiedenen Drehzahlen zwischen 150 bis 350 U/min der Wellen und einem Durchsatz von 80 kg/h wurde bei geöffnetem Ventil (12) die Temperaturerhöhung gemessen. Folgende Materialien wurden gefahren: Ineos Lustran® DN 50, Polypropylen®, Polystyrol®. Die Temperatur (Messstelle 14) der Schmelze im Doppelschneckenextruder ist gemessen worden. Zusätzlich wurde die Temperatur mit einem Handthermometer (15) am Austritt des Rohres gemessen. Das Thermometer wurde in das Rohr in die Schmelze gehalten. Tabelle 16 zeigt die Temperaturerhöhung von (14) nach (15).

**Tabelle 16: Temperaturerhöhung in K**

| **Material/Drehzahl Wellen in U/min** | **350** | **300** | **250** | **200** | **150** |
|---|---|---|---|---|---|
| **Ineos Lustran® DN 50** | 18 | 18 | 15 | 12 | 11 |
| **Basell, Polypropylen Metocene® HM 562S** | 17 | - | - | - | - |
| **BASF, Polystyrol® 158K** | - | 19 | 16 | - | - |

### Beispiel 19

Der Doppelschneckenextruder (Figur 33) weist einen Aufbau aus sieben Gehäusen auf, in denen gleichsinnig drehende, miteinander kämmende Wellen angeordnet sind. Die Maschine ist ein ZSK 40Sc mit 40mm Gehäusedurchmesser von Coperion Werner & Pfleiderer. In das zweite Gehäuse (2) wird die Polymerschmelze über eine beheizte Rohrleitung (9) zugeführt. Gehäuse (3) ist geschlossen und Gehäuse (4) beinhaltet eine Messstelle (14) für einen Schmelzetemperatursensor. Gehäuse (5) enthält eine Entgasungsöffnung (10). Gehäuse (6) und (7) sind geschlossen. Gehäuse (8) ist ein Flansch, der den Querschnitt von der achtförmigen Bohrung des Doppelschneckenextruders auf (Rund) eine Rohrleitung (13) überführt. Nach dem Flansch folgt ein Ventil (12) zum Drosseln. Der Innendurchmesser von Ventil und Leitung beträgt 15 mm bei Länge von 95 mm des Ventils und 120 mm der Leitung.

Die beiden Schneckenwellen (nicht gezeichnet) sind symmetrisch mit Schneckenelementen bestückt. Am Anfang sind die Schneckenwellen jeweils mit drei zweigängigen Förderelementen mit der Gangsteigung 25 mm und Länge 25 mm bestückt. Darauf folgen fünf zweigängige Förderelemente mit der Gangsteigung 60 mm und Länge 60 mm. Anschließend folgt eine Buchse mit einer Länge von 30 mm und einem Durchmesser von 26mm, welche im eingebauten Zustand unterhalb des Schmelzetemperatursensors (13) angeordnet ist. Hinter der Buchse sitzt eine ZME mit einer Länge von 20mm und einer Steigung von 10mm. Darauf folgend ist die Welle mit zwei zweigängigen Förderelementen mit der Gangsteigung 60 mm und Länge 60 mm und einem Förderelement mit Gangsteigung 60 mm und Länge 30 mm bestückt.

Darauf folgend ist die Welle mit 11 erfindungsgemäßen Schneckenelementen mit der Gangsteigung 28 mm und Länge 28 mm bestückt.

Bei verschiedenen Drehzahlen zwischen 150 bis 350 U/min der Wellen und einem Durchsatz von 80 kg/h wurde bei geöffnetem Ventil (12) die Temperaturerhöhung gemessen. Folgende Materialien wurden gefahren: Ineos Lustran® DN 50, Polypropylen®, Polystyrol®. Die Temperatur (Messstelle 14) der Schmelze im Doppelschneckenextruder ist gemessen worden. Zusätzlich wurde die Temperatur mit einem Handthermometer (15) am Austritt des Rohres gemessen. Das Thermometer wurde in das Rohr in die Schmelze gehalten. Tabelle 17 zeigt die Temperaturerhöhung von (14) nach (15). Die Temperaturerhöhung mit den erfindungsgemäßen Schneckenelementen ist geringer als mit dem Stand der Technik.

**Tabelle 17: Temperaturerhöhung in K**

| **Material/Drehzahl Wellen in U/min** | **350** | **300** | **250** | **200** | **150** |
|---|---|---|---|---|---|
| **Ineos Lustran® DN 50** | 17 | 15 | 12 | 10 | 9 |
| **Basell, Polypropylen Metocene® HM 562S** | 16 | - | - | - | - |
| **BASF, Polystyrol® 158K** | - | 18 | 15 | - | - |

## Patentansprüche

1. Verfahren zur Extrusion plastischer Massen in einem Doppelschnecken- oder Mehrwellenextruder unter Verwendung von Schneckenelementen mit paarweise gleichsinnigen und paarweise exakt abschabenden Schneckenwellen, **dadurch gekennzeichnet, dass** erzeugendes und erzeugtes Schneckenprofil eine Abfolge von Abdichtungsbereich - Übergangsbereich - Kanalbereich - Übergangsbereich aufweisen, wobei ein Abdichtungsbereich eine Abfolge von Kammbereich - Flankenbereich - Kammbereich ist, ein Kanalbereich eine Abfolge von Nutbereich - Flankenbereich - Nutbereich ist und ein Übergangsbereich eine Abfolge von Schneckenprofilbereichen ist, die mit einem Flankenbereich anfängt und mit einem Flankenbereich endet,
wobei der Abdichtungsbereich der Schneckenelemente dadurch charakterisiert ist, dass
o der Flankenbereich bezogen auf den Drehpunkt des Schneckenprofils einen Winkel δ_fb1 besitzt, der größer oder gleich dem halben Öffnungswinkel zwischen den beiden Gehäusezwickeln ist (δ_fb1≥arccos(0,5*a/ra)),
o ein Kammbereich bezogen auf den Drehpunkt des Schneckenprofils einen Winkel δ_kb1 besitzt, der kleiner oder gleich der Differenz des Kammwinkel eines eingängigen Erdmenger-Schneckenprofils minus des Öffnungswinkels zwischen den beiden Gehäusezwickeln ist (δ_kb1≤π-4*arccos(0,5*a/ra)),
o der andere Kammbereich bezogen auf den Drehpunkt des Schneckenprofils einen Winkel δ_kb2 besitzt, der kleiner oder gleich der Differenz des Kammwinkel eines eingängigen Erdmenger-Schneckenprofils minus des Öffnungswinkels zwischen den beiden Gehäusezwickeln ist (δ_kb2≤π-4*arccos(0,5*a/ra)),
und der Kanalbereich dadurch charakterisiert ist, dass
o der Flankenbereich bezogen auf den Drehpunkt des Schneckenprofils einen Winkel δ_fb2 besitzt, der größer oder gleich dem halben Öffnungswinkel zwischen den beiden Gehäusezwickeln ist (δ_fb2≥arccos(0,5*a/ra)),
o ein Nutbereich bezogen auf den Drehpunkt des Schneckenprofils einen Winkel δ_nb1 besitzt, der kleiner oder gleich der Differenz des Kammwinkel eines eingängigen Erdmenger-Schneckenprofils minus des Öffnungswinkels zwischen den beiden Gehäusezwickeln ist (δ_nb1≤π-4*arccos(0,5*a/ra)),
o der andere Nutbereich bezogen auf den Drehpunkt des Schneckenprofils einen Winkel δ_nb2 besitzt, der kleiner oder gleich der Differenz des Kammwinkel eines eingängigen Erdmenger-Schneckenprofils minus des Öffnungswinkels zwischen den beiden Gehäusezwickeln ist (δ_nb2≤-4*arccos(0,5*a/ra)).

2. Verfahren nach einem der Ansprüche 1, **dadurch gekennzeichnet, dass** die Summe der Winkel der Kamm- und Flankenbereiche δ_kb1, δ_kb2 und δ_fb1 des Abdichtungsbereichs bevorzugt im Bereich von 0,75*δ_gz bis 2*δ_gb+δ_gz und besonders bevorzugt im Bereich von δ_gz bis δ_gb+δ_gz liegt und die Summe der Winkel der Nut- und Flankenbereiche δ_nb1, δ_nb2 und δ_fb2 des Kanalbereichs bevorzugt im Bereich von 0,75*δ_gz bis 2*δ_gb+δ_gz und besonders bevorzugt im Bereich von δ_gz bis δ_gb+δ_gz liegt.

3. Verfahren nach einem der Ansprüche 1 oder 2, **dadurch gekennzeichnet, dass** der Übergangsbereich aus einem Flankenbereich besteht.

4. Verfahren nach einem der Ansprüche 1 bis 3, **dadurch gekennzeichnet, dass** die Schneckenprofile eine linienförmige Abdichtung des Zwickelbereichs hervorrufen.

5. Verfahren nach einem der Ansprüche 1 bis 3, **dadurch gekennzeichnet, dass** die Schneckenprofile eine punktförmige Abdichtung des Zwickelbereichs hervorrufen.

6. Verfahren nach einem der Ansprüche 1 bis 5, **dadurch gekennzeichnet, dass** der maximale Abstand der Kammbereiche des Abdichtungsbereichs der Schneckenprofile vom Gehäuse bevorzugt im Bereich des 0- bis 0,05-fachen Achsabstandes, besonders bevorzugt im Bereich des 0- bis 0,025-fachen Achsabstandes liegt.

7. Verfahren gemäß einem der Ansprüche 1 bis 6, **dadurch gekennzeichnet, dass** die Schneckenelemente als Förderelemente oder Mischelemente ausgebildet sind, indem die Schneckenprofile in Achsrichtung schraubenförmig fortgesetzt sind.

8. Verfahren gemäß einem der Ansprüche 1 bis 7, **dadurch gekennzeichnet, dass** die Schneckenelemente als Knetelement ausgebildet sind, indem die Schneckenprofile in Achsrichtung abschnittsweise versetzt fortgesetzt sind.

9. Verfahren gemäß einem der Ansprüche 1 bis 8, **dadurch gekennzeichnet, dass** zwischen Schneckenelementen und Gehäuse und / oder zwischen benachbarten Schneckenelementen Spiele im Bereich von 0,1 bis 0,001 bezogen auf den Durchmesser des Schneckenprofils aufweisen.

10. Verfahren gemäß einem der Ansprüche 1 bis 9, **dadurch gekennzeichnet, dass** die plastischen Massen Thermoplaste oder Elastomere sind.

11. Verfahren gemäß Anspruch 10 **dadurch gekennzeichnet, dass** als Thermoplaste Polycarbonat, Polyamid, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste eingesetzt wird.

12. Verfahren gemäß Anspruch 11, **dadurch gekennzeichnet, dass** als Thermoplast Polycarbonat oder ein Blend, das Polycarbonat enthält, eingesetzt wird.

13. Verfahren gemäß Anspruch 12 **dadurch gekennzeichnet, dass** als Elastomer Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk oder eine Kombination von mindestens zwei der genannten Elastomere eingesetzt wird.

14. Verfahren gemäß einem der voranstehenden Ansprüche, **dadurch gekennzeichnet, dass** dem Polymer Füll- oder Verstärkungsstoffe oder Polymeradditive oder organische oder anorganische Pigmente, oder Mischungen davon, zugesetzt werden.

15. Verfahren zur Herstellung von Polycarbonat, **dadurch gekennzeichnet, dass** wenigstens ein Schritt des Herstellungsverfahrens ein Extrusionsverfahren gemäß einem der Ansprüche 1 bis 11 umfasst.

16. Verfahren gemäß Anspruch 14, **dadurch gekennzeichnet, dass** das Polycarbonat nach dem Grenzflächenverfahren oder dem Schmelzeumesterungsverfahren hergestellt wurde.

## Claims

1. Process for extruding plastic compositions in a twin- or multi-screw extruder using screw elements with screws co-rotating in pairs and being fully self-wiping in pairs, **characterized in that** generating and generated screw profile comprise a sequence of sealing zone - transition zone - channel zone - transition zone, wherein a sealing zone is a sequence of tip zone - flank zone - tip zone, a channel zone is a sequence of grooved zone - flank zone - grooved zone and a transition zone is a sequence of screw profile zones which starts with a flank zone and ends with a flank zone,
wherein the sealing zone of the screw elements is distinguished **in that**
o relative to the point of rotation of the screw profile, the flank zone has an angle δ_fb1 which is greater than or equal to half the aperture angle between the two barrel intermeshes (δ_fb1≥ arccos(0.5*a/ra)),
o relative to the point of rotation of the screw profile, one tip zone has an angle δ_kb1 which is less than or equal to the difference of the tip angle of a single-flighted Erdmenger screw profile minus the aperture angle between the two barrel intermeshes (δ_kb1≤ π-4*arccos(0.5*a/ra)),
o relative to the point of rotation of the screw profile, the other tip zone has an angle δ_kb2 which is less than or equal to the difference of the tip angle of a single-flighted Erdmenger screw profile minus the aperture angle between the two barrel intermeshes (δ_kb2≤ π-4*arccos(0.5*a/ra)),
and the channel zone is distinguished **in that**
o relative to the point of rotation of the screw profile, the flank zone has an angle δ_fb2 which is greater than or equal to half the aperture angle between the two barrel intermeshes (δ_fb2≥ arccos(0.5*a/ra)),
o relative to the point of rotation of the screw profile, one grooved zone has an angle δ_nb1 which is less than or equal to the difference of the tip angle of a single-flighted Erdmenger screw profile minus the aperture angle between the two barrel intermeshes (δ_nb1≤ π-4*arccos(0.5*a/ra)),
o relative to the point of rotation of the screw profile, the other grooved zone has an angle δ_nb2 which is less than or equal to the difference of the tip angle of a single-flighted Erdmenger screw profile minus the aperture angle between the two barrel intermeshes (δ_nb2≤ π-4*arccos(0.5*a/ra)).

2. Process according to Claim 1, **characterized in that** the sum of the angles of the tip and flank zones δ_kb1, δ_kb2 and δ_fb1 of the sealing zone is preferably in the range from 0.75*δ_gz to 2*δ_gb+δ_gz and particularly preferably in the range from δ_gz to δ_gb+δ_gz and the sum of the angles of the grooved and flank zones δ_nb1, δ_nb2 and δ_fb2 of the channel zone is preferably in the range from 0.75*δ_gz to 2*δ_gb+δ_gz and particularly preferably in the range from δ_gz to δ_gb+δ_gz.

3. Process according to either of Claims 1 or 2, **characterized in that** the transition zone consists of a flank zone.

4. Process according to one of Claims 1 to 3, **characterized in that** the screw profiles bring about linear sealing of the intermesh zone.

5. Process according to one of Claims 1 to 3, **characterized in that** the screw profiles bring about punctiform sealing of the intermesh zone.

6. Process according to one of Claims 1 to 5, **characterized in that** the maximum distance of the tip zones of the sealing zone of the screw profiles from the barrel is preferably in the range from 0 to 0.05 times the centerline distance, particularly preferably in the range from 0 to 0.025 times the centerline distance

7. Process according to one of Claims 1 to 6, **characterized in that** the screw elements are configured as conveying elements or mixing elements by extending the screw profiles helically in the axial direction.

8. Process according to one of Claims 1 to 7, **characterized in that** the screw elements are configured as a kneading element by extending the screw profiles in portions in an offset manner in the axial direction.

9. Process according to one of Claims I to 8, **characterized in that** clearances in the range from 0.1 to 0.001 relative to the diameter of the screw profile are present between screw elements and barrel and/or between neighboring screw elements.

10. Process according to one of Claims 1 to 9, **characterized in that** the plastic compositions are thermoplastics or elastomers.

11. Process according to Claim 10, **characterized in that** the thermoplastics used are polycarbonate, polyamide, polyester, in particular polybutylene terephthalate and polyethylene terephthalate, polylactide, polyether, thermoplastic polyurethane, polyacetal, fluoropolymer, in particular polyvinylidene fluoride, polyether sulfones, polyolefin, in particular polyethylene and polypropylene, polyimide, polyacrylate, in particular poly(methyl)methacrylate, polyphenylene oxide, polyphenylene sulfide, polyether ketone, polyarylether ketone, styrene polymers, in particular polystyrene, styrene copolymers, in particular styrene-acrylonitrile copolymer, acrylonitrile-butadiene-styrene block copolymers, polyvinyl chloride or a blend of at least two of the stated thermoplastics.

12. Process according to Claim 11, **characterized in that** polycarbonate or a blend containing polycarbonate is used as the thermoplastic.

13. Process according to Claim 12, **characterized in that** the elastomer used is styrenebutadiene rubber, natural rubber, butadiene rubber, isoprene rubber, ethylene-propylene-diene rubber, ethylene-propylene rubber, butadiene-acrylonitrile rubber, hydrogenated nitrile rubber, butyl rubber, halobutyl rubber, chloroprene rubber, ethylene-vinyl acetate rubber, polyurethane rubber, thermoplastic polyurethane, gutta percha, acrylate rubber, fluororubber, silicone rubber, sulfide rubber, chlorosulfonyl-polyethylene rubber or a combination of at least two of the stated elastomers.

14. Process according to one of the preceding claims, **characterized in that** fillers or reinforcing materials or polymer additives or organic or inorganic pigments, or mixtures thereof, are added to the polymer.

15. Process for producing polycarbonate, **characterized in that** at least one step of the manufacturing process comprises an extrusion process according to one of Claims 1 to 11.

16. Process according to Claim 14, **characterized in that** the polycarbonate was produced by the phase boundary process or the melt transesterification process.

## Revendications

1. Procédé d'extrusion de masses plastiques dans des extrudeuses à double vis ou à arbres multiples en utilisant des éléments de vis présentant des arbres à vis tournant par paire dans le même sens et raclant exactement l'un sur l'autre par paire, **caractérisé en ce que** le profil de vis qui produit et celui qui est produit présentent une succession de zone d'étanchéité
- zone de transition - zone à canal - zone de transition, une zone d'étanchéité étant une succession de zone d'engrenage - zone de bord - zone d'engrenage, une zone à canal étant une succession de zone à rainure
- zone de bord - zone à rainure et une zone de transition étant une succession de zones de profil de vis qui démarre par une zone de bord et se termine par une zone de bord,
la zone d'étanchéité des éléments de vis étant **caractérisée en ce que**
- la zone de bord, par rapport au point de rotation du profil de vis, présente un angle δ_fb1, qui est supérieur ou égal à l'angle de demi-ouverture entre les deux arcs du châssis (δ_fb1 ≥ arccos(0,5*a/ra)),
- une zone d'engrenage présente, par rapport au point de rotation du profil de vis, un angle δ_kb1, qui est inférieur ou égal à la différence de l'angle d'engrenage d'un profil de vis à un filet Erdmenger moins l'angle d'ouverture entre les deux arcs du châssis (δ_kb1 ≤ π-4*arccos(0,5*a/ra)),
- l'autre zone d'engrenage présente, par rapport au point de rotation du profil de vis, un angle δ_kb2, qui est inférieur ou égal à la différence de l'angle d'engrenage d'un profil de vis à un filet Erdmenger moins l'angle d'ouverture entre les deux arcs du châssis (δ_kb2 ≤ π-4*arccos(0,5*a/ra)),
et la zone de canal étant **caractérisée en ce que**
- la zone de bord, par rapport au point de rotation du profil de vis, présente un angle δ_fb2, qui est supérieur ou égal à l'angle de demi-ouverture entre les deux arcs du châssis (δ_fb2 ≥ arccos(0,5*a/ra)),
- une zone à rainure présente, par rapport au point de rotation du profil de vis, un angle δ_nb1, qui est inférieur ou égal à la différence de l'angle d'engrenage d'un profil de vis à un filet Erdmenger moins l'angle d'ouverture entre les deux arcs du châssis (δ_nb1 ≤ π-4*arccos(0,5*a/ra)),
- l'autre zone à rainure présente, par rapport au point de rotation du profil de vis, un angle δ_nb2, qui est inférieur ou égal à la différence de l'angle d'engrenage d'un profil de vis à un filet Erdmenger moins l'angle d'ouverture entre les deux arcs du châssis (δ_nb2 ≤ π-4*arccos(0,5*a/ra)).

2. Procédé selon la revendication 1, **caractérisé en ce que** la somme des angles des zones d'engrenage et de bord δ_kb1, δ_kb2 et δ_fb1 de la zone d'étanchéité se situe de préférence dans la plage de 0,75*δ_gz à 2*δ_gb+δ_gz et de manière particulièrement préférée dans la plage de δ_gz à δ_gb+δ_gz et la somme des angles des zones à rainure et de bord δ_nb1, δ_nb2 et δ_fb2 de la zone à canal se situe de préférence dans la plage de 0,75*δ_gz à 2*δ_gb+δ_gz et de manière particulièrement préférée dans la plage de δ_gz à δ_gb+δ_gz.

3. Procédé selon l'une quelconque des revendications 1 ou 2, **caractérisé en ce que** la zone de transition est constituée par une zone de bord.

4. Procédé selon l'une quelconque des revendications 1 à 3, **caractérisé en ce que** les profils de vis provoquent une étanchéité linéaire de la zone à arc.

5. Procédé selon l'une quelconque des revendications 1 à 3, **caractérisé en ce que** les profils de vis provoquent une étanchéité ponctuelle de la zone à arc.

6. Procédé selon l'une quelconque des revendications 1 à 5, **caractérisé en ce que** la distance maximale entre la zone d'engrenage de la zone d'étanchéité des profils de vis et le châssis se situe de préférence dans la plage de 0 à 0,05, de manière particulièrement préférée dans la plage de 0 à 0,025 fois la distance entre les axes.

7. Procédé selon l'une quelconque des revendications 1 à 6, **caractérisé en ce que** les éléments à vis sont réalisés sous forme d'éléments de transport ou de mélange **en ce que** les profils de vis sont prolongés en forme de vis dans le sens des axes.

8. Procédé selon l'une quelconque des revendications 1 à 7, **caractérisé en ce que** les éléments à vis sont réalisés sous forme d'éléments de malaxage **en ce que** les profils de vis sont prolongés de manière décalée par sections dans le sens des axes.

9. Procédé selon l'une quelconque des revendications 1 à 8, **caractérisé en ce qu'**il existe, entre les éléments de vis et le châssis et/ou entre des éléments de vis adjacents, des jeux dans la plage de 0,1 à 0,001 par rapport au diamètre du profil de vis.

10. Procédé selon l'une quelconque des revendications 1 à 9, **caractérisé en ce que** les masses plastiques sont des thermoplastiques ou des élastomères.

11. Procédé selon la revendication 10, **caractérisé en ce qu'**on utilise comme thermoplastiques un polycarbonate, un polyamide, un polyester, en particulier le poly(téréphtalate de butylène) et le poly(téréphtalate d'éthylène), un polylactide, un polyéther, un polyuréthane thermoplastique, un polyacétal, un polymère fluoré, en particulier le poly(fluorure de vinylidène), un polyéthersulfone, une polyoléfine, en particulier le polyéthylène et le polypropylène, un polyimide, un polyacrylate, en particulier le polyméthacrylate (de méthyle), un poly(oxyde de phénylène), un poly(sulfure de phénylène), une polyéthercétone, une polyaryléthercétone, des polymères de styrène, en particulier le polystyrène, des copolymères de styrène, en particulier un copolymère de styrène-acrylonitrile, des copolymères à blocs d'acrylonitrile-butadiène-styrène, le poly(chlorure de vinyle) ou un mélange d'au moins deux des thermoplastiques mentionnés.

12. Procédé selon la revendication 11, **caractérisé en ce qu'**on utilise comme thermoplastique un polycarbonate ou un mélange qui contient du polycarbonate.

13. Procédé selon la revendication 12, **caractérisé en ce qu'**on utilise comme élastomère un caoutchouc de styrène-butadiène, un caoutchouc naturel, un caoutchouc de butadiène, un caoutchouc d'isoprène, un caoutchouc d'éthylène-propylène-diène, un caoutchouc d'éthylène-propylène, un caoutchouc de butadiène-acrylonitrile, un caoutchouc de nitrile hydrogéné, un caoutchouc de butyle, un caoutchouc d'halogénobutyle, un caoutchouc de chloroprène, un caoutchouc d'éthylène-acétate de vinyle, un caoutchouc de polyuréthane, un polyuréthane thermoplastique, le gutta-percha, un caoutchouc d'arylate, un caoutchouc fluoré, un caoutchouc de silicone, un caoutchouc de sulfure, un caoutchouc de chlorosulfonyl-polyéthylène ou une combinaison d'au moins deux des élastomères mentionnés.

14. Procédé selon l'une quelconque des revendications précédentes, **caractérisé en ce que** le polymère est additionné de charges ou de substances de renforcement ou d'additifs pour polymères ou de pigments organiques ou inorganiques ou de mélanges de ceux-ci.

15. Procédé pour la préparation de polycarbonate, **caractérisé en ce qu'**au moins une étape du procédé de préparation comprend un procédé d'extrusion selon l'une quelconque des revendications 1 à 11.

16. Procédé selon la revendication 14, **caractérisé en ce que** le polycarbonate a été préparé selon le procédé par interface ou le procédé par transestérification en masse fondue.
